# EUROPEAN PATENT APPLICATION

(11) **EP 4 716 268 A1**
(43) Date of publication of application: **25.03.2026**
(21) Application number: 23941975.7
(22) Date of filing: 21.06.2023
(51) Int. Cl.: H04W 12/06

(54) **AUTHENTICATION METHOD AND DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); CAO, Jin, Dongguan, Guangdong 523860 (CN); REN, Xiongpeng, Dongguan, Guangdong 523860 (CN); TANG, Canhui, Dongguan, Guangdong 523860 (CN); LI, Hui, Dongguan, Guangdong 523860 (CN); MA, Ruhui, Dongguan, Guangdong 523860 (CN); XIONG, Lihui, Dongguan, Guangdong 523860 (CN); LI, Meng, Dongguan, Guangdong 523860 (CN); SHI, Cong, Dongguan, Guangdong 523860 (CN)
(74) Representative: Mewburn Ellis LLP
(86) International application number: PCT/CN2023/101971
(87) International publication number: WO 2024/259704

(57) **Abstract**

The disclosure relates to an authentication method, a device, a computer-readable storage medium, a computer program product, and a computer program. The method includes the following. A first device receives a first message, where the first message contains an encrypted sequence number, a first random number, and first authentication information. The first device calculates second authentication information based on a shared key, the encrypted sequence number, and the first random number. If the first authentication information is identical to the second authentication information, the first device calculates third authentication information based on a first key, where the first key is related to the shared key. The first device sends a second message, where the second message carries the third authentication information.

## Description

### TECHNICAL FIELD

This disclosure relates to the field of communication, and more particularly, to an authentication method, a device, a computer-readable storage medium, a computer program product, and a computer program.

### BACKGROUND

In an authentication procedure in the related art, a computational function applied has high complexity, and a key architecture is relatively complex. However, some devices, such as a zero-power device, have limited computing and processing capabilities, long running time for implementing an authentication protocol, and high power consumption. If the same authentication procedure as that in related art is applied, the usability of the zero-power device will be poor. For example, a communication task may not yet be completed before energy of the zero-power device is exhausted. Therefore, how to enable a zero-power device to satisfy requirements of low energy consumption and low delay while implementing authentication is a technical problem to be solved.

### SUMMARY

Embodiments of the disclosure provide an authentication method and a device, which can achieve authentication of a zero-power device.

Embodiments of the disclosure provide an authentication method. The method includes the following. A first device receives a first message, where the first message contains an encrypted sequence number, a first random number, and first authentication information. The first device calculates second authentication information based on a shared key, the encrypted sequence number, and the first random number. If the first authentication information is identical to the second authentication information, the first device calculates third authentication information based on a first key, where the first key is related to the shared key. The first device sends a second message, where the second message carries the third authentication information.

Embodiments of the disclosure further provide an authentication method. The method includes the following. A first network element sends a first message, where the first message carries an encrypted sequence number, a first random number, and first authentication information, and the first random number and the encrypted sequence number are used for a first device to calculate second authentication information based on a shared key. The first network element receives a second message, where the second message carries third authentication information, the third authentication information is calculated by the first device based on a first key if the second authentication information is identical to the first authentication information, and the first key is associated with the shared key.

Embodiments of the disclosure further provide an authentication method. The method includes the following. A second device sends a first message to a first device, where the first message carries an encrypted sequence number, a first random number, and first authentication information, and the first random number and the encrypted sequence number are used for the first device to calculate second authentication information based on a shared key. The second device sends to a first network element a second message from the first device, where the second message carries third authentication information, the third authentication information is calculated by the first device based on a first key if the second authentication information is identical to the first authentication information, and the first key is associated with the shared key.

Embodiments of the disclosure further provide an authentication method. The method includes the following. A second network element sends an eighth message, where the eighth message carries an encrypted sequence number, a first random number, and a fourth key.

Embodiments of the disclosure provide an authentication method. The method includes the following. A first device calculates third authentication information based on a first key, where the first key is related to a shared key. The first device sends a second message, where the second message carries the third authentication information.

Embodiments of the disclosure further provide an authentication method. The method includes the following. A first network element receives a second message, where the second message carries third authentication information, the third authentication information is calculated by a first device based on a first key, the first key is related to a shared key.

Embodiments of the disclosure further provide an authentication method. The method includes the following. A second device sends to a first network element a second message from a first device, where the second message carries third authentication information, the third authentication information is calculated by the first device based on a first key, and the first key is related to a shared key.

Embodiments of the disclosure further provide an authentication method. The method includes the following. A second network element receives a sixth message from a first network element, where the sixth message carries third authentication information, the third authentication information is calculated by a first device based on a first key, and the first key is related to a shared key. The second network element calculates fifth authentication information based on a third key, where the third key is related to the shared key. The second network element verifies the third authentication information based on the fifth authentication information to obtain a first authentication result. The second network element sends a seventh message to the first network element, where the seventh message carries the first authentication result.

Embodiments of the disclosure further provide a first device. The first device includes a first communication unit and a first processing unit. The first communication unit is configured to: receive a first message, where the first message contains an encrypted sequence number, a first random number, and first authentication information; and send a second message, where the second message carries third authentication information. The first processing unit is configured to: calculate second authentication information based on a shared key, the encrypted sequence number, and the first authentication information; and is configured for the first device to calculate the third authentication information based on a first key if the first authentication information is identical to the second authentication information, where the first key is related to the shared key.

Embodiments of the disclosure further provide a first network element. The first network element includes a second processing unit. The second processing unit is configured to: calculate fifth authentication information based on a third key and a first parameter, where the third key is related to a shared key; and verify the third authentication information based on the fifth authentication information.

Embodiments of the disclosure further provide a second device. The second device includes a third communication unit. The third communication unit is configured to: send a first message to a first device, where the first message carries an encrypted sequence number, a first random number, and first authentication information, and the first random number and the encrypted sequence number are used for the first device to calculate second authentication information based on a shared key; and send to a first network element a second message from the first device, where the second message carries third authentication information, the third authentication information is calculated by the first device based on a first key when the second authentication information is identical to the first authentication information, and the first key is associated with the shared key.

Embodiments of the disclosure further provide a second network element. The second network element includes a fourth communication unit. The fourth communication unit is configured to: send an eighth message, where the eighth message carries an encrypted sequence number, a first random number, and a fourth key.

Embodiments of the disclosure further provide a first device. The first device includes a processor and a memory in communication with the processor. The memory is configured to store instructions. The instructions, when executed by the processor, are operable with the first device to perform the method described above.

Embodiments of the disclosure further provide a first device. The first device includes a first processing unit and a first communication unit. The first processing unit is configured to calculate third authentication information based on a first key, where the first key is related to a shared key. The first communication unit is configured to: send a second message, where the second message carries the third authentication information.

Embodiments of the disclosure further provide a first network element. The first network element includes a second communication unit. The second communication unit is configured to receive a second message, where the second message carries third authentication information, the third authentication information is calculated by a first device based on a first key, the first key is related to a shared key.

Embodiments of the disclosure further provide a second device. The second device includes a third communication unit. The third communication unit is configured to: send to a first network element a second message from a first device, where the second message carries third authentication information, the third authentication information is calculated by the first device based on a first key, and the first key is related to a shared key.

Embodiments of the disclosure further provide a second network element. The second network element includes a fourth communication unit and a fourth processing unit. The fourth communication unit is configured to: receive a sixth message from a first network element, where the sixth message carries third authentication information, the third authentication information is calculated by a first device based on a first key, and the first key is related to a shared key; send a seventh message to the first network element, where the seventh message carries a first authentication result. The fourth processing unit is configured to: calculate fifth authentication information based on a third key, where the third key is related to the shared key; and verify the third authentication information based on the fifth authentication information to obtain a first authentication result.

Embodiments of the disclosure further provide a first device. The first device includes a processor and a memory in communication with the processor. The memory is configured to store instructions. The instructions, when executed by the processor, cause the first device to perform the method described above.

Embodiments of the disclosure further provide a first network element. The first network element includes a processor and a memory in communication with the processor. The memory is configured to store instructions. The instructions, when executed by the processor, cause the first network element to perform the method described above.

Embodiments of the disclosure further provide a second device. The second device includes a processor and a memory in communication with the processor. The memory is configured to store instructions. The instructions, when executed by the processor, cause the second device to perform the method described above.

Embodiments of the disclosure further provide a second network element. The second network element includes a processor and a memory in communication with the processor. The memory is configured to store instructions. The instructions, when executed by the processor, cause the second network element to perform the method described above.

Embodiments of the disclosure further provide a chip. The chip includes a processor. The processor is configured to invoke and execute computer programs from a memory, to cause a device equipped with the chip to perform any of the methods described in embodiments of the disclosure.

Embodiments of the disclosure further provide a computer-readable storage medium. The computer-readable storage medium is configured to store computer programs. The computer programs are operable with a computer to perform any of the methods described in embodiments of the disclosure.

Embodiments of the disclosure further provide a computer program product. The computer program product includes computer program instructions. The computer program instructions are operable with a computer to perform any of the methods described in embodiments of the disclosure.

Embodiments of the disclosure further provide a computer program. The computer program is operable with a computer to perform any of the methods described in embodiments of the disclosure.

According to the authentication method provided in embodiments of the disclosure, the first device receives the first message carrying the encrypted sequence number, the first random number, and the first authentication information, and then verify the first authentication information based on a shared key. If verification of the first authentication information succeeds, the first device sends the third authentication information to a network side. In this way, the first device can realize authentication with less signaling exchange and less computation, which is possible to reduce power consumption and reduce delay while satisfying security requirements. The method is applicable especially for a device which is resource-constrained.

### BRIEF DESCRIPTION OF THE DRAWINGS

FIG. 1 is a schematic diagram illustrating an application scenario according to embodiments of the disclosure.
FIG. 2 is a schematic flowchart of an authentication method according to an embodiment of the disclosure.
FIG. 3 is a schematic flowchart of an authentication method according to another embodiment of the disclosure.
FIG. 4 is a schematic flowchart of an authentication method according to another embodiment of the disclosure.
FIG. 5 is a schematic flowchart of an authentication method according to another embodiment of the disclosure.
FIG. 6 is a schematic flowchart illustrating encryption/decryption according to an embodiment of the disclosure.
FIG. 7 is a flowchart illustrating implementation of an authentication method according to an embodiment of the disclosure.
FIG. 8 is a schematic structural diagram illustrating a key hierarchy according to an embodiment of the disclosure.
FIG. 9 is a schematic structural diagram illustrating a key hierarchy according to another embodiment of the disclosure.
FIG. 10 is a flowchart illustrating implementation of an authentication method according to another embodiment of the disclosure.
FIG. 11 is a flowchart illustrating implementation of an authentication method according to another embodiment of the disclosure.
FIG. 12 is a flowchart illustrating implementation of an authentication method according to another embodiment of the disclosure.
FIG. 13 is a flowchart illustrating implementation of an authentication method according to another embodiment of the disclosure.
FIG. 14 is a schematic structural diagram illustrating another key hierarchy according to the disclosure.
FIG. 15 is a schematic flowchart of an authentication method according to an embodiment of the disclosure.
FIG. 16 is a schematic flowchart of an authentication method according to another embodiment of the disclosure.
FIG. 17 is a schematic flowchart of an authentication method according to another embodiment of the disclosure.
FIG. 18 is a schematic flowchart of an authentication method according to another embodiment of the disclosure.
FIG. 19 is a structural diagram of a first device according to embodiments of the disclosure.
FIG. 20 is a structural diagram of a first network element according to embodiments of the disclosure.
FIG. 21 is a structural diagram of a second device according to embodiments of the disclosure.
FIG. 22 is a structural diagram of a second network element according to embodiments of the disclosure.
FIG. 23 is a schematic structural diagram of a communication device 1900 according to embodiments of the disclosure.
FIG. 24 is a schematic structural diagram of a chip 2000 according to embodiments of the disclosure.

### DETAILED DESCRIPTION

Technical solutions of embodiments of the disclosure will be described below in conjunction with the accompanying drawings of the embodiments of the disclosure.

The technical solutions of embodiments of the disclosure can be applied to various communication systems, such as global system for mobile communication (GSM), code division multiple access (CDMA), wideband code division multiple access (WCDMA), general packet radio service (GPRS) long term evolution (LTE), LTE-advanced (LTE-A), new radio (NR), NR evolution, wireless local area network (WLAN), wireless fidelity (WiFi), or other communication systems.

The embodiments of the disclosure describe various embodiments in combination with network devices and terminals. The terminal may be mobile or fixed, and the terminal may also be referred to as a mobile station, a user unit, etc. The terminal may be a site in the WLAN, and may be a smart terminal, a wireless modem, a laptop computer, a tablet computer, or other terminals. In embodiments of the disclosure, the terminal may be a virtual reality (VR) terminal/augmented reality terminal (AR) terminal, an industrial control terminal, an autonomous driving terminal, a telemedicine terminal, a smart grid terminal, a transportation safety terminal, a smart city terminal, or a wireless terminal for a smart home, etc. As an example and not a limitation, in embodiments of the disclosure, the terminal may also be a wearable device.

In embodiments of the disclosure, the network device may be a device for communicating with a terminal, and the network device may be an access point in the WLAN, a base station in GSM, CDMA, or WCDMA, or an evolved base station in the LTE, or a relay station, or a vehicle-mounted device, a wearable device, and a network device (gNB) in the NR network, or a network device in a future evolved public land mobile network (PLMN) network, or a network device in a non-terrestrial network, etc. As an example and not a limitation, in embodiments of the disclosure, the network device may have a mobile feature, for example, the network device may be a mobile device.

It should be understood that the terms "system" and "network" are generally used interchangeably throughout the disclosure. The term "and/or" in the disclosure only describes an association between associated objects, indicating that there can be three relationships. For example, *A* and/or B can represent: *A* alone, both A and B exist, and B alone. In addition, the character "/" in the disclosure generally indicates that the objects associated with each other are in an "or" relationship. It should be understood that "indicate" mentioned in embodiments of the disclosure can be a direct indication, an indirect indication, or an indication of an association. Exemplarily, *A* indicating *B* can have the following meanings. A directly indicates B, for example, B can be obtained according to A. Alternatively, A indirectly indicates B, for example, A indicates C and B can be obtained according to C. Alternatively, there is an association between A and B. In the illustration of embodiments of the disclosure, the term "correspondence" can mean that there is a direct or indirect correspondence between the two, or can mean that there is an association between the two, or can mean relationships such as indicating and indicated or configuring and configured, etc.

To facilitate understanding of the technical solutions of embodiments of the disclosure, the relevant technologies of embodiments of the disclosure are described below. The following related technologies can be arbitrarily combined with the technical solutions of embodiments of the disclosure as optional solutions, which belong to the protection scope of embodiments of the disclosure.

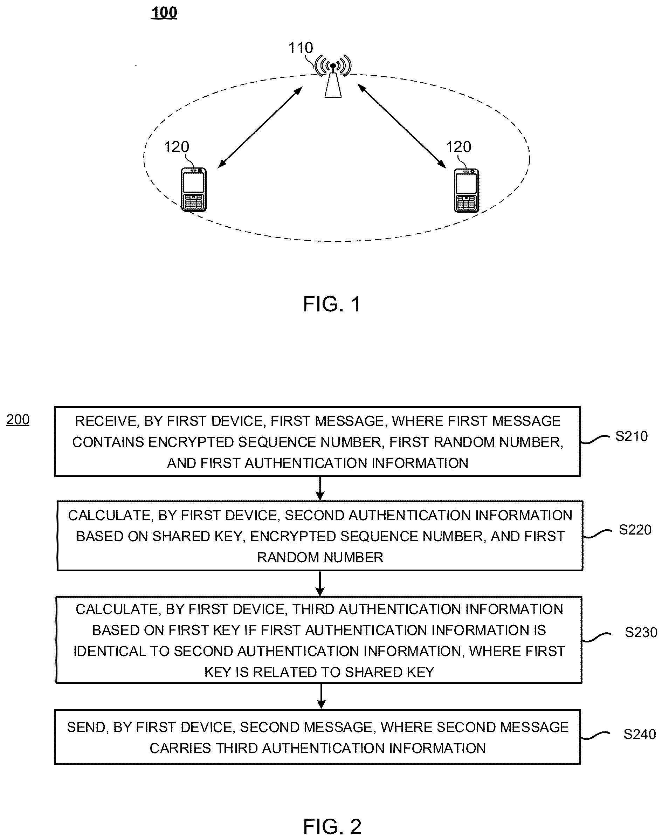

FIG. 1 exemplarily illustrates a communication system 100. The communication system includes one network device 110 and two terminals 120. In a possible implementation, the communication system 100 may include multiple network devices 110, and other number of terminals 120 can be within the coverage area of each network device 110, which is not limited in the embodiments of the disclosure. In a possible implementation, the communication system 100 may also include a mobility management entity, an access and mobility management function, and other network entities, which are not limited in embodiments of the disclosure. The network device may include an access network device and a core network device. That is, the communication system may also include multiple core networks for communicating with the access network device. The access network device may be a base station of an LTE, LTE-A, or NR system. Taking the communication system illustrated in FIG. 1 as an example, a communication device may include a network device and a terminal with a communication function, and the communication device may also include other devices in the communication system, such as a network controller, a mobile management entity, and other network entities, which are not limited in embodiments of the disclosure.

To facilitate understanding of embodiments of the disclosure, the basic processes and basic concepts involved in embodiments of the disclosure are briefly described below. It should be understood that the basic processes and basic concepts introduced below do not limit embodiments of the disclosure.

Currently, there are various security authentication protocols applicable to different terminals, including a 5^{th}-generation authentication key agreement (5GAKA), an extensible authentication protocol-AKA' (EAP-AKA'), and an evolved packet system AKA (EPSAKA) applicable to a common user equipment (UE); a control plane for cellular internet of thing (CP CIoT) security scheme for small data transmission of a CIoT device; and a battery efficient security for very low throughput (BEST) authentication scheme specifically for a machine type communication (MTC) device. These schemes can be implemented based on different authentication protocols and thus correspond to different key derivation architectures, including a 5GAKA-based key derivation architecture, an EAP-AKA'-based key derivation architecture, an EPSAKA-based key derivation architecture, a generic bootstrapping architecture (GBA)-based key derivation architecture, and an authentication and key management for applications (AKMA)-based key derivation architecture.

For all of the above schemes, an authentication vector (AV) set is adopted to implement mutual authentication through the same authentication procedure. In schemes applicable to a common UE, such as 5GAKA, EAP-AKA', and EPSAKA, the UE needs to derive multiple types of keys, including a non-access stratum (NAS) CP key, an AS CP key and user plane (UP) key, and an intermediate key. In the CP CIoT security scheme for small-data transmission of an CIoT device, a terminal can directly perform small-data transmission via a NAS, and therefore, the terminal does not need to generate an AS CP key and UP key, and the derived key only includes a NAS CP key and an intermediate key. In the BEST authentication scheme for an MTC device, the MTC device only needs to derive an integrity and confidentiality key between the MTC device, a home security endpoint (HSE), and an enterprise application server, as well as an intermediate key.

In an existing authentication scheme, during authentication, security computational overhead required for a terminal is the same as security computational overhead required for a network side, which both require a large amount of operations. Different authentication schemes correspond to different key derivation architectures. For example, for 5GAKA, one f3 operation, one f4 operation, one f5 operation, and ten hash-based message authentication code-secure hash algorithm-256 (HMAC-SHA256) operations are required, while for EAP-AKA', one f3 operation, one f4 operation, one f5 operation, and eleven HMAC-SHA256 operations are required. All the related art is not exhaustively enumerated herein. A zero-power terminal, such as an ambient power-enabled IoT (AIoT) device, usually has characteristics such as battery-free or extremely small battery capacity, ultra-low power consumption, ultra-low cost, and extremely small size. Such terminal needs to harvest energy from the environment (such as a radio frequency (RF) signal, solar energy, and other resources) to ensure that the terminal can perform computation and operate normally. However, a key derivation architecture in an existing standard authentication protocol is relatively complex, and on the other hand, the terminal has extremely limited computational and processing capabilities. Based on the above statistics, the terminal has long running time for implementing the protocol and high power consumption, and as a result, the terminal has poor usability or is even unusable. For example, the terminal may not yet complete a communication task before energy of the terminal is exhausted. Therefore, the above schemes are not suitable for a zero-power terminal device which is extremely resource-constrained.

Embodiments of the disclosure provide an authentication method. FIG. 2 is a schematic flowchart of an authentication method 200 according to embodiments of the disclosure. The method includes at least some of the following.

S210, a first device receives a first message, where the first message contains an encrypted sequence number, a first random number, and first authentication information.

S220, the first device calculates second authentication information based on a shared key, the encrypted sequence number, and the first random number.

S230, the first device calculates third authentication information based on a first key if the first authentication information is identical to the second authentication information, where the first key is related to the shared key.

S240, the first device sends a second message, where the second message carries the third authentication information.

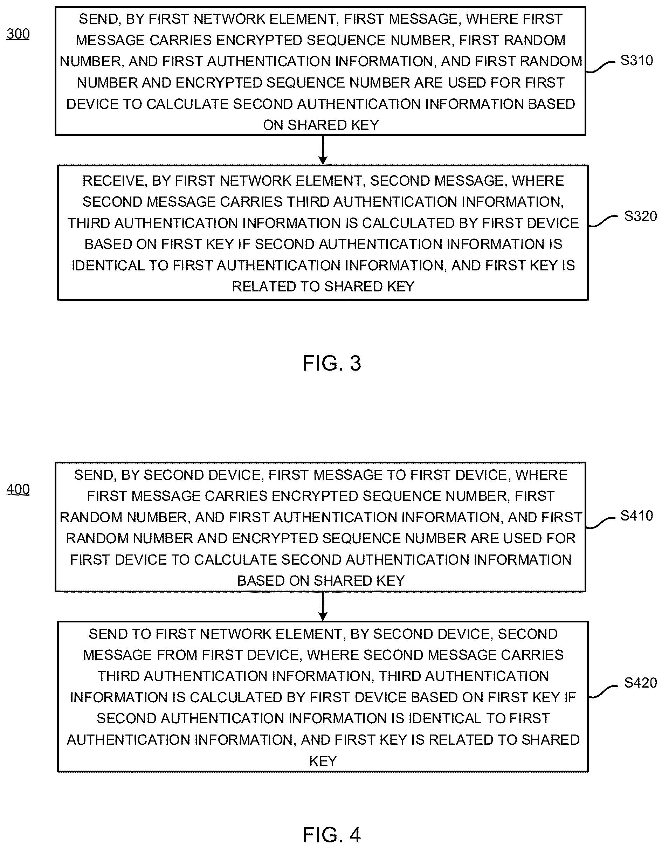

Embodiments of the disclosure provide an authentication method. FIG. 3 is a schematic flowchart of an authentication method 300 according to embodiments of the disclosure. The method includes at least some of the following.

S310, a first network element sends a first message, where the first message carries an encrypted sequence number, a first random number, and first authentication information, and the first random number and the encrypted sequence number are used for a first device to calculate second authentication information based on a shared key.

S320, the first network element receives a second message, where the second message carries third authentication information, the third authentication information is calculated by the first device based on a first key if the second authentication information is identical to the first authentication information, and the first key is related to the shared key.

Embodiments of the disclosure provide an authentication method. FIG. 4 is a schematic flowchart of an authentication method 400 according to embodiments of the disclosure. The method includes at least some of the following.

S410, a second device sends a first message to a first device, where the first message carries an encrypted sequence number, a first random number, and first authentication information, and the first random number and the encrypted sequence number are used for the first device to calculate second authentication information based on a shared key.

S420, the second device sends to a first network element a second message from the first device, where the second message carries third authentication information, the third authentication information is calculated by the first device based on a first key if the second authentication information is identical to the first authentication information, and the first key is related to the shared key.

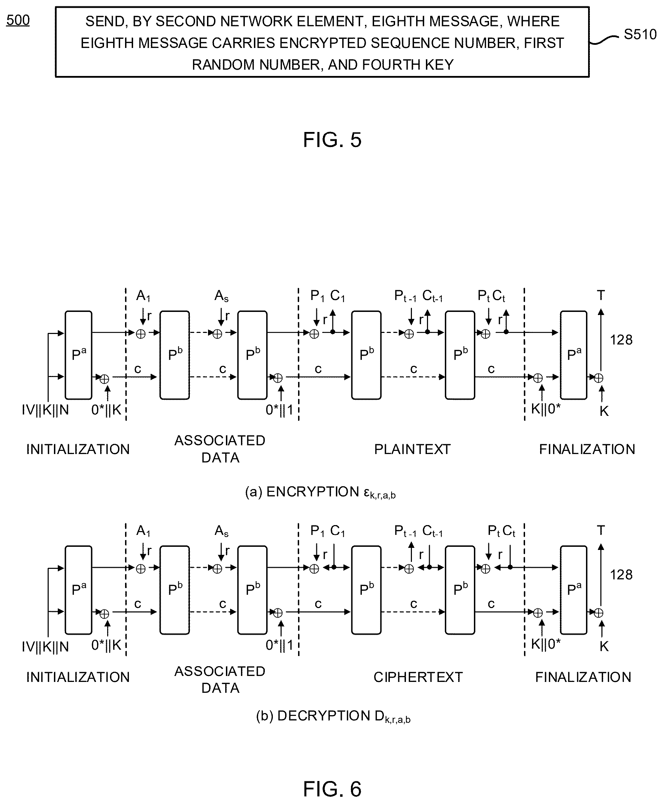

Embodiments of the disclosure provide an authentication method. FIG. 5 is a schematic flowchart of an authentication method 500 according to embodiments of the disclosure. The method includes at least some of the following.

S510, a second network element sends an eighth message, where the eighth message carries an encrypted sequence number, a first random number, and a fourth key.

In embodiments of the disclosure, the first device is a zero-power device. For example, the zero-power device can be an AIoT device, an active zero-power device, a passive zero-power device, a semi-passive zero-power device, etc. Exemplarily, the first device can be a terminal with low computing capability. Possible names or devices for the first device are not exhaustively enumerated herein.

In some embodiments, the first device accesses a mobile communication network, for example, the first device accesses a 5G network (or referred to as 5G for short).

In one case, the first network element includes at least one of: an application function (AF), an access and mobility management function (AMF), an authentication server function (AUSF), an HSE, a unified data repository (UDR), a session management function (SMF), a network exposure function (NEF), a key management network element, a bootstrapping server function (BSF), an akma anchor function (AAnF), a security anchor function (SEAF), or a core-network dedicated network element. The second network element can also be a core-network device, and the second network element is different from the first network element. The second network element can include a unified data management function (UDM). It should be understood that, the above elaborations are only illustrative. In practice, the second network element can also include other core-network devices or functions, such as an authentication credential repository and processing function (ARPF), etc., which are not exhaustively enumerated herein.

For example, the first network element can include an AF or a core-network device. The AF can be an AF corresponding to the first device or an AF serving the first device. The core-network device can include at least one of: an AMF, an AUSF, an HSE, a UDR, a SEAF, or a core-network dedicated network element. The core-network dedicated network element can refer to an element with AIoT functionality or zero-power service functionality. It should be understood that, the core-network dedicated network element can be a network element which is separately set and dedicated for serving AIoT functionality or zero-power functionality, or can be an existing core-network element in which AIoT functionality (or zero-power service-related functionality) is added. Possible cases are not exhaustively enumerated in embodiments.

The second device includes one of: a terminal or an access-network device.

In another case, the first network element includes at least one of: an AMF, an AUSF, an HSE, a UDR, an SMF, an NEF, a key management network element, a BSF, an AAnF, a SEAF, or a core-network dedicated network element. The second network element includes an AF. The second device includes one of: a terminal or an access-network device.

In some embodiments, the first device accesses a WLAN. In this case, the first network element can be a gateway in the WLAN.

In some embodiments, the shared key can be any one of: a pre-shared key (PSK), a pre-assigned key, a private network key, an application-layer key, a root key, etc. In a preferable example, the shared key can be a root key.

In some embodiments, if the first device is to access a mobile communication network, the shared key can be shared between the first device and the second network element. In some embodiments, if the first device is to access a WLAN, the shared key can be shared between the first device and the first network element.

In some possible implementations, the first device calculates the second authentication information based on the shared key, the encrypted sequence number, and the first random number as follows. The first device calculates an anonymity key based on the shared key. The first device decrypts the encrypted sequence number based on the anonymity key, to obtain a sequence number. The first device calculates the second authentication information based on the sequence number, the shared key, and the first random number.

That is, the first message can be used for the first device to authenticate a network side (which can be, for example, the second network element). In this implementation, detailed elaborations will be firstly given for an authentication procedure of the first device.

The first device can calculate the anonymity key based on the shared key as follows. The first device calculates the anonymity key based on the shared key by using a first calculation method. The first calculation method can include at least one of: a key derivation function (KDF), a first authentication function, a second authentication function, a third key-generation function (e.g., represented as f3), a fourth key-generation function (e.g., represented as f4), a fifth key-generation function (e.g., represented as f5), a hash algorithm, an advanced encryption standard (AES), snow third generation (SNOW 3G), zu chongzhi (ZUC), an exclusive OR (XOR) operation, or direct calculation. The first authentication function can be represented as f1(), the second authentication function can be represented as f2(), and the hash algorithm can be represented as HASH(). The hash algorithm can include HMAC-SHA-256, or other hash algorithms can be adopted, which are not exhaustively enumerated in embodiments.

For example, the first device can calculate the anonymity key based on the shared key by using the first calculation method as follows. The first device calculates the anonymity key based on the shared key and the first random number by using the first calculation method. This first calculation method can be the f5 function. It should be understood that, the above elaborations are only illustrative. In practice, except using the first random number, other parameters can also be used to calculate the anonymity key, such as an identifier of the first device, etc., which are not exhaustively enumerated herein.

In some embodiments, the encrypted sequence number can be calculated based on the anonymity key and the sequence number by using a second calculation method. Accordingly, the first device can decrypt the encrypted sequence number based on the anonymity key to obtain the sequence number as follows. The first device calculates the sequence number based on the anonymity key and the encrypted sequence number by using the second calculation method. The second calculation method can include at least one of: an XOR operation, a hash algorithm, an AES, SNOW 3G, ZUC.

For example, the second calculation method can be an XOR operation, that is, the encrypted sequence number can be obtained by performing an XOR operation based on the anonymity key and the sequence number. Accordingly, the first device can decrypt the encrypted sequence number based on the anonymity key to obtain the sequence number as follows. The first device performs an XOR operation on the encrypted sequence number based on the anonymity key, to obtain the sequence number. It should be noted that, in this embodiment, the XOR operation is taken as an example for illustration. Other calculation methods can also be adopted in actual processing, which are not exhaustively enumerated in embodiments.

In some embodiments, the first device can calculate the second authentication information based on the sequence number, the shared key, and the first random number as follows. The first device performs calculation based on the sequence number, the shared key, and the first random number by using a third calculation method, to obtain the second authentication information. The third calculation method can include at least one of: a KDF, a first authentication function, a second authentication function, a third key-generation function, a fourth key-generation function, a fifth key-generation function, a hash algorithm, an AES, SNOW 3G, ZUC, an XOR operation, or direct calculation. For example, if the third calculation method is a first authentication function, then the first device can use the sequence number, the shared key, and the first random number as input parameters for the first authentication function, to obtain the second authentication information. For example, the first device can use a security algorithm such as f1/f2/f3/f4/f5 to derive MAC' (or represented as *X-MAC),* where the inputs include parameters such as the shared key *K,* the sequence number SQN, and the first random number R.

The first calculation method, the second calculation method, and the third calculation method may partially overlap in terms of functions or algorithms. In actual processing, the same or different algorithms or functions can be used accordingly. For example, the first calculation method can be a fifth key-generation function (e.g., f5), the second calculation method can be an XOR operation, and the third calculation method can be a first authentication function (e.g., f1). Possible cases are not exhaustively enumerated herein.

In some embodiments, the first device calculates the second authentication information based on the sequence number, the shared key, and the first random number as follows. The first device calculates a second key based on the sequence number and the shared key. The first device calculates the second authentication information based on the second key and the first random number.

The first device can calculate the second key based on the sequence number and the shared key as follows. The first device calculates the second key based on the sequence number and the shared key by using a fourth calculation method.

Here, the second key can be a security key, where the security key can also be referred to as a communication security key, or an authentication and data security key, etc. The second key can be a security key between the first device and the first network element and used for implementing identity authentication and/or data protection between the first device and the first network element. In an example, assuming that the first network element is an AF, then the second key can be represented as *K_{AF}.* In some examples, assuming that the first network element is a gateway, then the gateway can be represented as *gate,* and the second key can be represented as *K_{gate}.*

The fourth calculation method can include at least one of: a KDF, a first authentication function, a second authentication function, a third key-generation function, a fourth key-generation function, a fifth key-generation function, a hash algorithm, an AES, SNOW 3G, ZUC, an XOR operation, or direct calculation.

In some embodiments, the first device calculates the second authentication information based on the sequence number, the shared key, and the first random number as follows. The first device calculates a second key based on the sequence number, the shared key, and a third parameter. The first device calculates the second authentication information based on the second key and the first random number.

The first device can calculate the second key based on the sequence number, the shared key, and the third parameter as follows. The first device calculates the second key based on the sequence number, the shared key, and the third parameter by using the fourth calculation method.

The third parameter can include at least one of: the first random number, the identifier of the first device, the length of the identifier of the first device, the length of the sequence number, the length of the first random number, a second specified value, or the anonymity key.

The identifier of the first device can be an identity (ID) of the first device and/or a network identifier of the first device. The ID can include, but is not limited to, at least one of: an index number, a serial number, a name, a subscription permanent identifier (SUPI), subscription concealed identifier (SUCI), a permanent equipment identifier (PEI), a 5G globally unique temporary identifier (5G-GUTI), an internal-group identifier (IGI), a generic public subscription identifier (GPSI), etc. The network identifier can include at least one of: an internet protocol (IP) address, etc. For example, the identifier of the first device can be represented as the ID of the first device. Possible contents and representations of the identifier of the first device are not exhaustively enumerated herein.

The second specified value can be set according to actual needs. The second specified value can be a fixed value (or a second fixed value) assigned by a third party. For example, the second specified value can be represented as FC, where the value of FC can be FC=0x7E. This is only an example. In actual processing, the specific value of the second specified value can also be other values, which are not exhaustively enumerated herein.

The length described above can be represented as a binary value, or a decimal value, or a hexadecimal value, or values in other numeral systems, which is not limited in this embodiment. The length can refer to the length of corresponding content in the form of binary data, or the length of corresponding content in the form of decimal data, or the length of corresponding content in the form of hexadecimal data, or the length of corresponding content in the form of data in other numeral systems. For example, if the sequence number is binary data, then the length of the sequence number can refer to the length of the sequence number in the form of binary data.

In an embodiment, the third parameter can include the first random number and the identifier of the first device, that is, the first device can calculate the first key based on the shared key, the first random number, the identifier of the first device, and the sequence number by using the fourth calculation method. For example, the first device is an AIoT device, then the identifier of the first device can be represented as *AloT ID,* and the sequence number can be represented as *SQN.* In this case, the AIoT device can generate the second key (which can be *K_{AF}* or *K_{gate}*) by using a KDF, where input parameters for KDF include the first shared key *K, AloT ID,* the sequence number SQN, and the first random number R.

In an embodiment, the third parameter can include the first random number, the identifier of the first device, the length of the sequence number, and the second specified value. The first device can calculate the first key based on the shared key, the first random number, the identifier of the first device, the sequence number, the length of the sequence number, and the second specified value by using the fourth calculation method. For example, the first device is an AIoT device, then the identifier of the first device can be *AloT ID,* the sequence number can be represented as SQN, the second specified value can be represented as *FC,* where the value of *FC* can be FC=0x7E. In this case, the AIoT device can generate the second key by using a KDF, where input parameters for KDF include the shared key *K, AloT ID, SQN,* the length of SQN, the first random number R, and 0x7E.

In an embodiment, the third parameter can include the first random number, the identifier of the first device, the length of the identifier of the first device, the length of the sequence number, the length of the first random number, the second specified value, and the anonymity key. The first device can calculate the first key based on the shared key, the first random number, the identifier of the first device, the length of the identifier of the first device, the sequence number, the length of the sequence number, the length of the first random number, the second specified value, and the anonymity key by using the first calculation method. For example, the first device is an AIoT device, then the identifier of the first device can be *AloT ID,* the sequence number can be represented as SQN, the second specified value can be represented as FC, where the value of FC can be FC=0x7E. In this case, the AIoT device can generate the second key by using a KDF, where input parameters for KDF include parameters such as the shared key *K, AloT ID,* the length of *AloT ID, SQN,* the length of SQN, the first random number R, the length of the first random number R, FC=0x7E, and *AK,* etc.

The third parameter described above is only for illustrative purposes. In actual processing, the third parameter can also include, but is not limited to, all the possible contents listed in the foregoing embodiments, and possible keys are not exhaustively enumerated in this embodiment. It should be understood that, as long as the second key is calculated based on at least one of the foregoing third parameters, it shall fall within the protection scope of embodiments.

In some possible implementations, the first device calculates the second authentication information based on the second key and the first random number.

The first authentication information can be a first MAC. Accordingly, the second authentication information can be a second MAC. To distinguish between the first MAC and the second MAC, the first MAC can be represented as *MAC,* and the second MAC can be represented as *MAC'* or *X-MAC.* Possible representations of the first MAC and the second MAC are not exhaustively enumerated herein. It should be understood that, the first authentication information and the second authentication information can also be other types of authentication codes or verification codes other than MAC, as long as the second authentication information has the same type, calculation parameter(s), and calculation method as the first authentication information, it falls within the protection scope of embodiments.

In some embodiments, the first device calculates the second authentication information based on the second key by using a fifth calculation method. For example, the first device can calculate the second authentication information based on the second key by using the fifth calculation method as follows. The first device uses the second key as input information, and calculates the second authentication information by using any one method in the fifth calculation method.

In some embodiments, the first device calculates the second authentication information based on the second key and the first random number as follows. The first device calculates the second authentication information based on the second key, the first random number, and a fourth parameter, where the fourth parameter includes at least one of: the length of the first random number or a first specified value.

The first device can calculate the second authentication information based on the second key, the first random number, and the fourth parameter as follows. The first device calculates the second authentication information based on the second key, the first random number, and the fourth parameter by using a fifth calculation method. The fifth calculation method can include at least one of: a KDF, a first authentication function, a second authentication function, a third key-generation function, a fourth key-generation function, a fifth key-generation function, etc.

The related elaborations of the first random number and the length are the same as those in the foregoing embodiments and will not be repeated herein. The first specified value can be set according to the actual needs. The first specified value can be the same as or different from the second specified value, both of which fall within the protection scope of embodiments. The first specified value can be a fixed value (or a first fixed value) assigned by a third party. For example, the first specified value can be the same as the second specified value, for example, can be represented as *FC,* where the value of *FC* can be FC=0x7E. This is only an example. In actual processing, the specific value of the first specified value can also be other numbers, which are not exhaustively enumerated herein.

Exemplarily, the specific content of the fourth parameter can vary depending on the algorithm or function used in the fifth calculation method. For example, the fifth calculation method is a key derivation function, and in this case, the fourth parameter can include: the first random number, the length of the first random number, and the first specified value. Accordingly, the first device calculates the second authentication information based on the second key, the first random number, the length of the first random number, and the first specified value by using the key derivation function. That is, the first device uses the key derivation function, where input parameters include the second key, the first random number R, the length of R, and the first specified value 0x7E. For another example, the fifth calculation method is an f2 function, and in this case, the fourth parameter can include the first random number R. Accordingly, the first device uses the f2 function, where input parameters include the second key and the first random number R. It should be understood that, this is only an example. In actual processing, the fifth calculation method is not limited to the two functions in the above two examples, and the fourth parameter is not limited to the above content. All possibilities are not exhaustively enumerated in embodiments.

In some possible implementations, after calculating the second authentication information, the first device can determine whether the second authentication information is identical to the first authentication information. If the second authentication information is identical to the first authentication information, the first device can determine that authentication succeeds; otherwise, the first device can determine that authentication failed.

Here, "authentication succeeds" or "authentication failed" can refer to authentication of a device (or an identity of the device, or the validity of the device) for generating the first authentication information succeeds or failed. In some embodiments, the first device is applied in a 5G architecture, and the first authentication information can be generated by the second network element. If the second authentication information is identical to the first authentication information, the first device can determine that authentication of the second network element succeeds, or authentication of the core network succeeds, or authentication of the validity of the second network element succeeds. In some embodiments, the first device is applied in a WLAN architecture, and the first authentication information can be generated by the first network element. If the second authentication information is identical to the first authentication information, the first device can determine that authentication of the first network element succeeds, or authentication of the validity of the first network element succeeds, or authentication of an identity of the first network element succeeds.

In addition, if the first device determines that authentication failed, the first device can reject to respond to the first message and terminate the procedure.

In some possible implementations, the first device can further perform the following operations. The first device verifies a value range of the sequence number. Specifically, the first device verifies whether the sequence number is within the value range. If the sequence number is within the value range, verification succeeds; and if the sequence number is not within the value range, verification fails. The value range can be determined based on actual needs. For example, the value range of the sequence number can include all values that are greater than a previous sequence number, or the value range of the sequence number can include all values other than the previous sequence number, or the value range of the sequence number can include all values that are different from all sequence numbers received previously, or the value range of the sequence number can include all values that are greater than the maximum value of all sequence numbers that are already received, etc, which is not limited herein.

It should be noted that, if the first device determines that verification of the sequence number failed, the first device can terminate the procedure or perform desynchronization regarding the sequence number, which is not limited herein. If verification of the sequence number succeeds, the first device can proceed to subsequent operations. Regarding verification of the value range of the sequence number, the first device can verify the value range of the sequence number before the first device generates the second authentication information or after the first device determines that the first authentication information is identical to the second authentication information. There is no limitation on possible execution occasions of verification in embodiments.

In some possible implementations, if the first authentication information is identical to the second authentication information, the first device calculates the third authentication information based on the first key.

The first key can be one of: the shared key, an anonymity key, or a second key, where the anonymity key is calculated based on the shared key, and the second key is calculated based on the sequence number and the shared key. For the specific method for calculating the anonymity key and the second key, detailed elaborations have been given in the foregoing embodiments, which will not be repeated herein.

Here, the first device can calculate the third authentication information based on the first key as follows. The first device calculates the third authentication information based on the first key by using a sixth calculation method. The sixth calculation method can be a lightweight cryptographic algorithm, for example, the sixth calculation method can be an ASCON algorithm, or an ASCON-authenticated encryption with associated data (AEAD) algorithm. It should be understood that, this is only an example. In actual processing, the sixth calculation method can also be other lightweight cryptographic algorithms, which are not exhaustively enumerated herein.

In some embodiments, the first device calculates the third authentication information based on the first key and a first parameter. Specifically, the first device calculates the third authentication information based on the first key and the first parameter by using the sixth calculation method. This embodiment is applicable especially for a scenario of verifying a device identity.

For example, the sixth calculation method can be an ASCON-AEAD algorithm. The first device can use the first key as a key for the algorithm and use the first parameter as an associated data for the algorithm. That is, the first device uses the first key and the first parameter as input parameters for the ASCON-AEAD algorithm, to calculate the third authentication information.

In some possible implementations, the first parameter can include at least one of: the identifier of the first device, a service type indicator, the identifier of the first network element, the identifier of the second network element, or the identifier of the second device. The identifier of the first device has been described in detail in the foregoing embodiments and will not be described again herein. The service type indicator can refer to an indicator indicating that the service type is a zero-power service, where the zero-power service can include an AIoT service. Possible values of the service type indicator and meanings of these values are not exhaustively enumerated in embodiments. As long as one of the values of the service type indicator can be used to indicate a zero-power service (such as an AIoT service), it shall fall within the protection scope of embodiments. Said identifier can include at least one of: a number, an index number, a serial number, an identifier, etc.

The second device can be a terminal or an access-network device. This embodiment is applicable especially when the second device is a terminal. In other words, the identifier of the second device in the first parameter can be an identifier of the terminal. In this case, the third authentication information generated based on the identifier of the terminal and at least some other contents in the first parameter can enable a peer to further verify a binding relationship between the first device and the second device. It should be understood that, if the second device is an access-network device, the identifier of the second device can be an identifier of the access-network device, which also falls within the protection scope of this embodiment.

It should be noted that, when calculating the third authentication information, any one of the above first parameters can be used. In an example, the first parameter can include the identifier of the first device to authenticate the first device, such as verifying the validity or the identity of the first device. In some other examples, the first parameter can include the identifier of the first device and the service type indicator to further indicate the service type corresponding to the current authentication. In some other examples, if the third authentication information is verified by the first network element, the first parameter can include the identifier of the first device, the service type indicator, and the identifier of the first network element. If the third authentication information is verified by the second network element, the first parameter can include the identifier of the first device, the service type indicator, and the identifier of the second network element. Possible contents of the first parameter used in any one calculation of the third authentication information are not exhaustively enumerated herein.

In some embodiments, the first device calculates the third authentication information based on the first key and the first parameter as follows. The first device calculates the third authentication information based on the first key, the first parameter, and a second parameter. That is, the first device calculates the third authentication information based on the first key, the first parameter, and the second parameter by using a sixth calculation method. This embodiment is applicable especially for a scenario of device identity verification.

Different from the foregoing embodiments, in this embodiment, the second parameter is introduced. The second parameter can act as a variable parameter to prevent replay attack. The second parameter can include at least one of: a sequence number, a second random number, or an anonymity key.

In some embodiments, the second random number can be the same as the first random number, that is, the second random number can be equal to the first random number. For example, both the second random number and the first random number can be represented as R.

In some embodiments, the second random number can be a random number generated by the first device, that is, the second random number is different from the first random number. For example, the second random number can be represented as *NONCE, NONCE2,* or N. It should be noted that, if the second random number is different from the first random number, the second message further needs to carry the second random number.

For example, the sixth calculation method can be an ASCON-AEAD algorithm. The first device can use the first key as a key for the algorithm and use both the first parameter and the second parameter as associated data for the algorithm. That is, the first key, the first parameter, and the second parameter are used as inputs for the ASCON-AEAD algorithm to calculate the third authentication information.

In some embodiments, the second message further includes ciphertext data, and the first device calculates the third authentication information based on the first key as follows. The first device calculates the ciphertext data and the third authentication information based on the first key and message data, where the message data includes service data or an entire message, and the entire message contains the service data and the first parameter. Specifically, the first device calculates the ciphertext data and the third authentication information based on the first key and the message data by using the sixth calculation method.

In this embodiment, if the message data only includes service data, this embodiment is applicable to a scenario of data verification. If the message data is the entire message, this embodiment is applicable to a scenario of both identity verification of the first device and data verification.

Here, the service data can be service data that the first device is to report this time or service data that the first device is to send. The service data obtained can be data collected by the first device or data obtained in other ways. There is no limitation on the method and time for obtaining the service data in this embodiment. The first parameter carried in the entire message is the same as that in the foregoing embodiments and will not be described again herein.

For example, the sixth calculation method can be an ASCON-AEAD algorithm. The first device can use the first key as a key for the algorithm, the first parameter as associated data for the algorithm, and the service data as plaintext data. That is, the first key, the first parameter, and the service data are used as input parameters for the ASCON-AEAD algorithm to calculate the ciphertext data and the third authentication information.

In some embodiments, the first device calculates the ciphertext data and the third authentication information based on the first key and the message data as follows. The first device calculates the ciphertext data and the third authentication information based on the first key, the message data, and a second parameter. Specifically, the first device calculates the ciphertext data and the third authentication information based on the first key, the message data, and the second parameter by using the sixth calculation method. In this embodiment, the function and composition of the second parameter are the same as those in the foregoing embodiments and will not be described again herein.

Taking the ASCON-AEAD algorithm as an example for illustration, the ASCON-AEAD algorithm includes an encryption part and a decryption part, which have identical procedure and structure, and the difference only lies in that the roles of plaintext and ciphertext as input or output are reversed. Ciphertext data can be represented as C, and the third authentication information can be represented as *T.* In this example, *T* represents an authentication tag. The ASCON-AEAD algorithm consists of four phases: initialization, associated data, plaintext/ciphertext, and finalization, and a parameter involved therein mainly includes at least one of: a key, a plaintext *P,* associated data A, or a ciphertext C. *IV* is a pre-configured initialization vector, and N can be the second random number. In ASCON-AEAD, T is generated for integrity authentication. For ASCON-AEAD, during encryption, the key (i.e., the first key in embodiments), A, and *P* are input to obtain C and *T;* during decryption, *K, A,* and C are input to obtain P and *T'.* By comparing *T* and *T', A* can be authenticated. Referring to FIG. 6, FIG. 6 illustrates an encryption/decryption procedure of ASCON-AEAD. The encryption procedure and the decryption procedure are substantially the same, and the only difference lies in the input of plaintext/ciphertext. The encryption procedure of ASCON-AEAD illustrated in FIG. 6 is described below by way of example.

In the initialization phase, concatenation is performed on an initialization vector (IV) based on the length of the first key, a data block size (r), and round numbers of round operations *(a, b)* to form an intermediate state. After 12 rounds of round operations, the output is divided into two "major parts", namely Sr (upper part) and Sc (lower part). In FIG. 6, information input during the initialization phase includes *IV, K,* and N. The specific content of *IV* is not limited in embodiments. *K* in FIG. 6 represents the first key, which can specifically be the second key *K_{AF},* an anonymity key (AK), or a shared key *K* in embodiments. The round number a is represented as *p^{a}*, and the round number b is represented as *p^{b}* in FIG. 6. The major part *Sr* is represented as "*r*", and the major part Sc is represented as "c" in FIG. 6.

In the associated data processing phase, the associated data (A) is split into s blocks (A1 to *As* in FIG. 6) based on the data block size (r). Each block of associated data *(Ai)* is XORed to an intermediate state Sr in the upper part of the procedure, which is then followed by multiple rounds of round operations before introducing the next block of associated data *(Ai+1).* After all the associated data is introduced, an XOR operation is performed on an intermediate state Sc in the lower part of the procedure to complete introduction of the associated data. In this example, the associated data A can include at least one of: the first parameter, the message data, or the second parameter. The specific elaborations thereof are the same as those in the foregoing embodiments and will not be repeated herein. For example, if the current calculation is mainly intended for message integrity protection, the associated data can include service data. If the current calculation is mainly intended for identity authentication and authorization, the associated data can include the first parameter.

In the plaintext processing phase (or encryption phase), the plaintext (P) is split into *t* blocks (P1 to *Pt* in FIG. 6, where *t* is a positive integer) based on the data block size *(r).* If the plaintext cannot be evenly divided, one bit of "1" and several bits of "0" are padded at the end to ensure that the plaintext can be evenly divided. Each plaintext block *(Pi)* is XORed to the intermediate state Sr in the upper part of the procedure, and then a corresponding ciphertext block (Ci) is directly output, which is then followed by multiple rounds of round operations before introducing the next plaintext block *(Pi+1).* After all the plaintext is introduced, encryption is completed.

In the finalization phase, a key (padded with "0" at the end to the full length) is XORed to the intermediate state Sc in the lower part of the procedure, and then multiple rounds of round operations are performed to output *T* and *C*.

In some embodiments, the first device calculates the third authentication information based on the first key as follows. The first device calculates a first integrity key based on the first key. The first device calculates the third authentication information based on the first integrity key.

The first device can calculate the first integrity key based on the first key as follows. The first device calculates the first integrity key based on the first key and a fifth parameter by using a seventh calculation method. The fifth parameter can include at least one of: an integrity protection algorithm identifier, the length of the integrity protection algorithm identifier, a fifth specified value, an identifier of the first integrity key, the length of the identifier of the first integrity key, the first random number, or the length of the first random number.

The seventh calculation method can include at least one of: a KDF, a first authentication function (e.g., represented as f1), a second authentication function (e.g., represented as f2), a third key-generation function (e.g., represented as f3), a fourth key-generation function (e.g., represented as f4), a fifth key-generation function (e.g., represented as f5), etc.

In this embodiment, the first integrity key can also be referred to as a first integrity protection key, etc. The first integrity key is used for integrity protection of a message sent by the first device and/or integrity verification of a message received by the first device. The specific algorithm for integrity protection and/or integrity verification is not limited in this embodiment.

The integrity protection algorithm can be an algorithm used to calculate an integrity key (or the third key or an integrity protection key). The integrity protection algorithm identifier can include at least one of: the number of the integrity protection algorithm, the serial number of the integrity protection algorithm, the name of the integrity protection algorithm, etc.

The fifth specified value can be set according to actual needs. The fifth specified value can be the same as or different from the first specified value in the foregoing embodiments, and/or the fifth specified value can be the same as or different from the second specified value in the foregoing embodiments, and/or the fifth specified value can be the same as or different from the fourth specified value in the foregoing embodiments, all of which shall fall within the protection scope of embodiments. The fifth specified value can be a fixed value (or a fifth fixed value) assigned by a third party. Exemplarily, the fifth specified value can be the same as the fourth specified value, for example, can be represented as FC, where the value of FC can be FC=0x7E. This is only an example. In actual processing, the specific value of the fifth specified value can also be other values, which are not exhaustively enumerated herein.

The identifier of the first integrity key can be an identifier of the type of the first integrity key. For example, the type of the first integrity key is an integrity key, and then the identifier of the first integrity key is a type identifier of an integrity key. In some examples, the identifier of the first integrity key can be 0x01.

The elaborations of the length and the first random number are the same as those in the foregoing embodiments and will not be repeated herein.

Exemplarily, the fifth parameter can include the integrity protection algorithm identifier, the length of the integrity protection algorithm identifier, the fifth specified value, the identifier of the first integrity key, the length of the identifier of the first integrity key, the first random number, and the length of the first random number. Accordingly, the first device can generate the first integrity key by using a KDF, where input parameters include the first key (for example, the first key can be any one of the shared key K, the second key, or the anonymity key *AK* in the foregoing embodiments), the integrity protection algorithm identifier, the length of the integrity protection algorithm identifier, a fixed value assigned by a third party such as FC=0x7E, the identifier of the first integrity key (for example, 0x01), the length of the identifier of the first integrity key, the first random number R, and the length of the first random number R, etc. It should be understood that, this is only an example. In actual processing, the fifth parameter may include only one or more of the parameters listed above, or may include more parameters. Possible combinations are not exhaustively enumerated herein.

In some embodiments, the first device calculates the third authentication information based on the first integrity key as follows. The first device calculates the third authentication information based on the first integrity key and the service data.

In some embodiments, the second message further includes ciphertext data, and the first device calculates the third authentication information based on the first integrity key as follows. The first device calculates a first encryption key based on the first key. The first device calculates the ciphertext data based on the first encryption key and the service data. The first device calculates the third authentication information based on the first integrity key and the ciphertext data.

The first device can calculate the first encryption key based on the first key as follows. The first device calculates the first encryption key based on the first key and a sixth parameter by using an eighth calculation method. The sixth parameter can include at least one of: an encryption algorithm identifier, the length of the encryption algorithm identifier, a fourth specified value, an identifier of the first encryption key, the length of the identifier of the first encryption key, the first random number, or the length of the first random number. The eighth calculation method can include at least one of: a KDF, a first authentication function (e.g., represented as f1), a second authentication function (e.g., represented as f2), a third key-generation function (e.g., represented as f3), a fourth key-generation function (e.g., represented as f4), a fifth key-generation function (e.g., represented as f5), etc.

In this embodiment, the first encryption key can also be referred to as a first confidentiality key, for example, can be represented as *K_{CK-AIoT}.* The first encryption key is used for encrypting data sent by the first device and/or decrypting data received by the first device. The algorithm for encryption and/or decryption is not limited in this embodiment.

The encryption algorithm can be an algorithm used for calculating an encryption key (or the second key or a confidentiality key). The encryption algorithm identifier can include at least one of: the number of the encryption algorithm, the serial number of the encryption algorithm, the name of the encryption algorithm, etc. The fourth specified value can be set according to actual needs. The fourth specified value can be the same as or different from the first specified value in the foregoing embodiments, and/or the fourth specified value can be the same as or different from the second specified value in the foregoing embodiments, all of which shall fall within the protection scope of this embodiment. The fourth specified value can be a fixed value (or a fourth fixed value) assigned by a third party. Exemplarily, the fourth specified value can be the same as the second specified value and the first specified value, for example, can be represented as FC, where the value of FC can be FC=0x7E. This is only an example. In actual processing, the specific value of the fourth specified value can also be other values, which are not exhaustively enumerated herein. The identifier of the first encryption key can be an identifier of the type of the first encryption key. For example, the identifier of the first encryption key can be 0x00. The elaborations of the length and the first random number are the same as those in the foregoing embodiments and will not be repeated herein.

Exemplarily, the sixth parameter can include the encryption algorithm identifier, the length of the encryption algorithm identifier, the fourth specified value, the identifier of the first encryption key, the length of the identifier of the first encryption key, the first random number, and the length of the first random number. Accordingly, the first device can generate *K_{CK-AIoT}* by using a KDF, where input parameters include the first key, the encryption algorithm identifier, the length of the encryption algorithm identifier, a fixed value assigned by a third party such as FC=0x7E, the identifier of the first encryption key (e.g., 0x00), the length of the identifier of the first encryption key, the first random number R, and the length of the first random number R, etc. It should be understood that, this is only an example. In actual processing, the sixth parameter may include only one or more of the parameters listed above, or may include more parameters. Possible combinations are not exhaustively enumerated herein.

The third authentication information can refer to a verification code used for checking message integrity. In some examples, the third authentication information can include an integrity verification code, for example, can be represented as MAC1. In some examples, the third authentication information can include a message integrity check code, for example, can be represented as messages integrity check (MIC) 1 or MIC.

In some embodiments, the second message can further carry fourth authentication information, where the fourth authentication information is used for authenticating the first device. Accordingly, the method can further include the following. The first device calculates the fourth authentication information based on the shared key, a first intermediate response, and the first random number, where the first intermediate response is calculated based on the shared key and the first random number.

The first device can calculate the first intermediate response based on the shared key and the first random number by using a ninth calculation method. The ninth calculation method can include at least one of: a first authentication function (e.g., represented as f1), a second authentication function (e.g., represented as f2), a third key-generation function (e.g., represented as f3), a fourth key-generation function (e.g., represented as f4), a fifth key-generation function (e.g., represented as f5), etc.

Exemplarily, the first intermediate response can be represented as RES, a first intermediate RES, or a first RES, or RES1. Assuming the ninth calculation method is f2, then the first device can calculate the first RES based on the shared key K and the first random number R by using the f2 function. It should be understood that, calculation of the first intermediate response is not limited to calculation based on the shared key and the first random number listed above, and other parameters can be introduced, such as at least one of the sequence number, the length of the first random number, etc. However, it should be noted that, calculation of the first intermediate response needs to be performed by using a different parameter(s) and/or a different calculation method than calculation of the second authentication information. For example, if the first intermediate response is calculated based on the shared key, the sequence number, and the first random number, and the second authentication information is also calculated based on the shared key, the sequence number, and the first random number, then the first intermediate response can be calculated by using an f2 function, while the second authentication information can be calculated by using a function other than f2. For another example, if both calculation of the first intermediate response and calculation of the second authentication information are performed by using an f2 function, then the first intermediate response can be calculated based on the shared key and the first random number, while the second authentication information can be calculated based on the shared key, the sequence number, and the first random number. This is only an example and does not constitute limitation on the method for generating the first intermediate response and the method for generating the second authentication information.

The first device can calculate the fourth authentication information based on the shared key, the first intermediate response, and the first random number as follows. The first device calculates the fourth authentication information based on the shared key, the first intermediate response, the first random number, and a seventh parameter by using a tenth calculation method.

The fourth authentication information can be a response (RES). Exemplarily, the fourth authentication information can be represented as RES*, or RES2, etc., as long as the fourth authentication information is represented in a different way than the first intermediate response for differentiation, it shall fall within the protection scope of embodiments.

The tenth calculation method can include at least one of the following: a KDF, a first authentication function (e.g., represented as f1), a second authentication function (e.g., represented as f2), a third key-generation function (e.g., represented as f3), a fourth key-generation function (e.g., represented as f4), a fifth key-generation function (e.g., represented as f5), etc.

The seventh parameter can include at least one of: the length of the first random number R, the length of RES, or a third specified value. The third specified value can be set according to actual needs. The third specified value can be the same as or different from the first specified value in the foregoing embodiments, and/or the third specified value can be the same as or different from the second specified value in the foregoing embodiments, and/or the third specified value can be the same as or different from the fourth specified value in the foregoing embodiments, all of which shall fall within the protection scope of embodiments. The third specified value can be a fixed value (or a third fixed value) assigned by a third party. Exemplarily, the third specified value can be represented as FC (or FC3), where the value of FC can be FC=0x6B. This is only an example. In actual processing, the specific value of the third specified value can also be other values, which are not exhaustively enumerated herein.

When calculating the third authentication information, all of the seventh parameters described above can be used, or only one or more of the seventh parameters can be used, or other parameters other than the seventh parameters listed above can be used. Possible cases are not exhaustively enumerated herein.

The foregoing embodiments provide detailed elaborations of obtaining various authentication information, obtaining the first key, and calculating the ciphertext data by the first device. In the solutions provided in the embodiments, the first device can access a mobile communication network or a WLAN. The exchange between the first device and other devices, as well as related operations of other devices, will be described below with reference to different scenarios.

In some possible implementations, the first device accesses a mobile communication network. In this implementation, the shared key is shared between the first device and the second network element.

In some embodiments, the first device can proactively initiate authentication.

In this case, the first device can perform the following operations. The first device sends a third message, where the third message is used for requesting authentication, and the third message carries the identifier of the first device.

In one example, the first device can send the third message as follows. The first device sends the third message to the second device. If the second device is a terminal device, the third message can be any kind of sidelink message. If the second device is an access-network device, the third message can be any kind of AS message.

In this example, the second device can further perform the following operations. The second device receives the third message from the first device, where the third message is used for requesting authentication, and the third message carries the identifier of the first device.

The method can further include one of the following. If there is a mapping between identifier information of the first device and first identifier information of the second device, the second device sends a first request message to the first network element, where the first request message carries second identifier information of the second device and the identifier of the first device. Alternatively, if there is a mapping between the identifier information of the first device and the first identifier information of the second device, the second device sends a second request message to the second network element, where the second request message carries the second identifier information of the second device and the identifier of the first device.

The first identifier information includes an SUPI or an SUCI. The second identifier information includes an SUCI. Here, "there is a mapping between the identifier information of the first device and the first identifier information of the second device" can mean that there is a mapping between the identifier information of the first device and identifier information of the second device itself (such as SUPI or SUCI). The mapping between the first identifier information of the second device and the identifier of the first device can be pre-set at the second device. The method of obtaining the mapping is not limited in this embodiment.

In one case, the second device sends the first request message to the first network element. In this case, after the first request message is received, the first network element can perform the following operations. The first network element sends a key request message to the second network element, where the key request message carries the identifier of the first device. Accordingly, the second network element can perform the following operations. The second network element receives the key request message from the first network element, where the key request message carries the identifier of the first device.

In another case, the second device can directly send the second request message to the second network element. Accordingly, the second network element can perform the following operations. The second network element receives the second request message from the second device, where the second request message carries the second identifier information of the second device and the identifier of the first device.

In an example, the first device can send the third message as follows. The first device sends the third message to the first network element, or the first device sends the third message to the second network element.

The first device can send the third message to the first network element as follows. The first device sends the third message to the first network element via the second device. Accordingly, the second device can perform the following operations. The second device receives the third message from the first device, and the second device forwards the third message to the first network element. Further, the first network element can receive the third message specifically as follows. The first network element receives the third message sent by the first device. After the third message is received, the first network element can perform the following operations. The first network element sends a key request message to the second network element, where the key request message carries the identifier of the first device. Accordingly, the second network element performs the following operations. The second network element receives the key request message from the first network element.

The first device can send the third message to the second network element as follows. The first device sends the third message to the first network element via the second device. Accordingly, the second device can perform the following operations. The second device receives the third message from the first device, and the second device forwards the third message to the second network element. The second network element can perform the following operations. The second network element receives the third message from the first device, where the third message is used for requesting authentication, and the third message carries the identifier of the first device.

In this example, the second device can be an access-network device, that is, the second device acts as a forwarding device to forward the third message to the first network element.

In some embodiments, a wake-up signal can be used to trigger the first device to perform authentication.

Specifically, before the first device sends the third message, the method can further include the following. The first device receives a wake-up signal. The wake-up signal can be sent by the second device, or can be sent by other devices other than the second device. The device for sending the wake-up signal is not limited or exhaustively enumerated in this embodiment. The function of the wake-up signal can include at least one of: triggering the first device to report service data, powering the first device, triggering the first device to perform authentication, etc. The wake-up signal can be referred to as any one of a trigger signal, a power-supply signal, a trigger power-supply signal, etc. in some examples, and possible names for the wake-up signal are not exhaustively enumerated in this embodiment.

The elaborations of sending the third message by the first device in this embodiment are the same as those in the foregoing embodiments and will not be repeated herein.

In some embodiments, authentication can be initiated by the first network element.

Specifically, the first network element can perform the following operations. The first network element sends a key request message to the second network element, where the key request message carries the identifier of the first device. Accordingly, the second network element can perform the following operations. The second network element receives the key request message from the first network element. That is, in this embodiment, the authentication is triggered directly by the first network element by sending the key request message, rather than sending the third message firstly by the first device.

Through various methods for initiating authentication described above, the second network element can at least obtain the identifier of the first device, and then the second network element can proceed to subsequent operations.

In some possible implementations, the second network element generates the first random number, generates the encrypted sequence number, and generates the fourth key. Accordingly, the first network element generates the first authentication information.

In some embodiments, the second network element further performs the following operations. The second network element calculates an anonymity key based on the shared key, and the second network element encrypts a sequence number based on the anonymity key, to obtain the encrypted sequence number.

Here, the second network element can calculate the anonymity key based on the shared key as follows. The second network element calculates the anonymity key based on the shared key by using a first calculation method. The implementation thereof should be the same as the implementation of calculating the anonymity key based on the shared key by the first device in the foregoing embodiments, and therefore will not be repeated herein.

The encrypted sequence number can be calculated based on the anonymity key and the sequence number by using a second calculation method. The second network element can encrypt the sequence number based on the anonymity key, to obtain the encrypted sequence number as follows. The second network element calculates the encrypted sequence number based on the anonymity key by using the second calculation method. That is, the method for encrypting the sequence number by the second network element corresponds to the method for decrypting the encrypted sequence number by the first device described above. The second calculation method shall be the same as that in the foregoing embodiments, and will not be repeated herein. In addition, the method for obtaining or acquiring the sequence number by the second network element is not limited in this embodiment.

In some embodiments, the second network element further performs the following operations. The second network element calculates the fourth key based on the sequence number and the shared key. The method for calculating the fourth key based on the sequence number and the shared key by the second network element shall be the same as the method for calculating the second key based on the sequence number and the shared key by the first device. That is, the second network element calculates the fourth key by using the same parameter type and calculation method as the first device. The fourth key shall be theoretically identical to the second key, and will not be described again herein.

In some embodiments, the second network element further performs the following operations. The second network element calculates the fourth key based on the sequence number, the shared key, and a third parameter, where the third parameter includes at least one of: the first random number, the identifier of the first device, the length of the identifier of the first device, the length of the sequence number, the length of the first random number, a second specified value, or the anonymity key.

The method for calculating the fourth key based on the sequence number, the shared key, and the third parameter by second network element shall be the same as the method for calculating the second key based on the sequence number, the shared key, and the third parameter by the first device. That is, the second network element calculates the fourth key by using the same parameter type and calculation method as the first device. The fourth key shall be theoretically identical to the second key. The fourth key calculated by the second network element and the second key can be a key pair, and act as security keys, where the security key can also be referred to as a communication security key, or an authentication and data security key, etc. If the first device is to access a mobile communication network, then the fourth key and the second key are security keys between the first device and the first network element, and used for protecting data between the first device and the first network element. In this example, assuming that the first network element is an AF, then the second key can be represented as *K_{AF},* and the fourth key can also be represented as *K_{AF},* or the fourth key can be represented as *K'_{AF}* in order to distinguish the different generation entities. The fourth key corresponds to the second key in the foregoing embodiments, that is, the fourth key shall be theoretically identical to the second key. However, since the fourth key and the second key are generated by different devices, the fourth key and the second key are differentiated for illustration in embodiments.

After completing the above operations, the second network element can perform the following operations. The second network element sends an eighth message, where the eighth message carries the encrypted sequence number, the first random number, and the fourth key.

Specifically, the second network element can send the eighth message as follows. The second network element sends the eighth message to the first network element. Accordingly, the first network element receives the eighth message from the second network element, where the eighth message carries the encrypted sequence number, the first random number, and the fourth key.

After the eighth message is received, the first network element can calculate the first authentication information.

In some embodiments, the first network element can calculate the first authentication information based on the fourth key specifically as follows. The first network element calculates the first authentication information based on the fourth key by using a fifth calculation method. The fifth calculation method is the same as that in the foregoing embodiments. The specific method for calculating the first authentication information by the first network element shall be the same as the method for calculating the second authentication information by the first device, and is therefore not elaborated herein.

In some possible embodiments, the first network element calculates the first authentication information based on the fourth key and the first random number. For example, the first network element calculates the first authentication information based on the fourth key and the first random number by using a fifth calculation method. The specific method for calculating the first authentication information by the first network element shall be the same as the method for calculating the second authentication information by the first device, and is therefore not elaborated again herein.

In some embodiments, the first network element calculates the first authentication information based on the fourth key and the first random number as follows. The first network element calculates the first authentication information based on the fourth key, the first random number, and a fourth parameter, where the fourth parameter includes at least one of: the length of the first random number or a first specified value.

The elaborations of the fourth parameter are the same as those in the foregoing embodiments and will not be repeated herein. The specific method for calculating the first authentication information by the first network element, as well as the specific content of the fourth parameter adopted, shall be the same as those for calculating the second authentication information by the first device, and therefore are not elaborated again herein.

In some possible implementations, the second network element generates the first random number, generates the encrypted sequence number, generates the fourth key, and generates the first authentication information. Accordingly, the first network element only needs to receive all the content sent by the second network element.

In this implementation, the eighth message further carries the first authentication information, and the second network element further performs the following operations. The second network element calculates the first authentication information based on the sequence number, the shared key, and the first random number.

The second network element can calculate the first authentication information based on the sequence number, the shared key, and the first random number as follows. The second network element calculates the first authentication information based on the sequence number, the shared key, and the first random number by using a third calculation method. The third calculation method is the same as that in the foregoing embodiments. In addition, the specific algorithm and parameter for calculating the first authentication information by the second network element shall be the same as those for calculating the second authentication information by the first device, and therefore is not elaborated again herein.

After completing the foregoing operations, the first network element can obtain all the content of the encrypted sequence number, the first random number, the first authentication information, and the fourth key. Then, the first network element can store the fourth key locally and proceed to subsequent message transmission operations.

In some possible embodiments, the first network element sends the first message as follows. The first network element sends the first message to the first device. The first device receives the first message as follows. The first device receives the first message from the first network element.

The first network element can send the first message to the first device via the second device. Accordingly, the second device sends the first message as follows. The second device sends to the first device the first message from the first network element.

After the first message is received, the first device firstly needs to generate the second authentication information. If the second authentication information is identical to the first authentication information, the first device further performs the foregoing operations of calculating the second key, calculating the third authentication information, etc., which are not described again herein.

In this embodiment, the first device sends the second message as follows. The first device sends the second message to the first network element. The first network element receives the second message as follows. The first network element receives the second message from the first device.

The first network element can receive the second message from the first device via the second device. The second device can perform the following operations. The second device receives the second message. The second device can receive the second message specifically as follows. The second device receives the second message from the first device. Further, the second device performs the following operations. The second device sends to the first network element the second message from the first device.

In this embodiment, the second device can be an access-network device. Alternatively, the second device can be a terminal, where the terminal only acts as a transparent forwarding node. The specific content carried in the first message in this embodiment has been detailed in the foregoing embodiments and will not be described again herein.

In some possible embodiments, the first network element can send a ninth message to the second device, where the ninth message carries the encrypted sequence number, the first random number, the first authentication information, and the identifier of the first device. Accordingly, the second device performs the following operations. The second device receives the ninth message from the first network element, where the ninth message carries the encrypted sequence number, the first random number, the first authentication information, and the identifier of the first device.

Further, the second device sends the first message as follows. If there is a mapping between identifier information of the first device and first identifier information of the second device, the second device sends the first message to the first device. Here, the method for determining whether there is a mapping between the identifier information of the first device and the first identifier information of the second device has been explained in the foregoing embodiments and will not be described again herein. The content that the first message may carry is the same as that in the foregoing embodiments and will not be elaborated again herein.

The first device receives the first message as follows. The first device receives the first message from the second device. The operations after the first message is received by the first device will not be described again herein.

The first device sends the second message as follows. The first device sends the second message to the second device. Accordingly, the second device can receive the second message as follows. The second device receives the second message from the first device. Further, the second device performs the following operations. The second device sends the second message to the first network element. That is, the first network element can receive the second message from the second device.

In some possible implementations, the first device generates the third authentication information by using a sixth calculation method and by using the second key, namely *K_{AF},* as the first key. Accordingly, after the second message is received, the first network element can authenticate the third authentication information carried in the second message by using the sixth calculation method.

In some embodiments, the method can further include the following. The first network element calculates the fifth authentication information based on a third key and a first parameter, where the third key is related to the shared key. The first network element verifies the third authentication information based on the fifth authentication information.

The third key is a fourth key, that is, the fourth key is used as the third key, where the fourth key is calculated based on a sequence number and the shared key. The fourth key can be generated by the second network element and sent to the first network element. The method for calculating and sending the fourth key has been described in the foregoing embodiments and is not described again herein.

The elaborations of the first parameter are the same as those in the foregoing embodiments and are not repeated herein.

The first network element can calculate the fifth authentication information based on the third key and the first parameter as follows. The first network element calculates the fifth authentication information based on the third key by using the sixth calculation method. The sixth calculation method is the same as that in the foregoing embodiments. The sixth calculation method used by the first network element is an encryption (decryption) part, and correspondingly, the sixth calculation method used by the first device is a decryption (encryption) part corresponding to the encryption (decryption) part. For example, if the first device calculates the third authentication information by using an encryption part of an ASCON-AEAD algorithm, then the first network element calculates the fifth authentication information by using a decryption part of the ASCON-AEAD algorithm. It should be noted that, the specific parameter(s) used by the first network element shall correspond to the specific parameter(s) used by the first device, and the specific operations of the first network element are not described again herein. Referring to FIG. 6, FIG. 6 also illustrates a decryption procedure of ASCON-AEAD. An input parameter A for the decryption procedure is the same as that in the related elaborations in the foregoing encryption procedure. The difference lies in that in the decryption procedure, the input parameter K is the third key (*K_{AF}* in this embodiment), C is the ciphertext data, the output P is the foregoing data (i.e., the data obtained through decryption), and T' represents the fifth authentication information. The processing of the decryption procedure is the same as that of the encryption procedure, and the roles of plaintext and ciphertext as input or output are reversed in the encryption procedure and the decryption procedure, which therefore will not be described again herein.

The first network element can verify the third authentication information based on the fifth authentication information as follows. If the fifth authentication information is identical to the third authentication information, the first network element determines that authentication of the first device succeeds. Additionally or alternatively, if the fifth authentication information is different from the third authentication information, the first network element determines that the identity of the first device is invalid (or authentication of the first device failed) and rejects the second message. Here, "rejecting the second message" can refer to rejecting to respond to the second message, or can refer to sending to the first device a rejection response for the second message, thereby directly terminating the procedure.

In some embodiments, the first network element calculates the fifth authentication information based on the third key and the first parameter as follows. The first network element calculates the fifth authentication information based on the third key, the first parameter, and a second parameter(s).

The elaborations of the second parameter are the same as those in the foregoing embodiments and are not repeated herein. It should be noted that, if the second random number is the same as the first random number, the first network element can use the first random number directly as the second random number in the second parameter, and then the first network element calculates the fifth authentication information as described above. If the second random number in the second parameter is different from the first random number, the second message can further carry the second random number. Accordingly, the first network element can directly use the second random number carried in the second message as one of the second parameters, and then the first network element calculates the fifth authentication information as described above.

The implementation of calculating the fifth authentication information based on the second parameter by the first network element is the same as that of calculating the third authentication information based on the second parameter by the first device described above, which is not described again herein. The implementation of verifying the third authentication information based on the fifth authentication information by the first network element is the same as that in the foregoing embodiments and is not described again herein.

In some embodiments, the second message further includes ciphertext data, and the method further includes the following. The first network element calculates message data and the fifth authentication information based on the third key and the ciphertext data, where the message data includes service data or an entire message, and the entire message contains the service data and a first parameter. If the fifth authentication information is identical to the third authentication information, the first network element stores the message data.

The first network element can input both the third key and the ciphertext data into the decryption part of the ASCON-AEAD algorithm, to obtain the message data and the fifth authentication information output through the decryption part of the ASCON-AEAD algorithm. The implementation thereof corresponds to that of the encryption part of the ASCON-AEAD algorithm in the foregoing embodiments and is not described again herein.

If the fifth authentication information is identical to the third authentication information, the first network element can store the message data as follows. If the fifth authentication information is identical to the third authentication information, the first network element determines that authentication of the first device succeeds (for example, identity authentication succeeds), and the first network element stores the message data.

Additionally, the method can further include the following. If the fifth authentication information is different from the third authentication information, the first network element determines that the identity of the first device is invalid (or authentication of the first device failed), rejects the second message, and the first network element does not store the message data.

In some embodiments, the first network element calculates the message data and the fifth authentication information based on the third key and the ciphertext data as follows. The first network element calculates the message data and the fifth authentication information based on the third key, the ciphertext data, and a second parameter. The elaborations of the second parameter are the same as those in the foregoing embodiments and are not repeated herein. The implementation of this embodiment is also similar to that in the foregoing embodiments and is not described again herein. The difference lies in that replay attack can be further prevented by introducing the second parameter. That is, with a variable introduced by the second parameter, the first network element can perform verification with aid of the variable, thereby obtaining the service data in addition to determining that the first device is a valid device.

In some possible embodiments, the first device generates the third authentication information by using a sixth calculation method, and the first key is a shared key (K) or an anonymity key (AK). The first network element can perform the following operations. The first network element sends a sixth message to the second network element, where the sixth message carries the third authentication information. The first network element receives a seventh message from the second network element, where the seventh message carries a first authentication result.

In this embodiment, the third authentication information is calculated based on a shared key or an anonymity key, but the first network element is unable to obtain the shared key and thus unable to calculate the anonymity key. Therefore, the first network element needs to send the third authentication information to the second network element for authentication, to obtain an authentication result from the second network element.

Accordingly, the second network element can perform the following operations. The second network element receives the sixth message from the first network element, where the sixth message carries the third authentication information. The second network element sends the seventh message to the first network element, where the seventh message carries the first authentication result.

In some embodiments, the method includes the following. The second network element calculates fifth authentication information based on a third key and a first parameter, where the third key is related to the shared key. The second network element verifies the third authentication information based on the fifth authentication information to obtain the first authentication result.

The second network element calculates the fifth authentication information based on the third key and the first parameter as follows. The second network element calculates the fifth authentication information based on the third key, the first parameter, and a second parameter.

The first parameter and the second parameter are the same as those in the foregoing embodiments, and the method for calculating the fifth authentication information by the second network element shall correspond to the method for calculating the third authentication information by the first device in the foregoing embodiments. It should be noted that, if the second random number in the second parameter is the same as the first random number, the second network element can use the first random number directly as the second random number in the second parameter, and then the second network element calculates the fifth authentication information. If the second random number in the second parameter is different from the first random number, then the second message further includes the second random number, and the sixth message further carries the second random number. Accordingly, the second network element can directly use the second random number carried in the sixth message as one of the second parameters, and then the second network element calculates the fifth authentication information.

The implementation of calculating the fifth authentication information by the second network element is the same as that of calculating the fifth authentication information by the first network element in the foregoing embodiments. The only difference lies in that in this embodiment, the second network element uses the shared key or the anonymity key as the third key. Therefore, no detailed elaboration is given again herein.

In some embodiments, the second message further includes ciphertext data, the sixth message further carries the ciphertext data, and the seventh message further carries message data, where the message data is obtained by decrypting the ciphertext data.

The second network element calculates the fifth authentication information based on the third key and the first parameter as follows. The second network element calculates message data and the fifth authentication information based on the third key and the ciphertext data, where the message data includes service data or an entire message, and the entire message contains the service data and the first parameter. The second network element verifies the third authentication information based on the fifth authentication information to obtain the first authentication result as follows. If the fifth authentication information is identical to the third authentication information, the second network element stores the message data, where the first authentication result obtained by the second network element indicates successful authentication.

The second network element calculates the message data and the fifth authentication information based on the third key and the ciphertext data as follows. The second network element calculates the message data and the fifth authentication information based on the third key, the ciphertext data, and a second parameter. In this embodiment, the second network element still uses the sixth calculation method, which is the same as the implementation of calculating the fifth authentication information and obtaining the message data by the first network element in the foregoing embodiments. The difference only lies in that the second network element uses an anonymity key or a shared key as the third key. Therefore, no detailed elaboration is given again herein.

In some possible implementations, the first device generates the third authentication information based on a first integrity key and/or generates the ciphertext data based on an encryption key, and uses the second key, namely *K_{AF},* as the first key during implementation. Accordingly, after the second message is received, the first network element can perform authentication based on an integrity protection mechanism and/or an encryption mechanism.

The method includes the following. The first network element calculates a second integrity key based on the third key. The first network element calculates the fifth authentication information based on the second integrity key. The first network element verifies the third authentication information based on the fifth authentication information. The third key is also the fourth key described above, that is, the fourth key is used as the third key.

The first network element can calculate the second integrity key based on the third key as follows. The first network element calculates the second integrity key based on the third key and an eighth parameter by using a seventh calculation method. The seventh calculation method is the same as that in the foregoing embodiments and is not described again herein. The eighth parameter can include at least one of: an integrity protection algorithm identifier, the length of the integrity protection algorithm identifier, a fifth specified value, an identifier of the second integrity key, the length of the identifier of the second integrity key, the first random number, or the length of the first random number. The eighth parameter is different from the fifth parameter in the foregoing embodiments in that the eighth parameter includes the identifier and length of the second integrity key. In this embodiment, the second integrity key has the same function and type as the first integrity key in the foregoing embodiments, which are both integrity keys or integrity protection keys. The second integrity key shall be theoretically identical to the first integrity key in the foregoing embodiments, or the second integrity key and the first integrity key are a key pair. The first integrity key can be represented as *K_{IK-AIoT},* and the second integrity key can also be represented as *K_{IK-AIoT},* or the second integrity key can be represented as *K'_{IK-AIoT}.* The specific algorithm for integrity protection and/or integrity verification is not limited in embodiments.

Furthermore, the specific method and the type of parameter(s) used for the first network element to calculate the second integrity key shall be the same as those used for the first device to calculate the first integrity key, and therefore are not described again herein.

The first network element can verify the third authentication information based on the fifth authentication information as follows. The first network element determines that verification passed if the fifth authentication information is identical to the third authentication information; otherwise, the first network element determines that verification failed.

In some embodiments, the second message further includes ciphertext data, and the method includes the following. The first network element calculates a second encryption key based on the third key. The first network element calculates service data based on the second encryption key and the ciphertext data.

Specifically, the method for the first network element to calculate the second encryption key based on the third key can correspond to the method for the first device to calculate the first encryption key based on the first key in the foregoing embodiments. For example, the first network element calculates the second encryption key based on the third key and a ninth parameter by using an eighth calculation method. The ninth parameter can include at least one of: an encryption algorithm identifier, the length of the encryption algorithm identifier, a fourth specified value, an identifier of the second encryption key, the length of the identifier of the second encryption key, the first random number, or the length of the first random number. The eighth calculation method is the same as that in the foregoing embodiments and is not described again herein.

The ninth parameter corresponds to the sixth parameter in the foregoing embodiments in terms of content. The difference between the ninth parameter and the sixth parameter in the foregoing embodiments is that the ninth parameter includes the identifier and length of the second encryption key.

In this embodiment, the second encryption key has the same function and type as the first encryption key in the foregoing embodiments, which are both encryption keys or confidentiality keys. The second encryption key shall be theoretically identical to the first encryption key, or the second encryption key and the first encryption key are a key pair. For example, both the first encryption key and the second encryption key can be represented as *K_{CK-AIoT},* or the second encryption key can be represented as *K'_{CK-AIoT}* in order for differentiation.

As explained in the foregoing embodiments, the identifier of the second encryption key can be an identifier of the type of the second encryption key. Since the second encryption key is of the same type as the first encryption key, the identifier of the second encryption key shall be theoretically the same as that of the first encryption key, where each can be an identifier of the type of an encryption key, for example, 0x00.

In addition, the specific method and the type of parameter(s) used for the first network element to calculate the second encryption key shall be the same as those used for the first device to calculate the first encryption key, and therefore are not described again herein.

The first network element can calculate service data based on the second encryption key and the ciphertext data as follows. The first network element decrypts the ciphertext data based on the second encryption key, to obtain the service data. Here, the method for decryption shall correspond to the method for encryption by the first device. The algorithm or method for encryption and corresponding method for decryption are not exhaustively enumerated or limited in embodiments.

In this embodiment, the first network element can calculate the fifth authentication information based on the second integrity key as follows. The first network element calculates the ciphertext data based on the second integrity key to obtain the fifth authentication information. Here, the calculation method for obtaining the fifth authentication information can correspond to or be the same as the integrity algorithm or integrity calculation function used by the first device, which is not limited in embodiments. The integrity check information can refer to a verification code for checking message integrity. The method for the first network element to verify the third authentication information based on the fifth authentication information is the same as that in the foregoing embodiments and is not described again herein.

In some embodiments, the second message further includes fourth authentication information, and the method further includes the following. The first network element sends a fourth message to the second network element, where the fourth message carries the fourth authentication information. The first network element receives a fifth message from the second network element, where the fifth message carries a second authentication result.

In this embodiment, the fourth authentication information is calculated based on the shared key, but the first network element is unable to obtain the shared key. Therefore, the first network element needs to send the fourth authentication information to the second network element for authentication, to obtain an authentication result from the second network element.

The second network element can perform the following operations. The second network element receives the fourth message from the first network element, where the fourth message carries the fourth authentication information. The second network element sends the fifth message to the first network element, where the fifth message carries the second authentication result.

The method further includes the following. The second network element calculates sixth authentication information based on the shared key, a second intermediate response, and the first random number, where the second intermediate response is calculated based on the shared key and the first random number. The second network element verifies the fourth authentication information based on the sixth authentication information to obtain the second authentication result.

The second intermediate response corresponds to the first intermediate response in the foregoing embodiments. For example, the second network element can calculate the second intermediate response based on the shared key and the first random number specifically as follows. The second network element calculates the second intermediate response based on the shared key and the first random number by using a ninth calculation method. The ninth calculation method is the same as that in the foregoing embodiments. The second intermediate response can be a second expected response (XRES). Exemplarily, the second intermediate response can be directly represented as *XRES,* or can be represented as a second intermediate XRES, or can be represented as a second XRES, or can be represented as *XRES1.* The method for the second network element to calculate the second intermediate response shall be the same as the method for the first device to calculate the first intermediate response, and therefore is not described again herein.

The fifth authentication information can be an expected response. Exemplarily, the fifth authentication information can be represented as *XRES*,* or can be represented as *XRES2,* etc., as long as the fifth authentication information and the second intermediate response are distinguished through different forms of representation, they shall fall within the protection scope of embodiments.

The second network element can calculate the sixth authentication information based on the shared key, the second intermediate response, and the first random number as follows. The second network element calculates the sixth authentication information based on the shared key, the second intermediate response, the first random number, and a tenth parameter by using a tenth calculation method. The tenth calculation method is the same as that in the foregoing embodiments and is not described again herein. The tenth parameter corresponds to the seventh parameter in the foregoing embodiments, but compared with the foregoing embodiments, the difference lies that the tenth parameter can include the length of the second intermediate response. The implementation of calculating the sixth authentication information by the second network element shall be the same as the implementation of calculating the fourth authentication information by the first device in the foregoing embodiments, and is not described again herein.

The second network element can verify the fourth authentication information based on the sixth authentication information to obtain the second authentication result as follows. If the fourth authentication information is identical to the sixth authentication information, the second authentication result indicates that authentication of the first device succeeds; and/or if the fourth authentication information is different from the sixth authentication information, the second authentication result indicates that authentication of the first device failed.

If the fifth message is received and the second authentication result in the fifth message indicates that authentication of the first device succeeds, the first network element can perform at least one of: calculating the fifth authentication information, authenticating the third authentication information, or decrypting the ciphertext data. Alternatively, after performing at least one of calculating the fifth authentication information, authenticating the third authentication information, or decrypting the ciphertext data, the first network element can send the fourth message until the fifth message is received; and if the second authentication result in the fifth message indicates that authentication of the first device succeeds, the first network element stores the decrypted service data and confirms completion of authentication of the first device.

In some examples, the method can further include the following. If the fifth message is received and the second authentication result in the fifth message indicates that authentication of the first device failed, the first network element rejects the second message. Here, the second message can be rejected as follows. The first network element sends to the first device a rejection response for the second message, and then terminates the procedure, where the reason for rejection carried in the rejection response indicates that authentication of the first device failed. Alternatively, the first network element rejects to respond to the second message and terminates the procedure.

The foregoing embodiments describe in detail implementations for the case where the first device accesses a mobile communication network (e.g., a 5G architecture), the second device is specifically an access-network device or a terminal device, the first network element is an AF or a core-network device, and the second network element can be another core-network device.

In some possible implementations, the first device accesses a WLAN. In this implementation, the first device can perform exchange with the first network element, where the first network element can be a gateway in the WLAN. In addition, in this implementation, the shared key is shared between the first device and the first network element.

In some embodiments, the first device can proactively initiate authentication.

In this case, the first device can perform the following operations. The first device sends a third message, where the third message is used for requesting authentication and carries the identifier of the first device. Specifically, the first device can send the third message as follows. The first device sends the third message to the first network element. Accordingly, the first network element can receive the third message as follows. The first network element receives the third message from the first device.

In some embodiments, a wake-up signal can be used to trigger the first device to perform authentication.

Specifically, before the first device sends the third message, the method can further include the following. The first device receives a wake-up signal. The wake-up signal can be sent by the first network element. That is, before the first network element receives the third message, the method can further include the following. The first network element sends the wake-up signal. The device for sending the wake-up signal is not limited or exhaustively enumerated in embodiments. The elaborations of the function and other names of the wake-up signal are the same as those in the foregoing embodiments and are not repeated herein. In this embodiment, the elaborations of sending the third message by the first device are the same as those in the foregoing embodiments and are not repeated herein.

Through various ways of initiating authentication described above, the first network element can at least obtain the identifier of the first device, and then the first network element can proceed to subsequent operations.

In some possible implementations, the first network element performs operations of generating the first random number, generating the encrypted sequence number, generating the fourth key, and generating the first authentication information.

In some embodiments, the method further includes the following. The first network element calculates an anonymity key based on the shared key. The first network element encrypts a sequence number based on the anonymity key, to obtain the encrypted sequence number. The implementation of calculating the anonymity key, calculating the encrypted the sequence number, and obtaining the sequence number by the first network element is similar to that of the second network element in the foregoing embodiments, and the only difference lies in that in this embodiment, the first network element is a gateway and the above operations can be performed by the first network element, and therefore are not described again herein.

In some embodiments, the method further includes the following. The first network element calculates the first authentication information based on the sequence number, the shared key, and the first random number. The implementation of calculating the first authentication information by the first network element is the same as that of calculating the first authentication information by the second network element in the foregoing embodiments. The only difference lies that in this embodiment, the shared key is shared between the first network element and the first device, and therefore the above operations are performed by the first network element. Therefore, no detailed elaboration is given again herein.

In some embodiments, the first network element calculates the first authentication information based on the sequence number, the shared key, and the first random number as follows. The first network element calculates the fourth key based on the sequence number and the shared key. The first network element calculates the first authentication information based on the fourth key and the first random number. The implementation of calculating the fourth key based on the sequence number and the shared key and then calculating the first authentication information based on the fourth key by the first network element is the same as that of calculating the fourth key based on the sequence number and the shared key and then calculating the first authentication information based on the fourth key by the second network element in the foregoing embodiments. Since the shared key is shared between the first network element and the first device in this embodiment, the above operations are performed by the first network element, and therefore are not described again herein.

In some embodiments, the first network element calculates the first authentication information based on the sequence number, the shared key, and the first random number as follows. The first network element calculates the fourth key based on the sequence number, the shared key, and a third parameter. The first network element calculates the first authentication information based on the fourth key and the first random number. The implementation of calculating the fourth key and then calculating the first authentication information based on the fourth key by the first network element is the same as that of calculating the fourth key and then calculating the first authentication information based on the fourth key by the second network element in the foregoing embodiments. Since the shared key is shared between the first network element and the first device in this embodiment, the above operations are performed by the first network element, and therefore are not described again herein.

After completing the above operations, the first network element can obtain all the content of the encrypted sequence number, the first random number, the first authentication information, and the fourth key. Then, the first network element can store the fourth key locally and proceed to subsequent message transmission operations.

In some possible embodiments, the first network element sends a first message as follows. The first network element sends the first message to the first device. The first device receives the first message as follows. The first device receives the first message from the first network element.

After the first message is received, the first device firstly needs to generate second authentication information. If the second authentication information is identical to the first authentication information, the first device further performs the foregoing operations of calculating the second key and calculating the third authentication information, etc., which are not described again herein.

In this embodiment, the first device sends the second message as follows. The first device sends the second message to the first network element. The first network element receives the second message as follows. The first network element receives the second message from the first device.

In some possible implementations, the first device generates the third authentication information by using a sixth calculation method, and the first key used can be any one of: a shared key, an anonymity key, or a second key. Accordingly, after the second message is received, the first network element can authenticate the third authentication information carried in the second message by using the sixth calculation method. The sixth calculation method can be an ASCON-AEAD algorithm.

It should be noted that, compared with the foregoing embodiments, the difference lies that in this implementation, the third key can be any one of: a shared key, an anonymity key, or the fourth key; and the third key needs to match the first key. For example, if the first device uses the shared key as the first key, then the first network element needs to use the shared key as the third key; if the first device uses the second key (i.e., *K_{gate}* calculated by the first device) as the first key, then the first network element needs to use the fourth key (i.e., *K_{gate}* calculated by the first network element) as the third key.

In addition, it should be further noted that, since this implementation mainly involves exchange between the first device and the first network element, the first parameter is different from that in the foregoing embodiments in that the first parameter this implementation does not need to include the identifier of the second network element and the identifier of the second device. That is, the first parameter can include at least one of: the identifier of the first device, the service type indicator, or the identifier of the first network element.

The implementation of calculating the fifth authentication information based on the third key and verifying the third authentication information based on the fifth authentication information by the first network element, as well as the elaborations of the sixth calculation method, are the same as those in the foregoing embodiments, and therefore are not described again herein.

In some possible implementations, the first device generates the third authentication information based on the first integrity key and/or generates the ciphertext data based on the first encryption key, and the first key used can be any one of: a shared key, an anonymity key, or a second key. Accordingly, after the second message is received, the first network element can perform authentication based on a corresponding integrity protection mechanism and/or encryption mechanism.

In this implementation, the implementation of calculating the second integrity key based on the third key by the first network element, calculating the fifth authentication information based on the second integrity key by the first network element, and verifying the third authentication information based on the fifth authentication information by the first network element, as well as the implementation of calculating a second encryption key based on the third key and calculating service data based on the second encryption key and the ciphertext data by the first network element when the second message further includes the ciphertext data, are all the same as those in the foregoing embodiments. The only difference lies that the third key is a key type that matches the first key and can be any one of: a shared key, an anonymity key, or a fourth key, which is not described again herein.

In this implementation, if the first device has further sent the fourth authentication information, authentication is still performed by the first network element. The second message further includes the fourth authentication information, and the method further includes the following. The first network element calculates sixth authentication information based on the shared key, a second intermediate response, and the first random number, where the second intermediate response is calculated based on the shared key and the first random number. The first network element verifies the fourth authentication information based on the sixth authentication information. The method for calculating the second intermediate response is the same as that for calculating the second intermediate response by the second network element in the foregoing embodiments and is not described again herein, the method for calculating the sixth authentication information is also the same as that of the second network element, and elaborations of verifying the fourth authentication information based on the sixth authentication information is the same as that in the foregoing embodiments, which are not described again herein.

After the first network element verifies the fourth authentication information based on the sixth authentication information, if the verification result indicates successful authentication, the first network element can perform the foregoing operations of calculating the integrity key and/or the encryption key, which have been detailed in the foregoing embodiments and is not described again herein.

In the following embodiments, for ease of illustration, the anonymity key is represented as *AK,* the shared key is specifically a root key (represented as K), the second key and the fourth key are both represented as *K_{AF}* or *K_{gate},* the first encryption key and the second encryption key are both represented as *K_{CK-AloT},* and the first integrity key and the second integrity key are both represented as *K_{IK-AloT}.* The disclosure will be elaborated below with reference to embodiments in conjunction with the accompanying drawings.

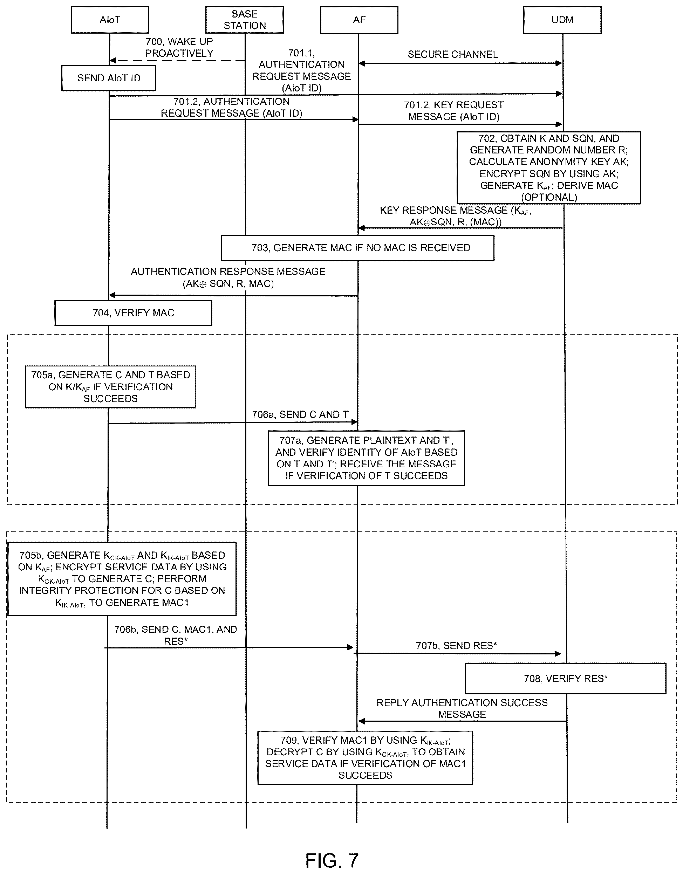

FIG. 7 is a flowchart illustrating implementation of an authentication method according to the disclosure. In this embodiment, the first device is a zero-power terminal (AloT), the first network element includes an AF, the second network element is a UDM, the second device is a base station, and *K* and an identifier of the zero-power terminal (AloT ID) is shared between the AIoT and the UDM. In addition, a secure channel is established between the AF and the UDM. In addition to the AF, the first network element can also include any one of: an AMF, an AUSF, an HSE, a UDR, a SEAF, a dedicated network element, etc. As illustrated in FIG. 7, the authentication procedure is as follows.

Step 700, if a network side has service demand, a base station proactively wakes up an AIoT by sending a wake-up signal to the AIoT.

Step 701, the AIoT sends an authentication request message, where the authentication request message can be the third message described in the foregoing embodiments.

Specifically, any one of the following operations can be performed.

701.1, the AIoT sends an authentication request message to the base station, and the base station sends the authentication request message to a UDM. The authentication request message contains an AIoT ID.

701.2, the AIoT sends an authentication request message to the base station, and the base station sends the authentication request message to an AF, where the authentication request message contains an AIoT ID. After the message is received, the AF sends a key request message to a UDM, where the key request message contains the AIoT ID.

The foregoing Step 700 is an optional step. In the scenario where the base station proactively wakes up the AIoT and then the AIoT initiates an authentication request, Step 700 to Step 701 can be performed sequentially. In the scenario where the AIoT proactively initiates an authentication request, Step 701 can be performed directly without performing Step 700, and in this case, Step 701 can specifically include the following: the AIoT proactively sends the authentication request message to the base station.

Step 702, after the key request message or the authentication request message is received, the UDM can obtain a shared key *K* and a sequence number SQN, and generate a first random number R; and calculate an anonymity key AK, encrypt SQN by using *AK,* and generate a fourth key *K_{AF}.* Optionally, the UDM can further generate first authentication information *MAC.* Specifically, the following operations can be performed.

702.1, the shared key *K* and the sequence number SQN are obtained based on the AIoT ID, and the first random number R is generated.

702.2, *AK* is calculated by using a security algorithm (such as an f1/f2/f3/f4/f5 function), for example, by using an f5 function, where input parameters include the key *K* and the first random number R, etc. SQN is encrypted with AK, such as calculating AK⊕SQN, where AK⊕SQN can be used as an encrypted sequence number. Here, "⊕" denotes an XOR operation.

702.3, the fourth key *K_{AF}* is generated by using a KDF. For example, *K_{AF}* can be calculated based on at least one of the sequence number SQN, the first random number R, the AIoT ID, or *K* by using a KDF. Specifically, input parameters for the KDF can include the key K, the AIoT ID, the length of the AIoT ID, the sequence number SQN, the length of the sequence number SQN, the first random number R, the length of the first random number R, a fixed value assigned by a third party (such as FC=0x7E), etc.

702.4, the UDM can also derive the first authentication information *MAC* by using a security algorithm (such as an f1/f2/f3/f4/f5 function). For example, input parameters for the security algorithm can include at least one of: the key K, the sequence number SQN, or the first random number R. Generation of *MAC* by the UDM in 702.4 is optional. That is, the UDM can perform operations in 702.1-702.3, or the UDM can perform operations in 702.1-702.4. The foregoing operations are merely illustrative, and the order of execution of these operations is not restricted in this embodiment. Subsequently, the UDM can send a key response message to the AF, where the key response message can contain *K_{AF}, AK*⊕*SQN,* R, and *MAC,* where *MAC* is optional, that is, the key response message may or may not contain MAC.

Step 703, the AF receives the key response message. If the key response message contains *MAC,* the AF directly carries *AK*⊕*SQN,* R, and the first authentication information *MAC* in an authentication response message and forwards the authentication response message to the base station, and then the base station forwards the authentication response message to the AIoT. If the key response message does not contain *MAC,* the AF can generate MAC, carries *AK*⊕*SQN,* R, and the *MAC* generated by the AF in the authentication response message and forwards the authentication response message to the base station, and then the base station forwards the authentication response message to the AIoT. The AF generates *MAC* exemplarily as follows. The AF generates the first authentication information *MAC* by using a security algorithm (such as an f1/f2/f3/f4/f5 function) or a KDF. If the security algorithm (such as the f1/f2/f3/f4/f5 function) is used, for example, the f2 function, input parameters can include *K_{AF}* and R. If the KDF is used, the input parameters can include *K_{AF},* the first random number R, the length of the first random number R, and a fixed value assigned by a third party (such as FC=0x7E). In this step, the key response message can be the eighth message in the foregoing embodiments, and the authentication response message can be the first message in the foregoing embodiments.

Step 704, after the authentication response message is received, the AIoT can verify the first authentication information *MAC* to authenticate the network side. If the AIoT has a security function module (such as a universal integrated circuit card (UICC)), the AIoT can send *AK*⊕*SQN,* R, and *MAC* in the authentication response message to the security function module to verify *MAC.* If the AIoT does not have a security function module, the AIoT can directly verify *MAC.*

Since *MAC* may be generated by the UDM or may be generated by the AF, and the method for generating *MAC* differs in these two cases, accordingly, there are two cases regarding verification of *MAC* by the AIoT or the security function module.

704.1, if *MAC* is generated by the UDM, the AIoT or the security function module derives the anonymity key AK based on the shared key *K* by using a security algorithm (such as an f1/f2/f3/f4/f5 function). For example, *AK* can be derived from *K* by using the f5 function. Subsequently, the encrypted sequence number (e.g., *AK*⊕*SQN*) is decrypted with *AK* to obtain SQN. Calculation is performed based on at least one of the key *K,* the sequence number SQN, or the first random number R by using the security algorithm (such as the f1/f2/f3/f4/f5 function), to generate second authentication information *X-MAC. X-MAC* is compared with *MAC* to verify *MAC.* Then, a second key *K_{AF}* is derived, for example, *K_{AF}* can be calculated based on at least one of the sequence number SQN, the first random number R, the AIoT ID, or *K* by using a KDF.

704.2, if *MAC* is calculated and generated by the AF, the AIoT or the security function module derives the anonymity key *AK* based on the shared key *Kby* using a security algorithm (such as an f1/f2/f3/f4/f5 function). For example, AK can be derived from *K* by using the f5 function. Subsequently, the encrypted sequence number (e.g., *AK*⊕*SQN*) is decrypted with *AK* to obtain SQN. The second key *K_{AF}* is derived, for example, *K_{AF}* can be calculated based on at least one of the sequence number SQN, the first random number R, the AIoT ID, or *K* by using a KDF. Second authentication information *X-MAC* is generated by using a security algorithm (such as an f1/f2/f3/f4/f5 function) or a KDF. *X-MAC* is compared with *MAC* to verify *MAC.*

The methods for the AIoT or the security function module to derive AK, derive *K_{AF},* and generate the second authentication information *X-MAC* are the same as those at the network side.

In a possible example, after completing the above procedure in 704.1 or 704.2, if verification of *MAC* failed, response is rejected, and the procedure is terminated. If verification succeeds, whether SQN is within a normal range can be determined. If SQN is not within the normal range, desynchronization regarding SQN can be performed; and if *SQN* is within the normal range, proceed to Step 705a.

Step 705a, the AIoT or the security function module can generate ciphertext data (represented as C in this embodiment) and/or third authentication information (represented as *T* in this embodiment) based on a first key (such as *K_{AF}*/*K*), in order for the network side to receive service data securely and/or authenticate a terminal side. It should be noted that, in this embodiment, the second key (*K_{AF}*), the shared key *K,* or the anonymity key AK can be used as the first key; and the above calculation can be performed by using an ASCON algorithm, such as an ASCON-AEAD algorithm.

An example of generating C (the ciphertext data) and T (the third authentication information) in this step is as follows. The AIoT or the security function module calculates K and service data (i.e., the plaintext of the service data, represented as P in this embodiment) by using the lightweight cryptographic algorithm (such as the ASCON algorithm), to obtain the ciphertext data C. In addition to *K* and P, a pre-configured IV and a public second random number N can also be input, where the IV can be shared between a terminal and a server, and the second random number can be pre-configured for both parties or generated by the terminal and sent to a core network. K can be the foregoing shared key K, or can be replaced by *AK* or *K_{AF}.* The AIoT or the security function module performs calculation based on K and associated information (represented as A in this embodiment) by using the ASCON algorithm, to obtain the authentication information (T). In addition to K and A, a pre-configured IV and a public second random number *N* can also be input. The associated data (A) can include at least one of: the service data (P), the ciphertext data (C), an identifier of the first device (AloT ID), a service type indicator, an identifier of the AF (or the UDM), the first random number (R), the sequence number (SQN), or *AK.* Except those listed above, the associated data can be other information related to authentication, and all possibilities are not exhaustively enumerated in this embodiment. If authentication information for C is desired, C can be included in input data; and if T is not the authentication information for C, the associated data A can be included in the input data, where A includes associated information that needs integrity authentication and protection.

Step 706a, the AIoT sends the ciphertext data C and *T* to the base station, and the base station forwards the ciphertext data C and/or the authentication information T to the AF. In this step, C and T can be carried in the second message in the foregoing embodiments.

Step 707a, the AF generates plaintext and fifth authentication information T' based on a third key (such as *K_{AF}*), C, and *T,* and verifies an identity of the AIoT based on *T* and T'. If verification of *T* failed, the message is rejected; and if the verification of *T* succeeds, the message is received. Specifically, the AF can verify the authentication information *T* based on the third key. If the verification of *T* succeeds, it indicates that authentication of the AIoT succeeds and the identity of the AIoT is valid. If authentication succeeds, the ciphertext data C is decrypted to obtain the plaintext of the service data sent by the AIoT. If the verification of T failed, it indicates that authentication of the AIoT failed and the identity of the AIoT is invalid, and then the message is rejected. In this step, the AF can verify T by using a corresponding method of the ASCON-AEAD algorithm, and the specific operations thereof have been detailed in the foregoing embodiments, which are not described again herein.

It should be noted that, the foregoing Step 707a is applicable to the scenario where both the first key and the third key are *K_{AF}.* In another possible example, if the AIoT calculates C and T by using the ASCON-AEAD algorithm and by using K (the shared key) or *AK* (the anonymity key) as the first key, then Step 707a can be replaced by the following operations. The AF can send C and T (for example, carried in the sixth message in the foregoing embodiments) to the UDM, and the UDM performs the foregoing authentication operations based on *K* or *AK* and replies an authentication result (for example, carried in the seventh message in the foregoing embodiments) to the AF.

In a possible example, after completing the above procedure in 704.1 or 704.2, if verification of *MAC* failed, response is rejected, and the procedure is terminated. If verification succeeds, whether SQN is within a normal range can be determined. If SQN is not within the normal range, desynchronization regarding SQN can be performed; and if *SQN* is within the normal range, proceed to Step 705b.

Step 705b, the AIoT or the security function module generates a first encryption key *K_{CK-AIoT}* and a first integrity key *K_{IK-AIoT}* based on *K_{AF}* by using a confidentiality and integrity protection algorithm, encrypts the service data by using *K_{CK-AIoT}* to generate ciphertext data C, and performs integrity protection for the ciphertext C based on *K_{IK-AIoT}* to generate third authentication information *MAC1.*

*K_{CK-AIoT}* and/or *K_{IK-AIoT}* can be obtained by the AIoT or the security function module based on at least one of *K_{AF}* or the first random number by using a KDF. Input parameters for the KDF can include *K_{AF},* an encryption algorithm identifier, the length of the encryption algorithm identifier, a fixed value assigned by a third party (such as FC=0x7E), an identifier of an output key, the length of the identifier of the output key, the first random number R, and the length of the first random number R. For example, if a confidentiality protection key *K_{CK-AIoT}* is to be output, the identifier of the output key can be set to 0x00; if the integrity key *K_{IK-AIoT}* is to be output, the identifier of the output key can be set to 0x01.

In addition, the AIoT or the security function module can further generate fourth authentication information RES*. For example, the AIoT generates *RES** by using a KDF, where an input parameter includes at least one of: a root key *K,* the first random number R, the length of the first random number R, *RES* (i.e., a first intermediate response), the length of RES, or a fixed value assigned by a third party (such as FC=0x6B). RES can be generated by the AIoT or the security function module by using a security algorithm (such as an f1/f2/f3/f4/f5 function). For example, RES is generated by using the f2 function, where input parameters include the root key *K* and the first random number R.

Step 706b, the AIoT sends the ciphertext data C, the third authentication information *MAC1,* and the fourth authentication information RES* to the base station, and the base station forwards the ciphertext data C, the third authentication information MAC1, and the fourth authentication information RES* to the AF. In this step, the ciphertext data C, the third authentication information *MAC1,* and the fourth authentication information RES* are carried in the second message in the foregoing embodiments.

Step 707b, the AF forwards RES* to the UDM. RES* can be carried in the fourth message in the foregoing embodiments.

Step 708, the UDM verifies RES*. For example, the UDM generates sixth authentication information *X-RES** in the same manner as the terminal side, and compares *X-RES**with RES* to verify RES*. If verification succeeds, the UDM replies an authentication success message to the AF. If verification of RES* failed, the message is rejected. The authentication success message can be the fifth message in the foregoing embodiments.

Step 709, after the authentication success message is received, the AF verifies *MAC1* by using a second integrity key *K_{IK-AIoT}.* If verification of *MAC1* succeeds, the AF decrypts the ciphertext C by using a second confidentiality protection key *K_{CK-AIoT},* to obtain the service data. If verification of *MAC1* failed, the message is rejected.

For FIG. 7, it should be further noted that, in addition to the AF illustrated in FIG. 7, the first network element can further include at least one of: an AMF, an AUSF, an HSE, a UDR, an SMF, an NEF, a key management network element, a BSF, an AAnF, a SEAF, or a core-network dedicated network element. For example, in Step 701.2, the base station sends the authentication request message to the AF, and then the key response message can be sent to at least one of: the AMF, the AUSF, the HSE, the UDR, the SMF, the NEF, the key management network element, the BSF, the AAnF, the SEAF, or the core-network dedicated network element. For example, if the key response message is received by the AMF (or the SMF), then Step 703 can be performed by the AMF (or the SMF). The operations performed by the AF in the steps following Step 703 in FIG. 7 can all be performed by the AMF (or the SMF), which are not described again herein.

Alternatively, the first network element in FIG. 7 (i.e., the AF in FIG. 7) can be replaced by at least one of an AMF, an AUSF, an HSE, a UDR, an SMF, an NEF, a key management network element, a BSF, an AAnF, a SEAF, or a core-network dedicated network element. The second network element (i.e., the UDM in FIG. 7) can also be replaced by the AF, that is, the shared key is shared between the AIoT and the AF.

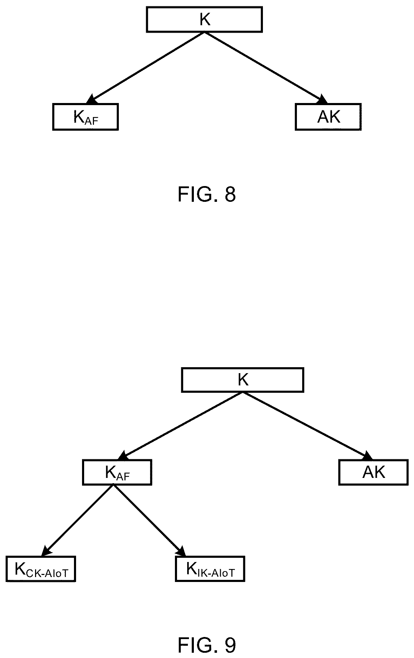

FIG. 8 is a schematic structural diagram illustrating a key hierarchy for an authentication method according to the disclosure. The key hierarchy in FIG. 8 illustrates keys derived in Embodiment I. As illustrated in FIG. 8, the specific content related to the hierarchical keys is as follows:

K: a root key shared between an AIoT and a UDM, with a key length of at least 128 bits. K is used to generate next-level keys *K_{AF}* and AK and ensure authenticity of an identity.

*K_{AF}:* a security key between an AIoT and a network side, with a key length of at least 128 bits. *K_{AF}* is used for implementing mutual authentication between the AIoT and the network side, to ensure confidentiality and integrity protection for signaling/service data and realize secure transmission of signaling/service data. This key can be generated by using a KDF, where an input parameter includes at least one of: a key K, an AIoT ID, the length of the AIoT ID, a sequence number SQN, the length of the sequence number SQN, a first random number R, the length of first random number R, and a fixed value assigned by a third party (e.g., FC=0x7E).

*AK:* with a key length of 48 bits. AK can be generated by using a security algorithm (such as an f1/f2/f3/f4/f5 function), for example, derived by using the f5 algorithm, where input parameters include a key *K* and the first random number R. *AK* is used to ensure anonymity of the first random number and prevent replay attack.

FIG. 9 is a schematic structural diagram illustrating another key hierarchy for an authentication method according to the disclosure. Compared with FIG. 8, in the architecture illustrated in FIG. 9, a confidentiality key and an integrity key are added on the basis of K, *AK,* and *K_{AF}. K_{CK-AIoT}* is a confidentiality protection key between an AIoT and a network side, with a key length of at least 128 bits. *K_{CK-AIoT}* is used to implement confidentiality protection for signaling/service data. If the AIoT and the network side adopt a traditional encryption algorithm, both the AIoT and the network side need to generate this key. This key is generated by using a KDF, where input parameters include *K_{AF},* an encryption algorithm identifier, the length of the encryption algorithm identifier, a fixed value assigned by a third party (e.g., FC=0x7E), an identifier of an output key (e.g., if the confidentiality key *K_{CK-AIoT}* is to be output, an identifier to be input is 0x00; and if the integrity key *K_{IK-AIoT}* is to be output, the identifier to be input is 0x01), the length of the identifier of the output key, a first random number R, and the length of the first random number R. *K_{IK-AIoT}* is an integrity key between the AIoT and an AF, with a key length of at least 128 bits. *K_{IK-AIoT}* is used to implement authentication of AIoT by the network side and integrity protection for signaling/service data. If the AIoT and the network side adopt a traditional encryption algorithm, both the AIoT and the network side need to generate this key. This key is generated by using a KDF, where input parameters include *K_{AF},* an encryption algorithm identifier, the length of the encryption algorithm identifier, a fixed value assigned by a third party (e.g., FC=0x7E), an identifier of an output key (e.g., if the confidentiality key *K_{CK-AIoT}* is to be output, an identifier to be input is 0x00; if the integrity key *K_{IK-AIoT}* is to be output, the identifier to be input is 0x01), the length of the identifier of the output key, the first random number R, and the length of the first random number R.

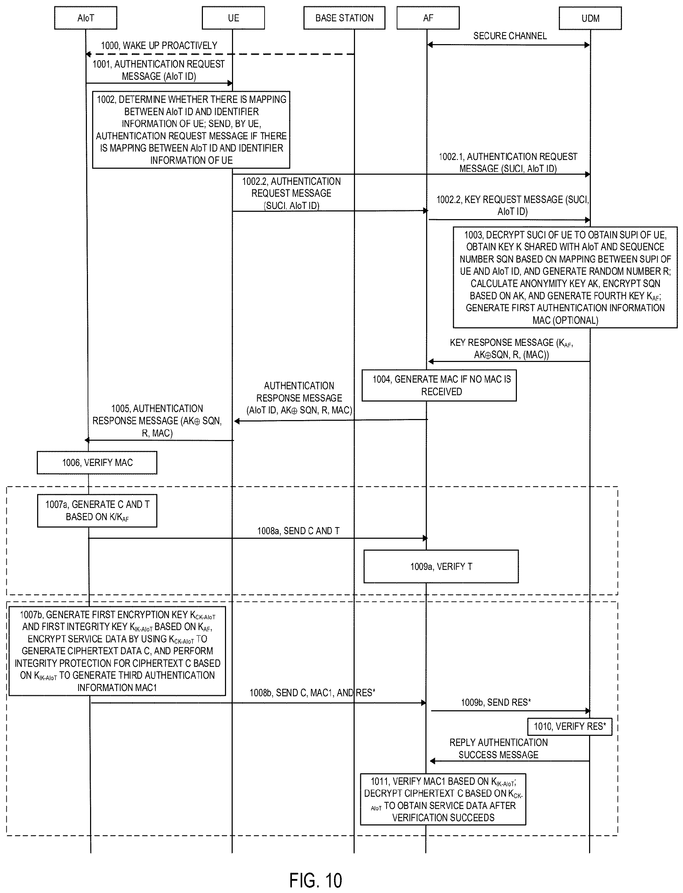

FIG. 10 is another flowchart illustrating implementation of an authentication method according to the disclosure. In this embodiment, the first device is a zero-power terminal (AloT), the first network element includes an AF, the second network element is a UDM, the second device is a UE, and K and an identifier of the zero-power terminal (AloT ID) is shared between the AIoT and the UDM. In addition, a secure channel is established between the AF and the UDM. In addition to the AF, the first network element can also include any one of: an AMF, an AUSF, an HSE, a UDR, a SEAF, a dedicated network element, etc. The UE manages a mapping between identifier information (such as SUPI or SUCI) of the UE and the AIoT ID, and the mapping is shared between the UDM and the UE.

Step 1000, if a network side has service demand, a UE and/or a base station proactively wakes up an AIoT.

Step 1001, after a wake-up signal is received, the AIoT sends an authentication request message to the UE, where the authentication request message contains an AIoT ID.

The foregoing Step 1000 is an optional step. In the scenario where the UE/the base station proactively wakes up the AIoT and then the AIoT initiates an authentication request, Step 1000~Step 1001 can be performed sequentially. In the scenario where the AIoT proactively initiates an authentication request, Step 1001 can be performed directly without performing Step 1000, and in this case, Step 1001 can specifically include the following: the AIoT proactively sends an authentication request message to the UE, where the authentication request message is the third message in the foregoing embodiments.

Step 1002, after the authentication request message is received, the UE determines whether there is a mapping between the AIoT ID and identifier information (such as SUPI or SUCI) of the UE. If there is no mapping between the AIoT ID and the identifier information (such as SUPI or SUCI) of the UE, the UE rejects the request from the AIoT and the procedure is terminated. If there is a mapping between the AIoT ID and the identifier information (such as SUPI or SUCI) of the UE, then the UE performs one of the following operations.

1002.1, the UE sends the authentication request message to the base station, and the base station forwards the authentication request message to a UDM. The authentication request message contains the AIoT ID and the SUCI of the UE, where the SUCI of the UE can be calculated based on the SUPI of the UE. The authentication request message sent by the UE to the UDM via the base station can be the second request message in the foregoing embodiments.

1002.2, the UE sends the authentication request message to the base station, and the base station forwards the authentication request message to an AF. The authentication request message contains the AIoT ID and the SUCI of the UE. After the authentication request message is received, a core-network element or function (such as AF) or application server sends a key request message to the UDM, where the key request message contains the AIoT ID and the SUCI of the UE. The authentication request message sent by the UE to the AF via the base station can be the first request message in the foregoing embodiments.

Step 1003, after the key request message or the authentication request message is received, the UDM decrypts the SUCI of the UE to obtain the SUPI of the UE, obtains a key K shared with the AIoT and a sequence number SQN based on the mapping between the SUPI of the UE and the AIoT ID, and generates a first random number R; and calculates an anonymity key AK, encrypts SQN based on *AK,* and generates a fourth key *K_{AF}.* Optionally, the UDM can further generate first authentication information *MAC.* Specifically, the following operations can be performed.

1003.1, the SUCI of the UE is decrypted to obtain the SUPI of the UE, obtain the key *K* shared with the AIoT and the sequence number SQN based on the mapping between the SUPI of the UE and the AIoT ID or obtain the key *K* shared with the AIoT and the sequence number SQN based on the SUCI of the UE and the mapping between the SUCI of the UE and the AIoT ID, and then generate the first random number R.

1003.2, *AK* is calculated by using a security algorithm (such as an f1/f2/f3/f4/f5 function), for example, by using an f5 function, where input parameters include the key *K* and the first random number R, etc. SQN is encrypted with AK, such as calculating *AK*⊕*SQN*, where *AK⊕SQN* can be used as an encrypted sequence number. Here, "⊕" denotes an XOR operation.

1003.3, a key *K_{AF}* is generated by using a KDF. For example, *K_{AF}* can be calculated based on at least one of the sequence number SQN, the first random number R, the AIoT ID, or *K* by using a KDF. Specifically, input parameters for the KDF can include the key K, the AIoT ID, the length of the AIoT ID, the sequence number SQN, the length of the sequence number SQN, the first random number R, the length of the first random number R, a fixed value assigned by a third party (such as FC=0x7E), etc.

1003.4, the UDM can also derive *MAC* by using a security algorithm (such as an f1/f2/f3/f4/f5 function). For example, input parameters for the security algorithm can include at least one of: the key *K,* the sequence number SQN, or the first random number R.

Generation of *MAC* by the UDM in 1003.4 is optional. The above operations are merely illustrative, and the order of execution of these operations is not restricted in this embodiment.

Subsequently, the UDM can send a key response message to the AF, where the key response message can contain *K_{AF}, AK*⊕*SQN,* R, and *MAC,* where *MAC* is optional, that is, the key response message may or may not contain *MAC.* In this step, the key response message can be the eighth message in the foregoing embodiments.

Step 1004, the AF receives the key response message. If the key response message contains *MAC,* the AF directly carries *AK*⊕*SQN,* R, and *MAC* in an authentication response message and forwards the authentication response message to the UE (the authentication response message can be forwarded via the base station). If the key response message does not contain *MAC,* the AF can generate *MAC,* carries *AK*⊕*SQN, R,* and the *MAC* generated by the AF in the authentication response message and sends the authentication response message to the base station, and then the base station forwards the authentication response message to the UE. The method for the AF to generates *MAC* is the same as that in the foregoing embodiments and is not described again herein. In this step, the authentication response message received by the UE can be the ninth message in the foregoing embodiments.

Step 1005, after the authentication response message is received, the UE can find a corresponding AIoT based on the AIoT ID and send the authentication response message to the AIoT, where the authentication response information contains *AK*⊕*SQN, R,* and *MAC.* The authentication response message sent by the UE can be the first message described in the foregoing embodiments.

Step 1006, after the authentication response message is received, the AIoT can verify *MAC* to authenticate the network side. If the AIoT has a security function module (such as a universal integrated circuit card (UICC)), the AIoT can send *AK*⊕*SQN,* R, and *MAC* in the authentication response message to the security function module for MAC verification. If the AIoT does not have a security function module, the AIoT can directly verify MAC.

Since in the previous steps, *MAC* may be generated by the UDM or may be generated by the core-network element or function (such as AF) or application server, and the method for generating *MAC* differs in these two cases, accordingly, there are two cases regarding verification of *MAC* by the AIoT or the security function module. Elaborations thereof are the same as those of the two cases provided in Step 704 in the foregoing embodiments and are not repeated herein.

In an example, if verification of *MAC* by the AIoT failed, the AIoT rejects response and terminates the procedure. If the verification of *MAC* succeeds, whether SQN is within a normal range can be determined. If *SQN* is not within the normal range, desynchronization regarding SQN can be performed; and if SQN is within the normal range, proceed to Step 1007a.

Step 1007a, the AIoT or the security function module can generate ciphertext data (represented as C in this embodiment) and/or third authentication information (represented as *T* in this embodiment) based on a first key (such as *K_{AF}*/*K*), and send the ciphertext data and/or the authentication information to the UE, in order for the network side to receive service data securely and/or authenticate a terminal side. In this embodiment, a second key (*K_{AF}*), a shared key *K,* or the anonymity key *AK* can be used as the first key; and the above calculation can be performed by using an ASCON algorithm, such as an ASCON-AEAD algorithm.

Step 1008a, the UE sends to the base station the ciphertext data C and/or the third authentication information T received from the AIoT, and the base station forwards C and *T* to the AF. The C and *T* sent by the AIoT can be carried in the second message in the foregoing embodiments.

Step 1009a, the AF verifies *T.* If verification of *T* succeeds, it indicates that authentication of the AIoT succeeds and the identity of the AIoT is valid. If authentication succeeds, the ciphertext data C is decrypted to obtain the plaintext of service data sent by the AIoT. If verification of *T* failed, it indicates that the authentication of the AIoT failed and the identity of the AIoT is invalid, and then the message is rejected. The elaborations of this step are similar to those of Step 707a in the foregoing example and is not repeated herein.

In another example, after Step 1006, if verification of *MAC* by the AIoT failed, response is rejected, and the procedure is terminated. If verification of *MAC* succeeds, whether SQN is within a normal range can be determined. If *SQN* is not within the normal range, desynchronization regarding SQN can be performed; and if *SQN* is within the normal range, proceed to Step 1007b.

Step 1007b, the AIoT or the security function module generates a first encryption key *K_{CK-AIoT}* and a first integrity key *K_{IK-AIoT}* based on *K_{AF}* by using a confidentiality and integrity protection algorithm, encrypts the service data by using *K_{CK-AIoT}* to generate ciphertext data C, and performs integrity protection for the ciphertext C based on *K_{IK-AIoT}* to generate third authentication information *MAC1.* The implementation of this step is the same as that of Step 705b in the foregoing embodiments and is not described again herein.

Step 1008b, the AIoT sends the ciphertext data C, the third authentication information *MAC1,* and the fourth authentication information RES* to the UE, and the UE forwards the ciphertext data C, the third authentication information MAC1, and the fourth authentication information RES* to the AF. In this step, the ciphertext data C, the third authentication information *MAC1,* and the fourth authentication information RES* are carried in the second message in the foregoing embodiments.

Step 1009b, the AF forwards RES* to the UDM. Step 1010, the UDM verifies *RES*.* If verification succeeds, the UDM replies an authentication success message to the AF. If verification of *RES** failed, the message is rejected. Step 1011, after the authentication success message is received, the AF verifies *MAC1* based on a second integrity key *K_{IK-AIoT}.* After verification succeeds, the AF decrypts the ciphertext C based on a second encryption key *K*_{*CK*-*AIoT*} to obtain the service data. The detailed explanations of the foregoing Step 1009b, Step 1010, and Step 1011 are the same as those of Step 707b to Step 709 in the foregoing embodiments and are not repeated herein.

The key derivation architecture involved in this embodiment is the same as that in Embodiment I, and reference can be made to the key hierarchy illustrated in FIG. 8 and the key hierarchy illustrated in FIG. 9, which are not described again herein.

For FIG. 10, it should be further noted that, in addition to the AF illustrated in FIG. 10, the first network element can further include at least one of: an AMF, an AUSF, an HSE, a UDR, an SMF, an NEF, a key management network element, a BSF, an AAnF, a SEAF, or a core-network dedicated network element. For example, in Step 1001.2, the AF sends the key request message, and the key response message can be sent to at least one of: the AMF, the AUSF, the HSE, the UDR, the SMF, the NEF, the key management network element, the BSF, the AAnF, the SEAF, or the core-network dedicated network element. For example, if the key response message is sent to the AMF, then the operations performed by the AF in Step 1004 and the steps following Step 1004 can all be performed by the AMF, which are not described again herein.

Alternatively, the first network element in FIG. 10 (i.e., the AF in FIG. 10) can be replaced by at least one of an AMF, an AUSF, an HSE, a UDR, an SMF, an NEF, a key management network element, a BSF, an AAnF, a SEAF, a core-network dedicated network element. The second network element (i.e., the UDM in FIG. 10) can also be replaced by the AF, that is, the shared key is shared between the AIoT and the AF.

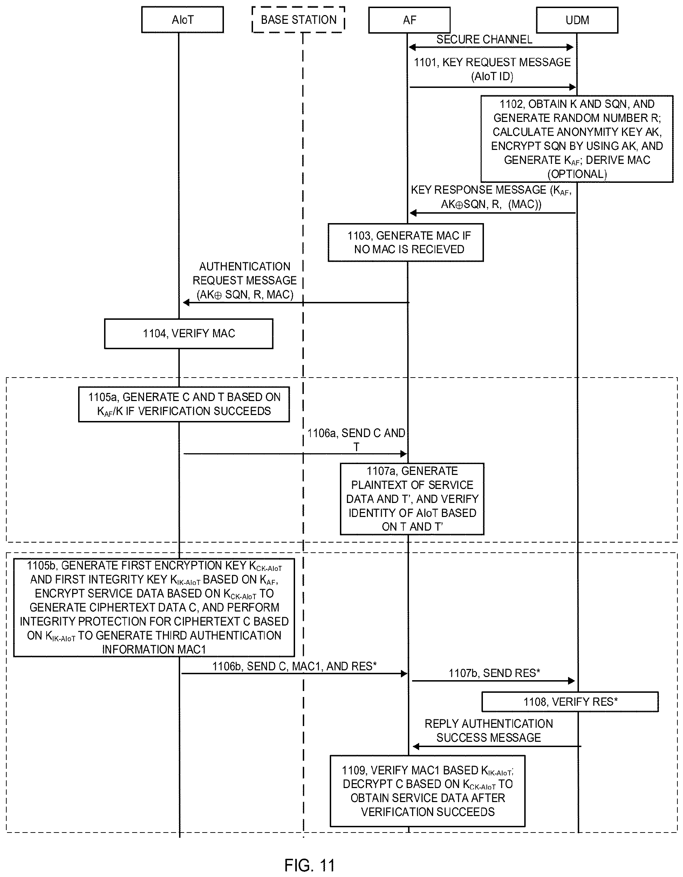

FIG. 11 is another flowchart illustrating implementation of an authentication method according to the disclosure. In this embodiment, the first device is a zero-power terminal (AloT), the first network element is an AF, the second network element is a UDM, the second device is a base station, and K and an identifier of the zero-power terminal (AloT ID) is shared between the AIoT and the UDM. In addition, a secure channel is established between the AF and the UDM. In addition to the AF, the first network element can also include any one of: an AMF, an AUSF, an HSE, a UDR, a SEAF, a dedicated network element, etc. In this embodiment, an authentication request is initiated proactively by the AF. As illustrated in FIG. 11, the authentication procedure is as follows.

Step 1101, if a network side has service demand, an AF sends a key request message to a UDM, where the key request message contains an AIoT ID.

Step 1102, after the key request message is received, the UDM can obtain a shared key K and a sequence number SQN, and generate a first random number R; and calculate an anonymity key AK, encrypt SQN by using AK, and generate a fourth key *K_{AF}.* Optionally, the UDM can further generate first authentication information MAC. The UDM sends a key response request to the AF. The specific operations of the UDM are similar to those in Step 702 in the foregoing embodiment and are not described again herein.

Step 1103, the AF receives a key response message. If the key response message contains *MAC,* the AF sends an authentication request message to a base station, and the base station forwards the authentication request message to an AIoT, where the authentication request message can contain *AK*⊕*SQN,* R, and *MAC.* If the key response message does not contain *MAC,* the AF can generate *MAC* and send an authentication request message to the base station, and the base station forwards the authentication request message to the AIoT, where the authentication request message can contain *AK*⊕*SQN,* R, and the MAC generated by the AF. The detailed elaborations of this step are the same as those of Step 703 in the foregoing embodiment and is not repeated herein.

Step 1104, after the authentication request message is received, the AIoT can verify *MAC.* The detailed elaborations of Step 1104 are also the same as those of Step 704 in the foregoing embodiment and are not repeated herein.

In an example, if verification of *MAC* failed, response is rejected, and the procedure is terminated. If verification succeeds, whether SQN is within a normal range can be determined. If *SQN* is not within the normal range, desynchronization regarding SQN can be performed; and if *SQN* is within the normal range, proceed to Step 1105a: the AIoT or a security function module can generate ciphertext data (represented as C in this embodiment) and/or third authentication information (represented as T in this embodiment) based on a first key (such as *K_{AF}*/*K*). Step 1106a, the AIoT sends the ciphertext data C and *T* to the base station, and the base station forwards the ciphertext data C and/or the authentication information T to the AF. Step 1107a, the AF generates plaintext and fifth authentication information *T'* based on a third key (such as *K_{AF}*), C, and *T,* and verifies an identity of the AIoT based on *T* and *T'.* The above Step 1105a to Step 1107a are the same as Step 705a to Step 707a in the foregoing embodiment and are not elaborated again herein.

In another example, after the AIoT performs Step 1104, if verification of *MAC* failed, response is rejected, and the procedure is terminated. If verification succeeds, whether SQN is within a normal range can be determined. If *SQN* is not within the normal range, desynchronization regarding SQN can be performed; and if *SQN* is within the normal range, proceed to Step 1105b: the AIoT or the security function module generates a first encryption key *K_{CK-AIoT}* and a first integrity key *K_{IK-AIoT}* based on *K_{AF}* by using a confidentiality and integrity protection algorithm, encrypts service data based on *K_{CK-AIoT}* to generate ciphertext data C, and performs integrity protection for the ciphertext C based on *K_{IK-AIoT}* to generate third authentication information *MAC1.* Step 1106b, the AIoT sends the ciphertext data C, the third authentication information *MAC1,* and fourth authentication information *RES** to the base station, and the base station forwards the ciphertext data C, the third authentication information *MAC1,* and the fourth authentication information RES* to the AF. Step 1107b, the AF forwards RES* to the UDM. Step 1108, the UDM verifies RES*. If verification succeeds, the UDM replies an authentication success message. If verification of RES* failed, the message is rejected. Step 1109, after the authentication success message is received, the AF verifies *MAC1* based a second integrity key *K_{IK-AIoT}.* After verification succeeds, the ciphertext data C is decrypted based on a second encryption key *K_{CK-AIoT}* to obtain service data. The above Step 1105b to Step 1109 are the same as Step 705b to Step 709 in the foregoing embodiment and are not elaborated again herein.

For FIG. 11, it should be further noted that, in addition to the AF illustrated in FIG. 11, the first network element can further include at least one of: an AMF, an AUSF, an HSE, a UDR, an SMF, an NEF, a key management network element, a BSF, an AAnF, a SEAF, or a core-network dedicated network element. For example, in Step 1101, the AF sends the key request message, and then the key response message is received by at least one of: the AMF, the AUSF, the HSE, the UDR, the SMF, the NEF, the key management network element, the BSF, the AAnF, the SEAF, or the core-network dedicated network element. For example, if the key response message is received by the AMF, then the operations in Step 1103 and the steps following Step 1103 are all performed by the AMF instead of the AF in FIG. 11, which are not described again herein.

Alternatively, the first network element in FIG. 11 (i.e., the AF in FIG. 11) can be replaced by at least one of an AMF, an AUSF, an HSE, a UDR, an SMF, an NEF, a key management network element, a BSF, an AAnF, a SEAF, or a core-network dedicated network element. The second network element (i.e., the UDM in FIG. 11) can also be replaced by the AF, that is, the shared key is shared between the AIoT and the AF.

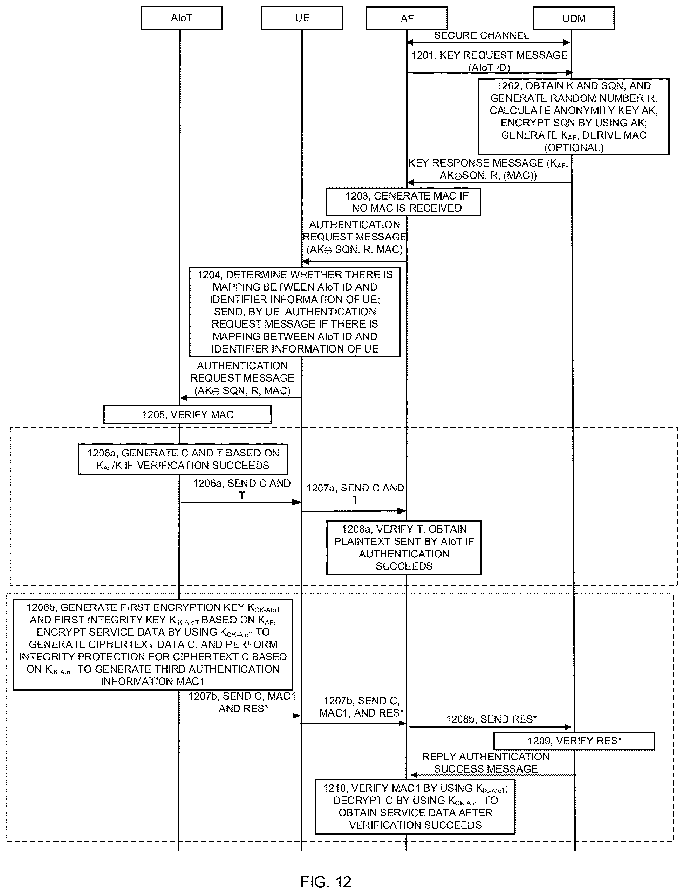

FIG. 12 is another flowchart illustrating implementation of an authentication method according to the disclosure. In this embodiment, the first device is a zero-power terminal (AloT), the first network element is an AF, the second network element is a UDM, the second device is a UE, and K and an identifier of the zero-power terminal (AloT ID) is shared between the AIoT and the UDM. In addition, a secure channel is established between the AF and the UDM. In addition to the AF, the first network element can also include any one of: an AMF, an AUSF, an HSE, a UDR, a SEAF, a dedicated network element, etc. The UE manages a mapping between identifier information (such as SUPI or SUCI) of the UE and the AIoT ID. In this embodiment, an authentication request is initiated proactively by a core-network element or function (such as AF) or application server. As illustrated in FIG. 12, the authentication procedure is as follows.

Step 1201, if a network side has service demand, an AF proactively sends a key request message to a UDM, where the key request message contains an AIoT ID.

Step 1202, after the key request message is received, the UDM can obtain a shared key K and a sequence number SQN, and generate a first random number R; and calculates an anonymity key *AK,* encrypts SQN by using AK, and generates a fourth key *K_{AF}.* Optionally, the UDM can further generate first authentication information MAC. The UDM sends a key response request to the AF. The specific operations of the UDM are the same as those in Step 1102 in the foregoing embodiment and are not described again herein.

Step 1203, the AF receives a key response message. If the key response message contains *MAC,* the AF sends an authentication request message to a base station, and the base station forwards the authentication request message to a UE, where the authentication request message can contain *AK*⊕*SQN,* R, and *MAC.* If the key response message does not contain *MAC,* the AF generates *MAC* and sends an authentication request message to the base station, and the base station forwards the authentication request message to the UE. The method for the AF to generates *MAC* is the same as that in the foregoing embodiments and is not described again herein. This step is the same as Step 1004 in the foregoing embodiment and is not elaborated again herein.

Step 1204, after the authentication request message is received, the UE determines whether there is a mapping between the AIoT ID and identifier information (such as SUPI or SUCI) of the UE. If there is a mapping between the AIoT ID and the identifier information (such as SUPI or SUCI) of the UE, then the UE sends the authentication request message to an AIoT, where the authentication request message contains *AK*⊕*SQN,* R, and *MAC.* If there is no mapping between the AIoT ID and the identifier information (such as SUPI or SUCI) of the UE, the UE rejects response and the procedure is terminated. This authentication request message can be the first message in the foregoing embodiments.

Step 1205, after an authentication response message is received, the AIoT can verify *MAC* to authenticate the network side. The specific operations in this step are the same as those in Step 1006 in the foregoing embodiment and are not described again herein.

In an example, if verification of *MAC* failed, the AIoT rejects response and terminates the procedure. If the verification of *MAC* succeeds, whether SQN is within a normal range can be determined. If *SQN* is not within the normal range, desynchronization regarding SQN can be performed; and if *SQN* is within the normal range, proceed to Step 1206a: the AIoT or a security function module can generate ciphertext data (represented as C in this embodiment) and/or third authentication information (represented as T in this embodiment) based on a first key (such as *K_{AF}*/*K*), and send C and *T* to the UE. The C and T sent by the AIoT can be carried in the second message in the foregoing embodiments. Step 1207a, the UE sends to the AF the C and T received from the AIoT, for example, the UE forwards the C and T to the AF via the base station, in order for the network side to receive service data securely and/or authenticate a terminal side. Step 1208a, the AF verifies *T.* If verification of *T* succeeds, it indicates that authentication of the AIoT succeeds and the identity of the AIoT is valid. If authentication succeeds, the ciphertext data C is decrypted to obtain the plaintext of service data sent by the AIoT. If verification of *T* failed, it indicates that the authentication of the AIoT failed and the identity of the AIoT is invalid, and then the message is rejected. The specific operations in Step 1206a to Step 1208a are the same as those in Step 1007a to Step 1009a in the foregoing embodiment and are not described again herein.

In another example, after Step 1205, if verification of *MAC* by the AIoT failed, response is rejected, and the procedure is terminated. If verification of *MAC* succeeds, whether SQN is within a normal range can be determined. If *SQN* is not within the normal range, desynchronization regarding SQN can be performed; and if *SQN* is within the normal range, proceed to Step 1206b: the AIoT or the security function module generates a first encryption key *K_{CK-AIoT}* and a first integrity key *K_{IK-AIoT}* based on *K_{AF}* by using a confidentiality and integrity protection algorithm, encrypts service data by using *K_{CK-AIoT}* to generate ciphertext data C, and performs integrity protection for the ciphertext C based on *K_{IK-AIoT}* to generate third authentication information *MAC1.* Step 1207b, the AIoT sends the ciphertext data C, the third authentication information *MAC1,* and fourth authentication information *RES** to the UE, and the UE forwards the ciphertext data C, the third authentication information *MAC1,* and the fourth authentication information RES* to the AF. Step 1208b, the AF forwards RES* to the UDM. Step 1209, the UDM verifies RES*. If verification succeeds, the UDM replies an authentication success message. If verification of RES*failed, the message is rejected. Step 1210, after the authentication success message is received, the AF verifies *MAC1* by using a second integrity key *K_{IK-AIoT}.* After verification succeeds, the AF decrypts the ciphertext C by using a second encryption key *K_{CK-AIoT}* to obtain the service data. The detailed explanations of the foregoing Step 1206b to Step 1210 are the same as those of Step 1007b to Step 1009 in the foregoing embodiment and are not repeated herein.

For FIG. 12, it should be further noted that, in addition to the AF illustrated in FIG. 12, the first network element can further include at least one of: an AMF, an AUSF, an HSE, a UDR, an SMF, an NEF, a key management network element, a BSF, an AAnF, a SEAF, or a core-network dedicated network element. For example, in Step 1201, the AF sends the key request message, and the key response message is received by at least one of: the AMF, the AUSF, the HSE, the UDR, the SMF, the NEF, the key management network element, the BSF, the AAnF, the SEAF, or the core-network dedicated network element. For example, if the key response message is received by the AMF, then the subsequent operations are all performed by the AMF instead of the AF in FIG. 12, which are not described again in this embodiment.

Alternatively, the first network element in FIG. 12 (i.e., the AF in FIG. 12) can be replaced by at least one of an AMF, an AUSF, an HSE, a UDR, an SMF, an NEF, a key management network element, a BSF, an AAnF, a SEAF, a core-network dedicated network element. The second network element (i.e., the UDM in FIG. 12) can also be replaced by the AF, that is, the shared key is shared between the AIoT and the AF.

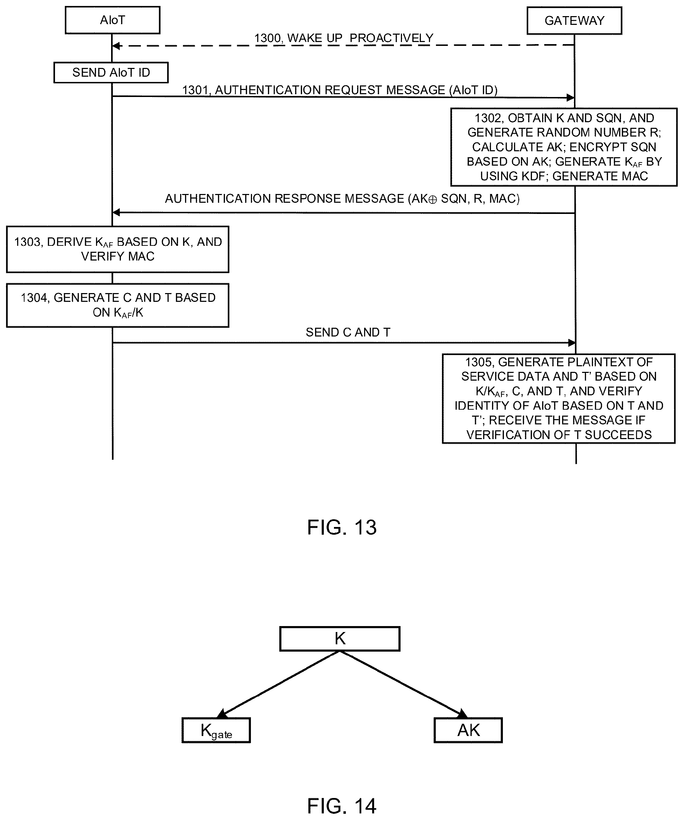

FIG. 13 is another flowchart illustrating implementation of an authentication method according to the disclosure. This embodiment is applied to a LAN, such as a WLAN. In this embodiment, the first device is a zero-power terminal (AloT), and the first network element is a gateway (LAN element). It is assumed that a secure channel is established between an AF and a LAN gateway. K and identifier information of the AIoT (AloT ID) are shared between the zero-power terminal (AIoT) shares and the LAN gateway (hereinafter, "gateway" for short). The specific steps are as follows.

Step 1300, if a gateway has service demand, the gateway proactively wakes up an AIoT by sending a wake-up message to the AIoT.

Step 1301, the AIoT sends an authentication request message to the gateway, where the authentication request message contains an AIoT ID. The authentication request message can be the third message in the foregoing embodiment.

The foregoing Step 1300 is an optional step. In the scenario where the gateway proactively wakes up the AIoT and then the AIoT initiates an authentication request, the foregoing Step 1300 to Step 1301 can be performed sequentially. In the scenario where the AIoT proactively initiates an authentication request, Step 1301 can be performed directly without performing Step 1300, and in this case, Step 1301 can specifically include the following: the AIoT proactively sends an authentication request message to the gateway.

Step 1302, after the authentication request message is received, the gateway obtains *K* and a sequence number SQN based on the AIoT ID, and generates a first random number R; and calculates *AK* by using a security algorithm (such as an f1/f2/f3/f4/f5 function), for example, by using the f5 function, where input parameters include a key K, the first random number R, etc. Subsequently, the gateway encrypts SQN based on *AK,* such as calculating *AK*⊕*SQN*, where *AK⊕SQN* can be used as an encrypted sequence number. Here, "⊕" denotes an XOR operation.

In addition, the gateway generates a key *K_{gate}* by using a KDF. For instance, *K_{gate}* can be calculated based on least one of the sequence number SQN, the first random number R, the AIoT ID, or *K* by using the KDF. Specifically, input parameters for the KDF can include the key *K,* the AIoT ID, the length of the AIoT ID, the sequence number SQN, the length of the sequence number SQN, the first random number R, the length of the first random number R, a fixed value assigned by a third party (such as FC=0x7E), etc.

Further, the gateway generates first authentication information *MAC* by using a security algorithm (such as an f1/f2/f3/f4/f5 function) or a KDF. If the security algorithm (such as the f1/f2/f3/f4/f5 function) is used, for example, the f2 function, input parameters can include *K_{gate}* and R. If the KDF is used, input parameters can include *K_{gate},* the first random number R, the length of the first random number R, and a fixed value assigned by a third party (e.g., FC=0x7E).

Finally, the gateway sends an authentication response message to the AIoT, where the authentication response message contains *AK*⊕*SQN,* the first random number R, and *MAC.* The authentication response message can be the first message in the foregoing embodiments.

Step 1303, after the authentication response message is received, the AIoT derives an anonymity key *AK* based on a shared key *K* by using a security algorithm (such as an f1/f2/f3/f4/f5 function), for example, *AK* is obtained by using the f5 algorithm, where input data is Kand R, etc. Subsequently, the AIoT decrypts *AK*⊕*SQN* based on *AKto* obtain SQN. Further, the AIoT derives a key *K_{gate}* and generates a new verification code to authenticate *MAC.* The procedures of the f5 algorithm, deriving *K_{gate},* and generating the new verification code are the same as those of the gateway.

If verification of *MAC* failed, the AIoT rejects response and terminates the procedure. If the verification succeeds, whether SQN is within a normal range is determined. If *SQN* is not within the normal range, desynchronization regarding SQN needs to be performed; and if *SQN* is within the normal range, proceed to Step 1304.

Step 1304, the AIoT or a security function module can generate ciphertext data (represented as C in this embodiment) and/or third authentication information (represented as *T* in this embodiment) based on a first key (such as *K_{AF}*/*K*), and send C and *T* to the gateway in order for the gateway to receive service data securely and/or authenticate a terminal side. The above calculation can be performed by using an ASCON algorithm, such as an ASCON-AEAD algorithm. The method for the AIoT to generate C and *T* in this step is the same as that in the foregoing embodiments, and thus is not described again herein. The AIoT can calculate C and *T* based on any one of the shared key *K,* the anonymity key *AK,* or a second key *K_{gate},* which is not described in detail again herein.

Step 1305, the gateway verifies T. Specifically, the gateway generates plaintext and fifth authentication information *T'* based on a third key (the third key can be, for example, any one of *K* or *K_{AF}*), C, and *T,* and verifies an identity of the AIoT based on *T* and *T'.* If verification of *T* failed, the message is rejected. If verification of *T* succeeds, the message is received. Further, the gateway can verify the authentication information *T* based on the third key. If verification of T succeeds, it indicates that authentication of the AIoT succeeds and the identity of the AIoT is valid. If authentication succeeds, the ciphertext data C is decrypted to obtain the plaintext of service data sent by the AIoT. If verification of *T* failed, it indicates that the authentication of the AIoT failed and the identity of the AIoT is invalid, and then the message is rejected. In this step, the AF can verify T by using a corresponding method of the ASCON-AEAD algorithm, and the specific operations have been detailed in the foregoing embodiments, which are not described again herein.

FIG. 14 is a schematic structural diagram illustrating a key hierarchy for an authentication method according to the disclosure. The key hierarchy structure in FIG. 14 illustrates keys derived in Embodiment IX. As illustrated in FIG. 14, the detailed elaborations of K and *AK* in FIG. 14 are the same as those in the foregoing embodiments and are not repeated herein. *K_{gate}* is a security key between an AIoT and a gateway, with a key length of at least 128 bits. *K_{gate}* is used for implementing mutual authentication between the AIoT and the gateway, to ensure confidentiality and integrity protection for signaling/service data and realize secure transmission of signaling/service data. This key is generated by using a KDF, where input parameters include at least one of: a key K, an AIoT ID, the length of the AIoT ID, a sequence number SQN, the length of the sequence number SQN, a first random number R, the length of the first random number R, or a fixed value assigned by a third party (e.g., FC=0x7E).

With solutions provided in the embodiments, after the first message carrying the encrypted sequence number, the first random number, and the first authentication information is received, the first device can verify the first authentication information based on the shared key. If verification of the first authentication information succeeds, the first device sends the third authentication information to the network side. In this way, the first device can realize authentication with less signaling exchange and less computation, which is possible to reduce power consumption and reduce delay while satisfying security requirements. The solutions are applicable especially for a device which is resource-constrained.

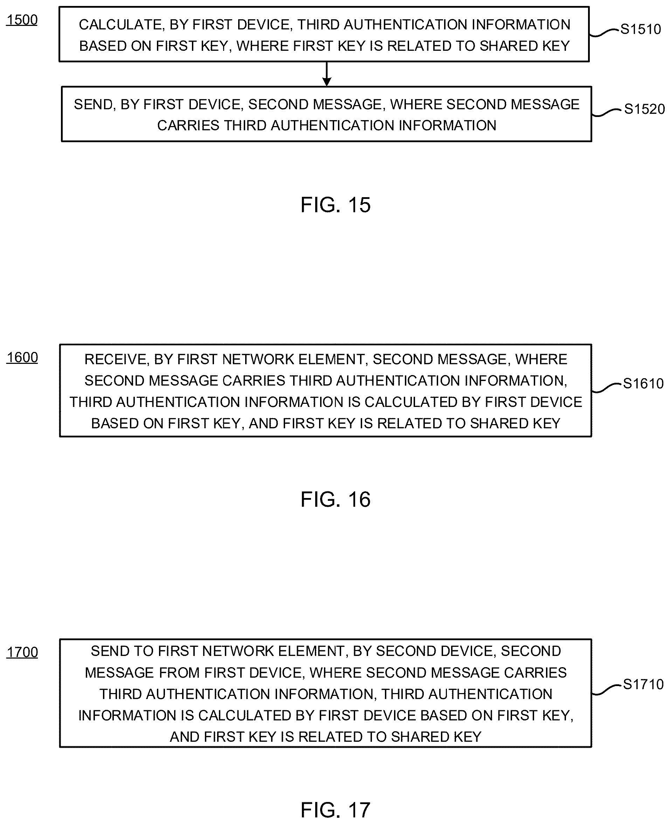

Embodiments of the disclosure provide an authentication method. FIG. 15 is a schematic flowchart of an authentication method 1500 according to embodiments of the disclosure. The method includes at least some of the following.

S1510, a first device calculates third authentication information based on a first key, where the first key is related to a shared key.

S1520, the first device sends a second message, where the second message carries the third authentication information.

Embodiments of the disclosure provide an authentication method. FIG. 16 is a schematic flowchart of an authentication method 1600 according to embodiments of the disclosure. The method includes at least some of the following.

S1610, a first network element receives a second message, where the second message carries third authentication information, the third authentication information is calculated by a first device based on a first key, and the first key is related to a shared key.

Embodiments of the disclosure provide an authentication method. FIG. 17 is a schematic flowchart of an authentication method 1700 according to embodiments of the disclosure. The method includes at least some of the following.

S1710, a second device sends to a first network element a second message from a first device, where the second message carries third authentication information, the third authentication information is calculated by a first device based on a first key, and the first key is related to a shared key.

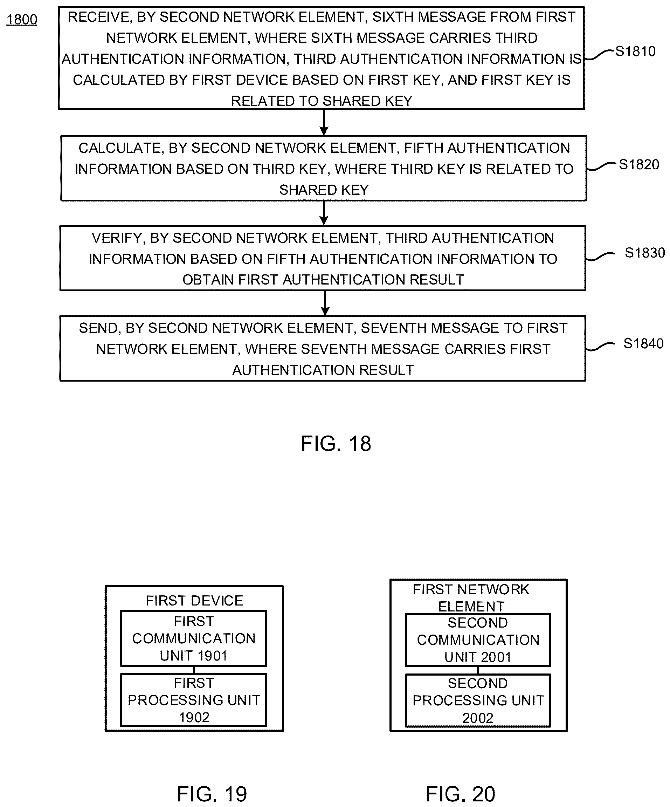

Embodiments of the disclosure provide an authentication method. FIG. 18 is a schematic flowchart of an authentication method 1800 according to embodiments of the disclosure. The method includes at least some of the following.

S1810, a second network element receives a sixth message from a first network element, where the sixth message carries third authentication information, the third authentication information is calculated by a first device based on a first key, and the first key is related to a shared key.

S1820, the second network element calculates fifth authentication information based on a third key, where the third key is related to the shared key.

S1830, the second network element verifies the third authentication information based on the fifth authentication information to obtain a first authentication result.

S1840, the second network element sends a seventh message to the first network element, where the seventh message carries the first authentication result.

In embodiments of the disclosure, the first device is a zero-power device.

In some embodiments, the first device accesses a mobile communication network, for example, the first device accesses a 5G network. In this embodiment, the first network element includes one of: an AF, an AMF, an AUSF, an HSE, a UDR, a SEAF, or a core-network dedicated network element. The second device includes one of: a terminal or an access-network device. The second network element can also be a core-network device, and the second network element is different from the first network element. The second network element can include at least one of: a UDM, an ARPF, etc.

In some embodiments, the first device accesses a WLAN. In this case, the first network element can be a gateway in the WLAN.

In some embodiments, the shared key can be any one of: a PSK, a pre-assigned key, a private network key, an application-layer key, a root key, etc. In a preferable example, the shared key can be a root key.

In some embodiments, if the first device is to access a mobile communication network, the shared key can be shared between the first device and the second network element. In some embodiments, if the first device is to access a WLAN, the shared key can be shared between the first device and the first network element.

In some possible implementations, the method further includes the following. The first device receives a first message, where the first message carries an encrypted sequence number and a first random number. After the first message is received by the first device, the method can further include the following. The first device calculates an anonymity key based on the shared key. The first device decrypts the encrypted sequence number based on the anonymity key to obtain a sequence number.

The difference between the first message in this implementation and the first message in the foregoing embodiments is that the first message in this implementation may not carry first authentication information.

The first device can calculate the anonymity key based on the shared key as follows. The first device calculates the anonymity key based on the shared key by using a first calculation method. The illustration of the first calculation method is the same as that in the foregoing embodiments, and the specific method for the first device to calculate the anonymity key is also the same as that in the foregoing embodiments, which will not be described again herein. The encrypted sequence number can be calculated based on the anonymity key and the sequence number by using a second calculation method. Accordingly, the method for the first device to decrypt the encrypted sequence number based on the anonymity key to obtain the sequence number is also the same as that in the foregoing embodiments, which will not be described again herein.

In some possible implementations, the first device can calculate the third authentication information based on the first key.

The first key can be one of: the shared key, an anonymity key, or a second key, where the anonymity key is calculated based on the shared key, and the second key is calculated based on a sequence number and the shared key. The method for calculating the second key is the same as that in the foregoing embodiments and will not be described again herein.

The first device can calculate the third authentication information based on the first key as follows. The first device can calculate the third authentication information based on the first key by using a sixth calculation method. The illustration of the sixth calculation method is the same as that in the foregoing embodiments and will not be described again herein.

In some embodiments, the first device can calculate the third authentication information based on the first key and a first parameter. Specifically, the first device can calculate the third authentication information based on the first key and the first parameter by using the sixth calculation method. The first parameter includes at least one of: an identifier of the first device, a service type indicator, an identifier of the first network element, an identifier of the second network element, or an identifier of the second device. This embodiment is applicable especially for a scenario of device identity verification. The implementation of calculating the third authentication information by the first device and the detailed elaborations of the first parameter are the same as those in the foregoing embodiments and will not be described again herein.

In some embodiments, the first device calculates the third authentication information based on the first key and the first parameter as follows. The first device can calculate the third authentication information based on the first key, the first parameter, and a second parameter. That is, the first device calculates the third authentication information based on the first key, the first parameter, and the second parameter by using the sixth calculation method. The second parameter includes at least one of: a sequence number, a second random number, or an anonymity key. This embodiment is applicable especially for a scenario of device identity verification.

In this embodiment, the second parameter is introduced. The second parameter can act as a variable parameter to prevent replay attack. The illustration of each content in the second parameter is the same as that in the foregoing embodiments and will not be described again herein. Similarly, the implementaiton of calculating the third authentication information in this embodiment is also the same as that in the foregoing embodiments and will not be described again herein. The illustration of the second random number is also the same as that in the foregoing embodiments. Specifically, the second random number can be the same as the first random number, that is, the second random number can be equal to as the first random number, for example, both the second random number and the first random number can be represented as R. Alternatively, the second random number can be a random number generated by the first device, that is, the second random number is different from the first random number. If the second random number is different from the first random number, the second message further needs to carry the second random number.

In some embodiments, the second message further includes ciphertext data, and the first device calculates the third authentication information based on the first key as follows. The first device calculates the ciphertext data and the third authentication information based on the first key and message data, where the message data includes service data or an entire message, and the entire message contains the service data and the first parameter. The implementation of calculating the ciphertext data and the third authentication information in this embodiment is the same as that in the foregoing embodiments and will not be elaborated again herein.

In some embodiments, the first device calculates the ciphertext data and the third authentication information based on the first key and the message data as follows. The first device calculates the ciphertext data and the third authentication information based on the first key, the message data, and a second parameter. The specific calculation method in this embodiment is the same as that in the foregoing embodiments and will not be elaborated again herein.

In some embodiments, the first device calculates the third authentication information based on the first key as follows. The first device calculates a first integrity key based on the first key. The first device calculates the third authentication information based on the first integrity key.

The first device can calculate the first integrity key based on the first key as follows. The first device calculates the first integrity key based on the first key and a fifth parameter by using a seventh calculation method. The illustration of the fifth parameter and the seventh calculation method, and the implementation of calculating the first integrity key are the same as those in the foregoing embodiments and will not be elaborated again herein.

In some embodiments, the first device calculates the third authentication information based on the first integrity key as follows. The first device calculates the third authentication information based on the first integrity key and the service data.

In some embodiments, the second message further includes ciphertext data, and the first device calculates the third authentication information based on the first integrity key as follows. The first device calculates a first encryption key based on the first key. The first device calculates the ciphertext data based on the first encryption key and the service data. The first device calculates the third authentication information based on the first integrity key and the ciphertext data.

The first device can calculate the first encryption key based on the first key as follows. The first device calculates the first encryption key based on the first key and a sixth parameter by using an eighth calculation method. The detailed illustration of the sixth parameter, the eighth calculation method, and calculation of the first encryption key is the same as that in the foregoing embodiments and will not be repeated herein.

In some embodiments, the second message can further carry fourth authentication information, where the fourth authentication information is used for authenticating the first device. Accordingly, the method can further include the following. The first device calculates the fourth authentication information based on the shared key, a first intermediate response, and the first random number, where the first intermediate response is calculated based on the shared key and the first random number. Here, the first device can calculate the first intermediate response based on the shared key and the first random number by using a ninth calculation method. The detailed elaboration of the ninth calculation method and the method for calculating the first intermediate response will not be repeated herein.

In some possible implementations, the first device accesses a mobile communication network. In this implementation, the shared key is shared between the first device and the second network element.

In some embodiments, the first device can proactively initiate authentication.

In this case, the first device can perform the following operations. The first device sends a third message, where the third message is used for requesting authentication, and the third message carries the identifier of the first device.

In this example, the second device can further perform the following operations. The second device receives the third message from the first device, where the third message is used for requesting authentication, and the third message carries the identifier of the first device.

The method can further include one of the following. If there is a mapping between identifier information of the first device and first identifier information of the second device, the second device sends a first request message to the first network element, where the first request message carries second identifier information of the second device and the identifier of the first device. Alternatively, if there is a mapping between the identifier information of the first device and the first identifier information of the second device, the second device sends a second request message to the second network element, where the second request message carries the second identifier information of the second device and the identifier of the first device.

The detailed illustration of the first identifier information and the second identifier information is the same as that in the foregoing embodiments and will not be elaborated again herein.

In one case, the second device sends the first request message to the first network element. In this case, after the first request message is received, the first network element can perform the following operations. The first network element sends a key request message to the second network element, where the key request message carries the identifier of the first device. Accordingly, the second network element can perform the following operations. The second network element receives the key request message from the first network element, where the key request message carries the identifier of the first device.

In another case, the second device can directly send the second request message to the second network element. Accordingly, the second network element can perform the following operations. The second network element receives the second request message from the second device, where the second request message carries the second identifier information of the second device and the identifier of the first device.

In an example, the first device can send the third message as follows. The first device sends the third message to the first network element, or the first device sends the third message to the second network element.

The first device can send the third message to the first network element as follows. The first device sends the third message to the first network element via the second device. Accordingly, the second device can perform the following operations. The second device receives the third message from the first device, and the second device forwards the third message to the first network element. Further, the first network element can receive the third message specifically as follows. The first network element receives the third message sent by the first device. After the third message is received, the first network element can perform the following operations. The first network element sends a key request message to the second network element, where the key request message carries the identifier of the first device. Accordingly, the second network element performs the following operations. The second network element receives the key request message from the first network element.

The first device can send the third message to the second network element as follows. The first device sends the third message to the first network element via the second device. Accordingly, the second device can perform the following operations. The second device receives the third message from the first device, and the second device forwards the third message to the second network element. The second network element can perform the following operations. The second network element receives the third message from the first device, where the third message is used for requesting authentication, and the third message carries the identifier of the first device.

In this example, the second device can be an access-network device, that is, the second device acts as a forwarding device to forward the third message to the first network element.

In some embodiments, a wake-up signal can be used to trigger the first device to perform authentication.

Specifically, before the first device sends the third message, the method can further include the following. The first device receives a wake-up signal. The wake-up signal can be sent by the second device, or can be sent by other devices other than the second device. The device for sending the wake-up signal is not limited or exhaustively enumerated in this embodiment. The function of the wake-up signal can include at least one of: triggering the first device to report service data, powering the first device, triggering the first device to perform authentication, etc. The wake-up signal can be referred to as any one of a trigger signal, a power-supply signal, a trigger power-supply signal, etc. in some examples, and possible names for the wake-up signal are not exhaustively enumerated in this embodiment.

The elaborations of sending the third message by the first device in this embodiment are the same as those in the foregoing embodiments and will not be repeated herein.

In some embodiments, authentication can be initiated proactively by the first network element.

Specifically, the first network element can perform the following operations. The first network element sends a key request message to the second network element, where the key request message carries the identifier of the first device. Accordingly, the second network element can perform the following operations. The second network element receives the key request message from the first network element. That is, in this embodiment, the first network element triggers authentication directly by sending the key request message, rather than firstly send the third message.

Through various methods for initiating authentication described above, the second network element can at least obtain the identifier of the first device, and then the second network element can proceed to subsequent operations.

In some possible implementations, the second network element generates the first random number, generates the encrypted sequence number, and generates the fourth key.

In some embodiments, the second network element further performs the following operations. The second network element calculates an anonymity key based on the shared key, and the second network element encrypts a sequence number based on the anonymity key, to obtain the encrypted sequence number.

Here, the implementation of calculating the anonymity key based on the shared key by the second network element shall be the same as that of calculating the anonymity key based on the shared key by the first device in the foregoing embodiments, and thus will not be elaborated again herein. The encrypted sequence number can be calculated based on the anonymity key and the sequence number using a second calculation method. The method for the second network element to calculate the encrypted sequence number is the same as that in the foregoing embodiments and will not be elaborated again herein.

In some embodiments, the second network element further performs the following operations. The second network element calculates the fourth key based on the sequence number and the shared key. The method for calculating the fourth key by the second network element shall be the same as the method for calculating the second key by the first device. That is, the second network element calculates the fourth key by using the same parameter type and calculation method as the first device. The fourth key shall be theoretically identical to the second key. The implementation thereof is the same as that in the foregoing embodiments and will not be described again herein.

After completing the above operations, the second network element can perform the following operations. The second network element sends an eighth message, where the eighth message carries the encrypted sequence number, the first random number, and the fourth key. Specifically, the second network element can send the eighth message as follows. The second network element sends the eighth message to the first network element. Accordingly, the first network element receives the eighth message from the second network element, where the eighth message carries the encrypted sequence number, the first random number, and the fourth key.

In some possible embodiments, the first network element sends the first message as follows. The first network element sends the first message to the first device. The first device receives the first message as follows. The first device receives the first message from the first network element.

The first network element can send the first message to the first device via the second device. Accordingly, the second device sends the first message as follows. The second device sends to the first device the first message from the first network element.

After the first message is received, the first device firstly needs to generate the second authentication information, and calculate the third authentication information, which will not be elaborated again herein.

In this embodiment, the first device sends the second message as follows. The first device sends the second message to the first network element. The first network element receives the second message as follows. The first network element receives the second message from the first device.

The first network element can receive the second message from the first device via the second device. The second device can perform the following operations. The second device receives the second message. The second device can receive the second message specifically as follows. The second device receives the second message from the first device. Further, the second device performs the following operations. The second device sends the second message to the first network element.

In this embodiment, the second device can be an access-network device. Alternatively, the second device can be a terminal, where the terminal only acts as a transparent forwarding node. The specific content carried in the first message in this embodiment has been detailed in the foregoing embodiments and will not be described again herein.

In some possible embodiments, the first network element can send a ninth message to the second device, where the ninth message carries the encrypted sequence number, the first random number, and the identifier of the first device. Accordingly, the second device performs the following operations. The second device receives the ninth message from the first network element, where the ninth message carries the encrypted sequence number, the first random number, and the identifier of the first device.

Further, the second device sends the first message as follows. If there is a mapping between identifier information of the first device and first identifier information of the second device, the second device sends the first message to the first device. Here, the method for determining whether there is a mapping between the identifier information of the first device and the first identifier information of the second device has been explained in the foregoing embodiments and will not be described again herein. The content that the first message may carry is the same as that in the foregoing embodiments and will not be elaborated again herein.

The first device receives the first message as follows. The first device receives the first message from the second device. The operations after the first message is received by the first device will not be described again herein. The first device sends the second message as follows. The first device sends the second message to the second device. Accordingly, the second device can further perform the following operations. The second device sends to the first network element the second message from the first device, where the second message carries third authentication information, the third authentication information is calculated by the first device based on a first key, the first key is related to the shared key. That is, the first network element can receive the second message from the second device.

In some possible implementations, the first device generates the third authentication information by using a sixth calculation method and by using the second key, namely *K_{AF},* as the first key. Accordingly, after the second message is received, the first network element can authenticate the third authentication information carried in the second message by using the sixth calculation method.

In some embodiments, the method can further include the following. The first network element calculates the fifth authentication information based on a third key and a first parameter, where the third key is related to the shared key. The first network element verifies the third authentication information based on the fifth authentication information.

The third key is a fourth key, where the fourth key is calculated based on a sequence number and the shared key. That is, the first network element uses the fourth key as the third key. The fourth key can be generated by the second network element and sent to the first network element. The method for calculating and sending the fourth key has been described in the foregoing embodiments and is not described again herein. The elaborations of the first parameter are the same as those in the foregoing embodiments and are not repeated herein.

The first network element can calculate the fifth authentication information based on the third key and the first parameter as follows. The first network element calculates the fifth authentication information based on the third key by using the sixth calculation method. The sixth calculation method is the same as that in the foregoing embodiments. The sixth calculation method used by the first network element and the sixth calculation method used by the first device are an encryption part and a decryption part that correspond to each other, which is not described in detail again herein.

The detailed elaborations of verifying the third authentication information based on the fifth authentication information by the first network element are also the same as those in the foregoing embodiments and will not be described in detail again herein.

In some embodiments, the first network element calculates the fifth authentication information based on the third key and the first parameter as follows. The first network element calculates the fifth authentication information based on the third key, the first parameter, and a second parameter(s). The elaborations of the second parameter are the same as those in the foregoing embodiments and are not repeated herein. The implementation of calculating the fifth authentication information by the first network element is the same as that in the foregoing embodiments and will not be elaborated again herein. It should be noted that, if the second random number is the same as the first random number, the first network element can use the first random number directly as the second random number in the second parameter; and if the second random number in the second parameter is different from the first random number, the second message can further carry the second random number.

In some embodiments, the second message further includes ciphertext data, and the method further includes the following. The first network element calculates message data and the fifth authentication information based on the third key and the ciphertext data, where the message data includes service data or an entire message, and the entire message contains the service data and a first parameter. If the fifth authentication information is identical to the third authentication information, the first network element stores the message data. The specific operations of the first network element are the same as those in the foregoing embodiments and will not be elaborated again herein.

In some embodiments, the first network element calculates the message data and the fifth authentication information based on the third key and the ciphertext data as follows. The first network element calculates the message data and the fifth authentication information based on the third key, the ciphertext data, and a second parameter. The elaborations of the second parameter are the same as those in the foregoing embodiments and are not repeated herein. The implementation of this embodiment is also similar to that in the foregoing embodiments and is not described again herein.

In some possible embodiments, the first device generates the third authentication information by using a sixth calculation method, and the first key is a shared key or an anonymity key. The first network element can perform the following operations. The first network element sends a sixth message to the second network element, where the sixth message carries the third authentication information. The first network element receives a seventh message from the second network element, where the seventh message carries a first authentication result.

Accordingly, the second network element can perform the following operations. The second network element receives the sixth message from the first network element, where the sixth message carries third authentication information. The second network element calculates fifth authentication information based on a third key, where the third key is related to the shared key. The second network element verifies the third authentication information based on the fifth authentication information to obtain the first authentication result. The second network element sends the seventh message to the first network element, the seventh message carrying the first authentication result.

In some embodiments, the second network element calculates the fifth authentication information based on the third key as follows. The second network element calculates the fifth authentication information based on the third key and a first parameter. The specific implementation thereof is the same as that in the foregoing embodiments and will not be elaborated again herein.

In some embodiments, the second network element calculates the fifth authentication information based on the third key and the first parameter as follows. The second network element calculates the fifth authentication information based on the third key, the first parameter, and a second parameter. The first parameter and the second parameter are the same as those in the foregoing embodiments, and the method for calculating the fifth authentication information by the second network element shall correspond to the method for calculating the third authentication information by the first device in the foregoing embodiments. It should be noted that, if the second random number in the second parameter is the same as the first random number, the second network element can use the first random number directly as the second random number in the second parameter, and then the second network element calculates the fifth authentication information. If the second random number in the second parameter is different from the first random number, then the second message further includes the second random number, and the sixth message further carries the second random number.

In some embodiments, the second message further includes ciphertext data, the sixth message further carries the ciphertext data, and the seventh message further carries message data, where the message data is obtained by decrypting the ciphertext data.

The second network element calculates the fifth authentication information based on the third key as follows. The second network element calculates message data and the fifth authentication information based on the third key and the ciphertext data, where the message data includes service data or an entire message, and the entire message contains the service data and the first parameter. The second network element verifies the third authentication information based on the fifth authentication information to obtain the first authentication result as follows. If the fifth authentication information is identical to the third authentication information, the second network element stores the message data, where the first authentication result obtained by the second network element indicates successful authentication. The implementation of calculating the message data and the fifth authentication information as well as verification by the second network element is the same as that in the foregoing embodiments and will not be elaborated again herein.

In some possible implementations, the first device generates the third authentication information based on a first integrity key and/or generates the ciphertext data based on an encryption key, and uses the second key, namely *K_{AF},* as the first key during implementation. Accordingly, after the second message is received, the first network element can perform authentication based on an integrity protection mechanism and/or an encryption mechanism.

The method includes the following. The first network element calculates a second integrity key based on the third key. The first network element calculates the fifth authentication information based on the second integrity key. The first network element verifies the third authentication information based on the fifth authentication information. The third key is also the fourth key described above, that is, the first network element uses the fourth key as the third key. The implementation of calculating the second integrity key based on the third key by first network element shall correspond to or be the same as that of calculating the first integrity key by the first device in the foregoing embodiments, and thus will not be elaborated again herein.

The detailed illustration of verifying the third authentication information based on the fifth authentication information by the first network element is also the same as that in the foregoing embodiments, which is not repeated herein.

In some embodiments, the second message further includes ciphertext data, and the method includes the following. The first network element calculates a second encryption key based on the third key. The first network element calculates service data based on the second encryption key and the ciphertext data.

The implementation of calculating the second encryption key by the first network element corresponds to the implementation of calculating the first encryption key by the first device in the foregoing embodiments, and is not described herein again. The method for the first network element to calculate the service data based on the second encryption key and the ciphertext data shall correspond to the encryption method used by the first device. The encryption algorithm or the encryption method and the corresponding decryption method are not exhaustively enumerated and limited in embodiments, and are also not described in detail again herein.

In this embodiment, the first network element can calculate the fifth authentication information based on the second integrity key as follows. The first network element calculates the ciphertext data based on the second integrity key to obtain the fifth authentication information. Here, the calculation method for obtaining the fifth authentication information can correspond to or be the same as the integrity algorithm or integrity calculation function used by the first device, which is not limited in embodiments. The integrity check information can refer to a verification code for checking message integrity. The method for the first network element to verify the third authentication information based on the fifth authentication information is the same as that in the foregoing embodiments and is not described again herein.

In some embodiments, the second message further includes fourth authentication information, and the method further includes the following. The first network element sends a fourth message to the second network element, where the fourth message carries the fourth authentication information. The first network element receives a fifth message from the second network element, where the fifth message carries a second authentication result.

In this embodiment, the fourth authentication information is calculated based on the shared key, but the first network element is unable to obtain the shared key. Therefore, the first network element needs to send the fourth authentication information to the second network element for authentication, to obtain an authentication result from the second network element.

The second network element can perform the following operations. The second network element receives the fourth message from the first network element, where the fourth message carries the fourth authentication information. The second network element sends the fifth message to the first network element, where the fifth message carries the second authentication result.

The method further includes the following. The second network element calculates sixth authentication information based on the shared key, a second intermediate response, and the first random number, where the second intermediate response is calculated based on the shared key and the first random number. The second network element verifies the fourth authentication information based on the sixth authentication information to obtain the second authentication result.

The second intermediate response corresponds to the first intermediate response in the foregoing embodiments, and the method for the second network element to calculate the second intermediate response is the same as that for the first device to calculate the first intermediate response, which therefore are not described again herein.

The implementation of calculating the sixth authentication information based on the shared key, the second intermediate response, and the first random number by the second network element is the same as that of calculating the fourth authentication information by the first device in the foregoing embodiment, which is not described again herein.

The elaborations of verifying the fourth authentication information based on the sixth authentication information by the second network element is the same as that in the foregoing embodiments, which is not described again herein.

In some possible implementations, the first device accesses a WLAN. In this implementation, the first device can perform exchange with the first network element, where the first network element can be a gateway in the WLAN. In addition, in this implementation, the shared key is shared between the first device and the first network element.

In some embodiments, the first device can proactively initiate authentication. In this case, the first device can perform the following operations. The first device sends a third message, where the third message is used for requesting authentication and carries the identifier of the first device. Specifically, the first device can send the third message as follows. The first device sends the third message to the first network element. Accordingly, the first network element can receive the third message as follows. The first network element receives the third message from the first device.

In some embodiments, a wake-up signal can be used to trigger the first device to perform authentication. Specifically, before the first device sends the third message, the method can further include the following. The first device receives a wake-up signal. The wake-up signal can be sent by the first network element. That is, before the first network element receives the third message, the method can further include the following. The first network element sends the wake-up signal. The device for sending the wake-up signal is not limited or exhaustively enumerated in embodiments. The elaborations of the function and other names of the wake-up signal are the same as those in the foregoing embodiments and are not repeated herein. In this embodiment, the elaborations of sending the third message by the first device are the same as those in the foregoing embodiments and are not repeated herein.

In some possible implementations, the first network element performs operations of generating the first random number, generating the encrypted sequence number, and generating the fourth key.

In some embodiments, the method further includes the following. The first network element calculates an anonymity key based on the shared key. The first network element encrypts a sequence number based on the anonymity key, to obtain the encrypted sequence number. The implementation of calculating the anonymity key, calculating the encrypted the sequence number, and obtaining the sequence number by the first network element is similar to that of the second network element in the foregoing embodiments, and the only difference lies in that in this embodiment, the first network element is a gateway and the above operations can be performed by the first network element, and therefore are not described again herein.

The fourth key is calculated based on the sequence number and the shared key. The method for the first network element to calculate the fourth key is the same as that for the second network element to calculate the fourth key in the foregoing embodiments, which is not described again herein.

In some possible embodiments, the first network element sends the first message as follows. The first network element sends the first message to the first device. The first device receives the first message as follows. The first device receives the first message from the first network element. After the first message is received, the first device performs operations such as calculating the second key and calculating the third authentication information, which is not repeatedly described herein.

In this embodiment, the first device sends the second message as follows. The first device sends the second message to the first network element. The first network element receives the second message as follows. The first network element receives the second message from the first device.

In some possible implementations, the first device generates the third authentication information by using a sixth calculation method, and the first key used can be any one of: a shared key, an anonymity key, or a second key. Accordingly, after the second message is received, the first network element can authenticate the third authentication information carried in the second message by using the sixth calculation method. The sixth calculation method can be an ASCON-AEAD algorithm.

It should be noted that, compared with the foregoing embodiments, the difference lies that in this implementation, the third key can be any one of: a shared key, an anonymity key, or the fourth key; and the third key needs to match the first key. That is, if the first device uses the shared key as the first key, then the first network element needs to use the shared key as the third key; if the first device uses the second key (i.e., *K_{gate}* calculated by the first device) as the first key, then the first network element needs to use the fourth key (i.e., *K_{gate}* calculated by the first network element) as the third key.

The implementation of calculating the fifth authentication information based on the third key and verifying the third authentication information based on the fifth authentication information by the first network element, as well as the elaborations of the sixth calculation method, are the same as those in the foregoing embodiments, and therefore are not described again herein.

In some possible implementations, the first device generates the third authentication information based on the first integrity key and/or generates the ciphertext data based on the encryption key, and the first key used can be any one of: a shared key, an anonymity key, or a second key. Accordingly, after the second message is received, the first network element can perform authentication based on an integrity protection mechanism and/or encryption mechanism.

In this implementation, the implementation of calculating the second integrity key based on the third key by the first network element, calculating the fifth authentication information based on the second integrity key by the first network element, and verifying the third authentication information based on the fifth authentication information by the first network element, as well as the implementation of calculating a second encryption key based on the third key and calculating service data based on the second encryption key and the ciphertext data by the first network element when the second message further includes the ciphertext data, are all the same as those in the foregoing embodiments. The only difference lies that the third key is a key type that matches the first key and can be any one of: a shared key, an anonymity key, or a fourth key, which is not described again herein.

In this implementation, if the first device has further sent the fourth authentication information, authentication is still performed by the first network element. The second message further includes the fourth authentication information, and the method further includes the following. The first network element calculates sixth authentication information based on the shared key, a second intermediate response, and the first random number, where the second intermediate response is calculated based on the shared key and the first random number. The first network element verifies the fourth authentication information based on the sixth authentication information. The method for calculating the second intermediate response is the same as that for calculating the second intermediate response by the second network element in the foregoing embodiments and is not described again herein, the method for calculating the sixth authentication information is also the same as that of the second network element, and elaborations of verifying the fourth authentication information based on the sixth authentication information is the same as that in the foregoing embodiments, which are not described again herein.

After the first network element verifies the fourth authentication information based on the sixth authentication information, if the verification result indicates successful authentication, the first network element can perform the foregoing operations of calculating the integrity key and/or the encryption key, which have been detailed in the foregoing embodiments and is not described again herein.

In some possible embodiments, the first device is an AIoT, the first network element is an AF, the second network element is a UDM, and the second device is a base station. K and an AIoT ID are shared between the AIoT and the UDM share, and a secure channel is established between the AF and the UDM. In addition to the AF, the first network element can also be any one of: an AMF, an AUSF, an HSE, a UDR, a SEAF, a dedicated network element, etc. Referring to FIG. 7, this embodiment can include Step 700 to Step 701 in the foregoing FIG. 7. When performing step 702, the only difference compared with the foregoing Step 702 is that the UDM does not need to generate first authentication information (i.e., the UDM does not perform the foregoing 702.4). That is, the UDM only needs to obtain a first random number R and an encrypted sequence number *AK*⊕*SQN,* and generate a fourth key *K_{AF}.* A key response message sent to the AF by the UDM can only carry *AK*⊕*SQN, R,* and the fourth key *K_{AF}.* In Step 703, after the key response message is received, the AF directly carries *AK*⊕*SQN* and *R* in an authentication response message and forwards the authentication response message to the base station. In Step 704, after the authentication response message is received, the AIoT can calculate an anonymity key only and obtain SQN, and determine whether SQN is within a normal range. If *SQN* is not within the normal range, desynchronization regarding SQN can be performed; if *SQN* is within the normal range, proceed to Step 705a or Step 705b. The implementation of Step 705a to Step 707a and Step 705b to Step 709 is the same as that in the foregoing embodiments and will not be elaborated again herein.

In some possible embodiments, the first device is an AIoT, the first network element is an AF, the second network element is a UDM, and the second device is a UE. K and an AIoT ID are shared between the AIoT and the UDM, and a secure channel is established between the AF and the UDM. In addition to the AF, the first network element can also be any one of: an AMF, an AUSF, an HSE, a UDR, a SEAF, a dedicated network element, etc. The UE manages a mapping between identifier information of the UE and the AIoT ID, and the mapping is shared between the UDM and with the UE. Referring to FIG. 10, the implementation of Step 1000 to Step 1002 is the same as that in the foregoing example and will not be elaborated again herein. Step 1003 is different from the foregoing example and specifically includes the following. After a key request message or an authentication request message is received, the UDM decrypts an SUCI of the UE to obtain an SUPI of the UE, then obtains the key *K* shared with the AIoT and a sequence number SQN based on a mapping between the SUPI of the UE and the AIoT ID, and generates a first random number R; and calculates an anonymity key *AK,* encrypts SQN by using *AK,* and generates a fourth key *K_{AF}.* In this step, the key response message carries the encrypted SQN, the fourth key, and the first random number. Step 1004 is different from the foregoing example and specifically includes the following. The AF receives the key response message, and carries *AK*^{®}*SQN* and *R* in an authentication response message and forwards the authentication response message to the UE (which can be forwarded via the base station), where the authentication response message received by the UE can be the ninth message in the foregoing embodiments. Step 1005 is different from the foregoing example and specifically includes the following. After the authentication response message is received, the UE can find a corresponding AIoT based on the AIoT ID and send the authentication response message to the AIoT, where the authentication response information includes *AK*⊕*SQN* and *R*, and the authentication response message sent by the UE can be the first message in the foregoing embodiments. Step 1006 is different from the foregoing example and specifically includes the following. After the authentication response message is received, the AIoT determines whether SQN is within a normal range. If SQN is not within the normal range, desynchronization regarding SQN can be performed; if SQN is within the normal range, proceed to Step 1007a or Step 1007b. The implementation of Step 1007a to Step 1009a is the same as that in the foregoing example and will not be elaborated again herein. The implementation of Step 1007b to Step 1011 is the same as the foregoing processing and will not be elaborated again herein.

In some possible embodiments, the first device is an AIoT, the first network element is an AF, the second network element is a UDM, and the second device is a base station. K and an AIoT ID are shared between the AIoT and the UDM, and a secure channel is established between the AF and the UDM. In this embodiment, an authentication request is initiated proactively by the AF. Referring to FIG. 11, the implementation of Step 1101 is the same as that in the foregoing example. Step 1102 is different from the foregoing example in that the UDM does not generate *MAC.* Specifically, after a key request message is received, the UDM can obtain a shared key *K* and a sequence number SQN, and generate a first random number R; and calculates an anonymity key *AK,* encrypts SQN by using *AK,* and generates a fourth key *K_{AF}.* The UDM sends a key response request to the AF. Step 1103 is different from the foregoing example. Specifically, the AF receives the key response message, sends an authentication request message to a base station, and the base station forwards the authentication request message to the AIoT, where the authentication request message can contain *AK*⊕*SQN* and *R*. Step 1104 is different from the foregoing example. Specifically, whether SQN is within a normal range is determined. If *SQN* is within the normal range, proceed to Step 1105a or Step 1105b. The implementation of Step 1105a to Step 1107a is the same as that in the foregoing example and will not be elaborated again herein. The implementation of Step 1105b to Step 1109 is the same as that in the foregoing example and will not be elaborated again herein.

In some possible embodiments, the first device is an AIoT, the first network element is an AF, the second network element is a UDM, and the second device is a UE. K and an AIoT ID are shared between the AIoT and the UDM, and a secure channel is established between the AF and the UDM. In this embodiment, an authentication request is initiated proactively by a core-network element or function (such as AF) or an application server. Referring to FIG. 12, the implementation of Step 1201 is the same as that in the foregoing example. Step 1202 is different from the foregoing example in that the UDM does not generate MAC. Specifically, after a key request message is received, the UDM can obtain a shared key *K* and a sequence number SQN, and generate a first random number R; and calculates an anonymity key AK, encrypts SQN by using AK, and generates a fourth key *K_{AF}.* The UDM sends a key response request to the AF. Step 1203 is different from the foregoing example. Specifically, the AF receives the key response message, sends an authentication request message to a base station, and the base station forwards the authentication request message to the UE, where the authentication request message can contain *AK*⊕*SQN* and *R*. Step 1204 is different from the foregoing example in that the authentication request message contains *AK*⊕*SQN* and *R*. Step 1205 is different from the foregoing example in that after an authentication response message is received, the AIoT does not need to verify *MAC,* and may only determine whether *SQN* is within a normal range. If *SQN* is within the normal range, proceed to Step 1206a or Step 1206b. The implementation of Step 1206a to Step 1208a is the same as that in the foregoing example and will not be elaborated again herein. The detailed illustration of Step 1206b to Step 1210 is the same as that in the foregoing example and will not be repeated herein.

Regarding FIG. 7, FIG. 10, FIG. 11, and FIG. 12, in addition to the AF, the first network element can also be any one of: an AMF, an AUSF, an HSE, a UDR, an SMF, an NEF, a key management network element, a BSF, an AAnF, an SEAF, a core-network dedicated network element, etc. For example, if the first network element includes an AMF, the operations that an AMF and an AF may perform are similar to those in the alternative explanation in the foregoing example and will not be elaborated again herein. Alternatively, regarding FIG. 7, FIG. 10, FIG. 11, and FIG. 12, the first network element including AF can be replaced by the first network element including any one of: an AMF, an AUSF, an HSE, a UDR, an SMF, an NEF, a key management network element, a BSF, an AAnF, a SEAF, a core-network dedicated network element, etc.. The related explanation that the second network element being an UDM can be replaced by the second network element being an AF is also similar to the foregoing example and will not be releated herein.

In some possible embodiments, the first device is an AIoT, and the first network element is a gateway (LAN element). It is assumed that a secure channel is established between the AF and a LAN gateway. K and an AIoT ID is shared between a zero-power terminal (AIoT) and the LAN gateway (hereinafter, "gateway" for short). Referring to FIG. 13, the implementation of Step 1300 to Step 1301 is the same as that in the foregoing example and will not be elaborated again herein. Step 1302 is different from the foregoing example in that the gateway does not need to generate *MAC,* and all other operations are the same and will not be elaborated again herein. Step 1303 is different from the foregoing example in that the AIoT does not need to verify *MAC* and only needs to determine whether SQN is within a normal range. If *SQN* is within the normal range, proceed to Step 1304. The implementation of Step 1304 to Step 1305 is the same as that in the foregoing example and will not be elaborated again herein.

By adopting the solutions provided in the embodiments, the first device can generate the third authentication information based on the first key related to the shared key, such that a receiving end can perform authentication based on the third authentication information. In this way, the first device can realize authentication with less signaling exchange and less computation, which is possible to reduce power consumption and delay while satisfying security requirements The solutions are applicable especially for a device which is resource-constrained.

Embodiments of the disclosure further provide a first device. FIG. 19 is a schematic structural diagram of a first device according to embodiments of the disclosure. The first device includes a first communication unit 1901 and a first processing unit 1902. The first communication unit 1901 is configured to: receive a first message, where the first message contains an encrypted sequence number, a first random number, and first authentication information; and send a second message, where the second message carries third authentication information. The first processing unit 1902 is configured to: calculate second authentication information based on a shared key, the encrypted sequence number, and the first random number; and calculate the third authentication information based on a first key if the first authentication information is identical to the second authentication information, where the first key is related to the shared key.

The first processing unit is configured to calculate the third authentication information based on the first key and a first parameter.

The first processing unit is configured to calculate the third authentication information based on the first key, the first parameter, and a second parameter.

The second message further includes ciphertext data, and the first processing unit is configured to calculate the ciphertext data and the third authentication information based on the first key and message data, where the message data includes service data or an entire message, and the entire message contains the service data and a first parameter.

The first processing unit is configured to calculate the ciphertext data and the third authentication information based on the first key, the message data, and a second parameter.

The first parameter includes at least one of: an identifier of the first device, a service type indicator, an identifier of a first network element, or an identifier of a second network element.

The second parameter includes at least one of: a sequence number, the second random number, or an anonymity key.

The second message further includes the second random number.

The first processing unit is configured to: ccalculate a first integrity key based on the first key; and calculate the third authentication information based on the first integrity key.

The second message further includes ciphertext data, and the first processing unit is configured to: calculate a first encryption key based on the first key; calculate the ciphertext data based on the first encryption key and service data; and calculate the third authentication information based on the first integrity key and the ciphertext data.

The second message further includes fourth authentication information, and the first processing unit is configured to: calculate the fourth authentication information based on the shared key, a first intermediate response, and the first random number, where the first intermediate response is calculated based on the shared key and the first random number.

The first key is one of: the shared key, an anonymity key, or a second key, where the anonymity key is calculated based on the shared key, and the second key is calculated based on a sequence number and the shared key.

The first processing unit is configured to: calculate an anonymity key based on the shared key; decrypt the encrypted sequence number based on the anonymity key, to obtain a sequence number; and calculate the second authentication information based on the sequence number, the shared key, and the first random number.

The first processing unit is configured to: calculate a second key based on the sequence number, the shared key, and a third parameter; and calculate the second authentication information based on the second key and the first random number.

The first processing unit is configured to calculate the second authentication information based on the second key, the first random number, and a fourth parameter, where the fourth parameter includes at least one of: a length of the first random number or a first specified value.

The first processing unit is configured to verify a value range of the sequence number.

The third parameter includes at least one of: the first random number, an identifier of the first device, a length of the identifier of the first device, a length of the sequence number, a length of the first random number, a second specified value, or the anonymity key.

The first communication unit is configured to: receive the first message from a first network element; and send the second message to the first network element.

The first communication unit is configured to: receive the first message from a second device; and send the second message to the second device.

The second device includes one of: a terminal or an access-network device.

The shared key is shared between the first device and the second network element.

The first network element includes at least one of: an AF, an AMF, an AUSF, an HSE, a UDR, an SMF, an NEF, a key management network element, a BSF, an AAnF, a SEAF, or a core-network dedicated network element; and the second network element includes a UDM. Alternatively, the first network element includes at least one of: an AMF, an AUSF, an HSE, a UDR, an SMF, an NEF, a key management network element, a BSF, an AAnF, a SEAF, or a core-network dedicated network element; and the second network element includes an AF.

The shared key is shared between the first device and the first network element.

The first network element includes a gateway.

The first communication unit is configured to send a third message, where the third message is used for requesting authentication, and the third message carries the identifier of the first device.

The first device includes a zero-power device.

Embodiments of the disclosure further provide a first network element. FIG. 20 is a schematic structural diagram of a first network element according to embodiments of the disclosure. The first network element includes a second communication unit 2001. The second communication unit 2001 is configured to: send a first message, where the first message carries an encrypted sequence number, a first random number, and first authentication information, and the first random number and the encrypted sequence number are used for a first device to calculate second authentication information based on a shared key; and receive a second message, where the second message carries third authentication information, the third authentication information is calculated by the first device based on a first key if the second authentication information is identical to the first authentication information, and the first key is associated with the shared key.

As illustrated in FIG. 20, the first network element further includes a second processing unit 2002. The second processing unit 2002 is configured to: calculate fifth authentication information based on a third key and a first parameter, where the third key is associated with the shared key; and verify the third authentication information based on the fifth authentication information.

The second processing unit is configured to calculate the fifth authentication information based on the third key, the first parameter, and a second parameter.

The second message further includes ciphertext data, and the second processing unit is configured to: calculate message data and the fifth authentication information based on the third key and the ciphertext data, where the message data includes service data or an entire message, and the entire message contains the service data and a first parameter; and store, by the first network element, the message data if the fifth authentication information is identical to the third authentication information.

The second processing unit is configured to calculate the message data and the fifth authentication information based on the third key, the ciphertext data, and a second parameter.

The first parameter includes at least one of: an identifier of the first device, a service type indicator, an identifier of the first network element, or an identifier of the second network element.

The second parameter includes at least one of: a sequence number, the first random number, or an anonymity key.

The second message further includes the second random number.

The second processing unit is configured to: calculate a second integrity key based on a third key; calculate fifth authentication information based on the second integrity key; and verify the third authentication information based on the fifth authentication information.

The second message further includes ciphertext data, and the second processing unit is configured to: calculate a second encryption key based on the third key; and calculate service data based on the second encryption key and the ciphertext data.

The second message further includes fourth authentication information, and the second communication unit is configured to: send a fourth message to a second network element, where the fourth message carries the fourth authentication information; and receive a fifth message from the second network element, where the fifth message carries a second authentication result.

The third key is a fourth key, and the fourth key is calculated based on the sequence number and the shared key.

The second communication unit is configured to: send a sixth message to a second network element, where the sixth message carries the third authentication information; and receive a seventh message from the second network element, where the seventh message carries a first authentication result.

The second message further includes ciphertext data, the sixth message further carries the ciphertext data, and the seventh message further carries message data, where the message data is obtained by decrypting the ciphertext data.

The second message further includes the second random number, and the sixth message further carries the second random number.

The second communication unit is configured to receive an eighth message from the second network element, where the eighth message carries the encrypted sequence number, the first random number, and the fourth key.

The eighth message further carries the first authentication information.

The second processing unit is configured to calculate the first authentication information based on the fourth key and the first random number.

The second communication unit is configured to send a key request message to the second network element, where the key request message carries the identifier of the first device.

The shared key is shared between the first device and the second network element.

The first network element includes at least one of: the first network element includes at least one of: an AF, an AMF, an AUSF, an HSE, a UDR, an SMF, an NEF, a key management network element, a BSF, an AAnF, a SEAF, or a core-network dedicated network element; and the second network element includes a UDM. Alternatively, the first network element includes at least one of: an AMF, an AUSF, an HSE, a UDR, an SMF, an NEF, a key management network element, a BSF, an AAnF, a SEAF, or a core-network dedicated network element; and the second network element includes an AF.

The second message further includes fourth authentication information, and the second processing unit is configured to: calculate sixth authentication information based on the shared key, a second intermediate response, and the first random number, where the second intermediate response is calculated based on the shared key and the first random number; and verify the fourth authentication information based on the sixth authentication information.

The third key is one of: the shared key, an anonymity key, or a fourth key, and the anonymity key is calculated based on the shared key, and the fourth key is calculated based on the sequence number and the shared key.

The second processing unit is configured to: calculate an anonymity key based on the shared key; and encrypt the sequence number based on the anonymity key, to obtain the encrypted sequence number.

The second processing unit is configured to: calculate the first authentication information based on the sequence number, the shared key, and the first random number.

The second processing unit is configured to: calculate a fourth key based on the sequence number, the shared key, and a third parameter; and calculate the first authentication information based on the fourth key and the first random number.

The shared key is shared between the first device and the first network element.

The first network element is a gateway.

The second processing unit is configured to: calculate the first authentication information based on the fourth key, the first random number, and a fourth parameter, where the fourth parameter includes at least one of: a length of the first random number or a first specified value.

The third parameter includes at least one of: the first random number, the identifier of the first device, a length of the identifier of the first device, a length of the sequence number, a length of the first random number, a second specified value, or the anonymity key.

The second communication unit is configured to: send the first message to the first device; and receive the second message from the first device.

The second communication unit is configured to receive a third message, a third message, where the third message is used for requesting authentication and carries the identifier of the first device.

The first device is a zero-power device.

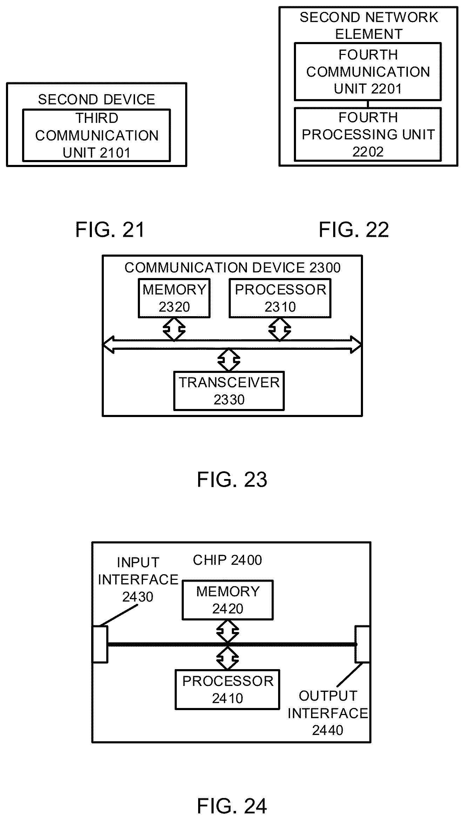

Embodiments of the disclosure further provide a second device. FIG. 21 is a schematic structural diagram of a second device according to embodiments of the disclosure. The second device includes a third communication unit 2101. The third communication unit 2101 is configured to: send a first message to a first device, where the first message carries an encrypted sequence number, a first random number, and first authentication information, and the first random number and the encrypted sequence number are used for the first device to calculate second authentication information based on a shared key; and send to a first network element a second message from the first device, where the second message carries third authentication information, the third authentication information is calculated by the first device based on a first key if the second authentication information is identical to the first authentication information, and the first key is associated with the shared key.

The third communication unit is configured to send to the first device a first message from the first network element.

The third communication unit is configured to receive a ninth message from the first network element, where the ninth message carries an encrypted sequence number, the first random number, the first authentication information, and an identifier of the first device.

The third communication unit is configured to send the first message to the first device if there is a mapping between identifier information of the first device and first identifier information of the second device.

The third communication unit is configured to receive a third message from the first device, where the third message is used for requesting authentication and carries the identifier of the first device.

The third communication unit is configured to perform one of : forwarding the third message to the first network element; forwarding the third message to the second network element; sending a first request message to the first network element if there is a mapping between the identifier information of the first device and the first identifier information of the second device, where the first request message carries second identifier information of the second device and the identifier of the first device; or sending a second request message to the second network element if there is a mapping between the identifier information of the first device and the first identifier information of the second device, where the second request message carries the second identifier information of the second device and the identifier of the first device.

The first identifier information includes an SUPI or an SUCI.

The second identifier information includes an SUCI.

The first device is a zero-power device; the second device is one of a terminal or an access-network device.

The first network element includes at least one of: an AF, an AMF, an AUSF, an HSE, a UDR, an SMF, a NEF, a key management network element, a BSF, an AAnF, a SEAF, or a core-network dedicated network element; and the second network element includes a UDM. Alternatively, the first network element includes at least one of: an AMF, an AUSF, an HSE, a UDR, an SMF, an NEF, a key management network element, a BSF, an AAnF, a SEAF, or a core-network dedicated network element; and the second network element includes an AF.

Embodiments of the disclosure further provide a second network element. FIG. 22 is a schematic structural diagram of a second network element according to embodiments of the disclosure. The second network element includes a fourth communication unit 2201. The fourth communication unit 2201 is configured to: send an eighth message, where the eighth message carries an encrypted sequence number, a first random number, and a fourth key.

As illustrated in FIG. 22, the second network element further includes a fourth processing unit 2202. The fourth processing unit 2202 is configured to: calculate an anonymity key based on a shared key; and encrypt a sequence number based on the anonymity key, to obtain the encrypted sequence number.

The fourth processing unit is configured to calculate the fourth key based on the sequence number and the shared key.

The eighth message further carries first authentication information, and the fourth processing unit is configured to: calculate the first authentication information based on the sequence number, the shared key, and the first random number.

The fourth communication unit is configured to: receive a sixth message from a first network element, where the sixth message carries third authentication information; and send a seventh message to the first network element, where the seventh message carries a first authentication result.

The fourth processing unit is configured to: calculate fifth authentication information based on a third key and a first parameter, where the third key is associated with the shared key; and verify the third authentication information based on the fifth authentication information, to obtain the first authentication result.

The fourth processing unit is configured to calculate the fifth authentication information based on the third key, the first parameter, and a second parameter.

The sixth message further carries ciphertext data, the seventh message further carries message data, and the fourth processing unit is configured to: calculate the message data and fifth authentication information based on a third key and the ciphertext data, where the message data includes service data or an entire message, and the entire message contains the service data and a first parameter; and if the fifth authentication information is identical to the third authentication information, store the message data, where the first authentication result obtained by the second network element indicates successful authentication.

The fourth processing unit is configured to calculate the message data and the fifth authentication information based on the third key, the ciphertext data, and a second parameter.

The first parameter includes at least one of: an identifier of a first device, a service type indicator, an identifier of the first network element, or an identifier of the second network element.

The second parameter includes at least one of: a sequence number, the first random number, or an anonymity key.

The third key is one of: the shared key or an anonymity key.

The fourth communication unit is configured to: receive a fourth message from a first network element, where the fourth message carries fourth authentication information; and send a fifth message to the first network element, where the fifth message carries a second authentication result.

The fourth processing unit is configured to: calculate sixth authentication information based on the shared key, a second intermediate response, and the first random number, where the second intermediate response is calculated based on the shared key and the first random number; and verify the fourth authentication information based on the sixth authentication information, to obtain the second authentication result.

The fourth communication unit is configured to perform one of: receiving a third message from the first device, where the third message is used for requesting authentication and carries the identifier of the first device; receiving a key request message from the first network element, where the key request message carries the identifier of the first device; or receiving a second request message from the second device, where the second request message carries second identifier information of the second device and the identifier of the first device.

The shared key is shared between the first device and the second network element.

The first network element includes at least one of: an AF, an AMF, an AUSF, an HSE, a UDR, an SMF, an NEF, a key management network element, a BSF, an AAnF, a SEAF, or a core-network dedicated network element; and the second network element includes a UDM. Alternatively, the first network element includes at least one of: an AMF, an AUSF, an HSE, a UDR, an SMF, an NEF, a key management network element, a BSF, an AAnF, a SEAF, or a core-network dedicated network element; and the second network element includes an AF.

Embodiments of the disclosure further provide a first device. The first device includes a first processing unit and a first communication unit. The first processing unit is configured to calculate third authentication information based on a first key, where the first key is related to a shared key. The first communication unit is configured to send a second message, where the second message carries the third authentication information.

The first processing unit is configured to calculate the third authentication information based on the first key and a first parameter.

The first processing unit is configured to calculate the third authentication information based on the first key, the first parameter, and a second parameter.

The second message further includes ciphertext data, and the first processing unit is configured to calculate the ciphertext data and the third authentication information based on the first key and message data, where the message data includes service data or an entire message, and the entire message contains the service data and the first parameter.

The first processing unit is configured to calculate the ciphertext data and the third authentication information based on the first key, the message data, and a second parameter.

The first parameter includes at least one of: an identifier of the first device, a service type indicator, an identifier of a first network element, an identifier of a second network element, or an identifier of a second device.

The second parameter includes at least one of: a sequence number, a second random number, or an anonymity key.

The second message further includes the second random number.

The first processing unit is configured to: calculate a first integrity key based on the first key; and calculate the third authentication information based on the first integrity key.

The second message further includes ciphertext data, and the first processing unit is configured to: calculate a first encryption key based on the first key; calculate the ciphertext data based on the first encryption key and service data; and calculate the third authentication information based on the first integrity key and the ciphertext data.

The second message further includes fourth authentication information, and the first processing unit is configured to calculate the fourth authentication information based on the shared key, a first intermediate response, and the first random number, where the first intermediate response is calculated based on the shared key and the first random number.

The first key is one of: the shared key, an anonymity key, or a second key, where the anonymity key is calculated based on the shared key, and the second key is calculated based on a sequence number and the shared key.

The first communication unit is configured to receive a first message, a first message, where the first message carries an encrypted sequence number and a first random number. The first processing unit is configured to: calculate an anonymity key based on the shared key; and decrypt the encrypted sequence number based on the anonymity key to obtain a sequence number.

The first communication unit is configured to: receive the first message from a first network element; and send the second message to the first network element.

The first communication unit is configured to: receive the first message from a second device; and send the second message to the second device.

The second device includes one of: a terminal or an access-network device.

The shared key is shared between the first device and the second network element.

The first network element includes at least one of: an AF, an AMF, an AUSF, an HSE, a UDR, an SMF, an NEF, a key management network element, a BSF, an AAnF, a SEAF, or a core-network dedicated network element; and the second network element includes a UDM. Alternatively, the first network element includes at least one of: an AMF, an AUSF, an HSE, a UDR, an SMF, an NEF, a key management network element, a BSF, an AAnF, a SEAF, or a core-network dedicated network element; and the second network element includes an AF.

The shared key is shared between the first device and the first network element.

The first network element includes a gateway.

The first device includes a zero-power device.

Embodiments of the disclosure further provide a first network element. The first network element includes a second communication unit. The second communication unit is configured to receive a second message, where the second message carries third authentication information, the third authentication information is calculated by the first device based on a first key, the first key is related to a shared key.

The first network element further includes a second processing unit. The second processing unit is configured to: calculate fifth authentication information based on a third key and a first parameter, where the third key is related to the shared key; and verify the third authentication information based on the fifth authentication information.

The second processing unit is configured to calculate the fifth authentication information based on the third key, the first parameter, and a second parameter.

The second message further includes ciphertext data, and the second processing unit is configured to: calculate message data and the fifth authentication information based on the third key and the ciphertext data, where the message data includes service data or an entire message, and the entire message contains the service data and the first parameter; and store, by the first network element, the message data if the fifth authentication information is identical to the third authentication information.

The second processing unit is configured to calculate the message data and the fifth authentication information based on the third key, the ciphertext data, and a second parameter.

The first parameter includes at least one of: an identifier of the first device, a service type indicator, an identifier of the first network element, an identifier of a second network element, or an identifier of a second device.

The second parameter includes at least one of: a sequence number, a second random number, or an anonymity key.

The second message further includes the second random number.

The second processing unit is configured to: calculate a second integrity key based on a third key; calculate fifth authentication information based on the second integrity key; and verify the third authentication information based on the fifth authentication information.

The second message further includes ciphertext data, and the second processing unit is configured to: calculate a second encryption key based on the third key; and calculate service data based on the second encryption key and the ciphertext data.

The second message further includes fourth authentication information, and the second communication unit is configured to: send a fourth message to a second network element, where the fourth message carries the fourth authentication information; and receive a fifth message from the second network element, where the fifth message carries a second authentication result.

The third key is a fourth key, the fourth key is calculated based on a sequence number and the shared key.

The second communication unit is configured to: send a sixth message to a second network element, where the sixth message carries the third authentication information; and receive a seventh message from the second network element, where the seventh message carries a first authentication result.

The second message further includes ciphertext data, the sixth message further carries the ciphertext data, and the seventh message further carries message data, where the message data is obtained by decrypting the ciphertext data.

The second message further includes the second random number.

The second communication unit is configured to receive an eighth message from the second network element, where the eighth message carries an encrypted sequence number, a first random number, and a fourth key.

The second communication unit is configured to send a key request message to the second network element, where the key request message carries the identifier of the first device.

The shared key is shared between the first device and the second network element.

The first network element includes at least one of: an AF, an AMF, an AUSF, an HSE, a UDR, an SMF, an NEF, a key management network element, a BSF, an AAnF, a SEAF, or a core-network dedicated network element; and the second network element includes a UDM. Alternatively, the first network element includes at least one of: an AMF, an AUSF, an HSE, a UDR, an SMF, an NEF, a key management network element, a BSF, an AAnF, a SEAF, or a core-network dedicated network element; and the second network element includes an AF.

The second message further includes fourth authentication information, and the second processing unit is configured to: calculate sixth authentication information based on the shared key, a second intermediate response, and a first random number, where the second intermediate response is calculated based on the shared key and the first random number; and verify the fourth authentication information based on the sixth authentication information.

The third key is one of: the shared key, an anonymity key, or a fourth key, where the anonymity key is calculated based on the shared key, and the fourth key is calculated based on a sequence number and the shared key.

The second processing unit is configured to: calculate an anonymity key based on the shared key; and encrypt a sequence number based on the anonymity key to obtain an encrypted sequence number.

The shared key is shared between the first device and the first network element.

The first network element is a gateway.

The second communication unit is configured to send a first message, where the first message carries the encrypted sequence number and a first random number.

The second communication unit is configured to receive a third message, where the third message is used for requesting authentication, and the third message carries the identifier of the first device.

The first device is a zero-power device.

Embodiments of the disclosure further provide a second device. The second device includes a third communication unit. The third communication unit is configured to send to a first network element a second message from a first device, where the second message carries third authentication information, the third authentication information is calculated by the first device based on a first key, and the first key is related to the shared key.

The third communication unit is configured to send to the first device a first message from the first network element, where the first message carries an encrypted sequence number and a first random number.

The third communication unit is configured to receive a ninth message from the first network element, where the ninth message carries an encrypted sequence number, a first random number, and an identifier of the first device.

The third communication unit is configured to send the first message to the first device if there is a mapping between identifier information of the first device and first identifier information of the second device.

The third communication unit is configured to receive a third message from the first device, where the third message is used for requesting authentication, and the third message carries an identifier of the first device.

The third communication unit is configured to perform one of: forwarding the third message to the first network element; forwarding the third message to the second network element; sending a first request message to the first network element if there is a mapping between the identifier information of the first device and the first identifier information of the second device, where the first request message carries second identifier information of the second device and the identifier of the first device; or sending a second request message to the second network element if there is a mapping between the identifier information of the first device and the first identifier information of the second device, where the second request message carries the second identifier information of the second device and the identifier of the first device.

The first device is a zero-power device, and the second device is one of a terminal or an access-network device.

Embodiments of the disclosure further provide a second network element. The second network element includes a fourth communication unit and a fourth processing unit. The fourth communication unit is configured to: receive a sixth message from a first network element, where the sixth message carries third authentication information, the third authentication information is calculated by a first device based on a first key, and the first key is related to the shared key; send a seventh message to the first network element, where the seventh message carries a first authentication result. The fourth processing unit is configured to: calculate fifth authentication information based on a third key, where the third key is related to the shared key; and verify the third authentication information based on the fifth authentication information to obtain the first authentication result.

The fourth communication unit is configured to send an eighth message, where the eighth message carries an encrypted sequence number, a first random number, and a fourth key.

The fourth processing unit is configured to: calculate an anonymity key based on the shared key; and encrypt a sequence number based on the anonymity key to obtain the encrypted sequence number.

The fourth processing unit is configured to calculate the fourth key based on a sequence number and the shared key.

The fourth processing unit is configured to calculate the fifth authentication information based on the third key and a first parameter.

The fourth processing unit is configured to calculate the fifth authentication information based on the third key, the first parameter, and a second parameter.

The sixth message further carries ciphertext data, the seventh message further carries message data, and the fourth processing unit is configured to: calculate message data and the fifth authentication information based on the third key and the ciphertext data, where the message data includes service data or an entire message, and the entire message contains the service data and the first parameter; and if the fifth authentication information is identical to the third authentication information, store, by the second network element, the message data, where the first authentication result obtained by the second network element indicates successful authentication.

The fourth processing unit is configured to calculate the message data and the fifth authentication information based on the third key, the ciphertext data, and a second parameter.

The first parameter includes at least one of: an identifier of the first device, a service type indicator, an identifier of the first network element, an identifier of the second network element, or an identifier of a second device.

The second parameter includes at least one of: a sequence number, a second random number, or an anonymity key.

The sixth message further carries the second random number.

The third key is one of: the shared key or an anonymity key.

The fourth communication unit is configured to: receive a fourth message from the first network element, where the fourth message carries fourth authentication information; and send a fifth message to the first network element, where the fifth message carries a second authentication result.

The fourth processing unit is configured to: calculate sixth authentication information based on the shared key, a second intermediate response, and the first random number, wherien the second intermediate response is calculated based on the shared key and the first random number; and verify the fourth authentication information based on the sixth authentication information to obtain the second authentication result.

The fourth communication unit is configured to perform one of: receiving a third message from the first device, where the third message is used for requesting authentication, and the third message carries the identifier of the first device; receiving a key request message from the first network element, where the key request message carries the identifier of the first device; or receiving a second request message from the second device, where the second request message carries second identifier information of the second device and the identifier of the first device.

The shared key is shared between the first device and the second network element.

The device of embodiments of the disclosure can realize the corresponding functions of each device in the aforementioned authentication method embodiment. The corresponding processes, functions, implementations, and advantageous effects of each module (sub-module, unit, or component, etc.) in the first device, the second device, the first network element, or the second network element can be found in the corresponding illustration in the above method embodiment, which will not be repeated herein. It should be noted that the functions described of each module (sub-module, unit, or component, etc.) in the first device, the second device, the first network element, or the second network element of embodiments of the disclosure can be implemented by different modules (sub-modules, units, or components, etc.) or by the same module (sub-module, unit, or component, etc.).

FIG. 23 is a schematic structural diagram of a communication device 2300 according to embodiments of the disclosure. The communication device 2300 illustrated in FIG. 23 includes a processor 2310. The processor 2310 can invoke and execute computer programs stored in a memory, to implement the method in embodiments of the disclosure.

In some implementations, as illustrated in FIG. 23, the communication device 2300 may further include a memory 2320, where the processor 2310 can invoke and execute computer programs stored in the memory 2320 to implement the communication device in embodiments of the disclosure.

The memory 2320 may be a separate device independent of the processor 2310, or may be integrated into the processor 2310.

In some implementations, as illustrated in FIG. 23, the communication device 2300 may further include a transceiver 2330. The processor 2310 can control the transceiver 2330 to communicate with other devices, and specifically, to send information or data to other devices or receive information or data sent by other devices.

The transceiver 2330 may include a transmitter and a receiver. The transceiver 2330 can further include an antenna, where one or more antennas may be provided.

In some implementations, the communication device 2300 may specifically be a communication device in embodiments of the disclosure, and the communication device 2300 may implement corresponding operations implemented by the communication device in various methods in embodiments of the disclosure, which will not be described again herein for the sake of brevity.

FIG. 24 is a schematic structural diagram of a chip according to embodiments of the disclosure. The chip 2400 illustrated in FIG. 24 includes a processor 2410. The processor 2410 can invoke and execute computer programs stored in a memory, so as to implement the method in embodiments of the disclosure.

In some implementations, as illustrated in FIG. 24, the chip 2400 may further include a memory 2420. The processor 2410 can invoke and execute computer programs stored in the memory 2420, so as to implement the method in embodiments of the disclosure.

The memory 2420 may be a separate device independent of the processor 2410, or may be integrated into the processor 2410.

In some implementations, the chip 2400 may further include an input interface 2430. The processor 2410 can control the input interface 2430 to communicate with other devices or chips, and specifically, to obtain information or data sent by other devices or chips.

In some implementations, the chip 2400 may further include an output interface 2440. The processor 2410 can control the output interface 2440 to communicate with other devices or chips, and specifically, to output information or data to other devices or chips.

In some implementations, the chip may be applied to the communication device in embodiments of the disclosure, and the chip may implement corresponding operations implemented by the communication device in various methods in embodiments of the disclosure, which will not be described again herein for the sake of brevity.

It should be understood that, the chip in embodiments of the disclosure may also be referred to as a system-on-chip (SoC), etc.

The processor mentioned above may be a general-purpose processor, a digital signal processor (DSP), a field programmable gate array (FPGA), an application specific integrated circuit (ASIC), or other programmable logic devices, transistor logic devices, discrete hardware components. The general-purpose processor may be a microprocessor, or the processor may be any conventional processor or the like.

The memory mentioned above may be a volatile memory or a non-volatile memory, or may include both the volatile memory and the non-volatile memory. The non-volatile memory may be a read only memory (ROM), a programmable ROM (PROM), an erasable PROM (EPROM), an electrically EPROM (EEPROM), or flash memory. The volatile memory can be a random access memory (RAM).

It should be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should be understood that, in various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. An authentication method, comprising:
receiving, by a first device, a first message, wherein the first message contains an encrypted sequence number, a first random number, and first authentication information;
calculating, by the first device, second authentication information based on a shared key, the encrypted sequence number, and the first random number;
calculating, by the first device, third authentication information based on a first key when the first authentication information is identical to the second authentication information, wherein the first key is associated with the shared key; and
sending, by the first device, a second message, wherein the second message carries the third authentication information.

2. The method of claim 1, wherein calculating, by the first device, the third authentication information based on the first key comprises:
calculating, by the first device, the third authentication information based on the first key and a first parameter.

3. The method of claim 2, wherein calculating, by the first device, the third authentication information based on the first key and the first parameter comprises:
calculating, by the first device, the third authentication information based on the first key, the first parameter, and a second parameter.

4. The method of claim 1, wherein the second message further includes ciphertext data, and calculating, by the first device, the third authentication information based on the first key comprises:
calculating, by the first device, the ciphertext data and the third authentication information based on the first key and message data, wherein the message data comprises service data or an entire message, and the entire message contains the service data and a first parameter.

5. The method of claim 4, wherein calculating, by the first device, the ciphertext data and the third authentication information based on the first key and the message data comprises:
calculating, by the first device, the ciphertext data and the third authentication information based on the first key, the message data, and a second parameter.

6. The method of any of claims 2 to 5, wherein the first parameter comprises at least one of: an identifier of the first device, a service type indicator, an identifier of a first network element, an identifier of a second network element, or an identifier of a second device.

7. The method of claim 3 or 5, wherein the second parameter comprises at least one of: a sequence number, a second random number, or an anonymity key.

8. The method of claim 7, wherein the second message further includes the second random number.

9. The method of claim 1, wherein calculating, by the first device, the third authentication information based on the first key comprises:
calculating, by the first device, a first integrity key based on the first key; and
calculating, by the first device, the third authentication information based on the first integrity key.

10. The method of claim 9, wherein the second message further includes ciphertext data, and calculating, by the first device, the third authentication information based on the first integrity key comprises:
calculating, by the first device, a first encryption key based on the first key;
calculating, by the first device, the ciphertext data based on the first encryption key and service data; and
calculating, by the first device, the third authentication information based on the first integrity key and the ciphertext data.

11. The method of claim 9 or 10, wherein the second message further includes fourth authentication information, and the method further comprises:
calculating, by the first device, the fourth authentication information based on the shared key, a first intermediate response, and the first random number, wherein the first intermediate response is calculated based on the shared key and the first random number.

12. The method of any of claims 1 to 11, wherein the first key is one of: the shared key, an anonymity key, or a second key, wherein the anonymity key is calculated based on the shared key, and the second key is calculated based on a sequence number and the shared key.

13. The method of any of claims 1 to 12, wherein calculating, by the first device, the second authentication information based on the shared key, the encrypted sequence number, and the first random number comprises:
calculating, by the first device, an anonymity key based on the shared key;
decrypting, by the first device, the encrypted sequence number based on the anonymity key, to obtain a sequence number; and
calculating, by the first device, the second authentication information based on the sequence number, the shared key, and the first random number.

14. The method of claim 13, wherein calculating, by the first device, the second authentication information based on the sequence number, the shared key, and the first random number comprises:
calculating, by the first device, a second key based on the sequence number, the shared key, and a third parameter; and
calculating, by the first device, the second authentication information based on the second key and the first random number.

15. The method of claim 14, wherein calculating, by the first device, the second authentication information based on the second key and the first random number comprises:
calculating, by the first device, the second authentication information based on the second key, the first random number, and a fourth parameter, wherein the fourth parameter comprises at least one of: a length of the first random number or a first specified value.

16. The method of any of claims 13 to 15, further comprising:
verifying, by the first device, a value range of the sequence number.

17. The method of claim 12, 14, and 15, wherein the third parameter comprises at least one of: the first random number, an identifier of the first device, a length of the identifier of the first device, a length of the sequence number, a length of the first random number, a second specified value, or the anonymity key.

18. The method of any of claims 1 to 17, wherein
receiving, by the first device, the first message comprises:
receiving, by the first device, the first message from a first network element; and
sending, by the first device, the second message comprises:
sending, by the first device, the second message to the first network element.

19. The method of any of claims 1 to 17, wherein
receiving, by the first device, the first message comprises:
receiving, by the first device, the first message from a second device; and sending, by the first device, the second message comprises:
sending, by the first device, the second message to the second device.

20. The method of claim 19, wherein the second device is one of: a terminal or an access-network device.

21. The method of any of claims 18 to 20, wherein the shared key is shared between the first device and the second network element.

22. The method of claim 21, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

23. The method of claim 18, wherein the shared key is shared between the first device and the first network element.

24. The method of claim 18 or 26, wherein the first network element comprises a gateway.

25. The method of any of claims 1 to 24, further comprising:
sending, by the first device, a third message, wherein the third message is used for requesting authentication and carries the identifier of the first device.

26. The method of any of claims 1 to 25, wherein the first device comprises a zero-power device.

27. An authentication method, comprising:
sending, by a first network element, a first message, wherein the first message carries an encrypted sequence number, a first random number, and first authentication information, and the first random number and the encrypted sequence number are used for a first device to calculate second authentication information based on a shared key; and
receiving, by the first network element, a second message, wherein the second message carries third authentication information, the third authentication information is calculated by the first device based on a first key when the second authentication information is identical to the first authentication information, and the first key is associated with the shared key.

28. The method of claim 27, further comprising:
calculating, by the first network element, fifth authentication information based on a third key and a first parameter, wherein the third key is associated with the shared key; and
verifying, by the first network element, the third authentication information based on the fifth authentication information.

29. The method of claim 28, wherein calculating, by the first network element, the fifth authentication information based on the third key and the first parameter comprises:
calculating, by the first network element, the fifth authentication information based on the third key, the first parameter, and a second parameter.

30. The method of claim 27, wherein the second message further includes ciphertext data, and the method further comprises:
calculating, by the first network element, message data and the fifth authentication information based on the third key and the ciphertext data, wherein the message data comprises service data or an entire message, and the entire message contains the service data and a first parameter; and
storing, by the first network element, the message data when the fifth authentication information is identical to the third authentication information.

31. The method of claim 30, wherein calculating, by the first network element, the message data and the fifth authentication information based on the third key and the ciphertext data comprises:
calculating, by the first network element, the message data and the fifth authentication information based on the third key, the ciphertext data, and a second parameter.

32. The method of any of claims 28 to 31, wherein the first parameter comprises at least one of: an identifier of the first device, a service type indicator, an identifier of the first network element, an identifier of a second network element, or an identifier of a second device.

33. The method of claim 29 or 31, wherein the second parameter comprises at least one of: a sequence number, a second random number, or an anonymity key.

34. The method of claim 33, wherein the second message further includes the second random number.

35. The method of claim 27, further comprising:
calculating, by the first network element, a second integrity key based on a third key;
calculating, by the first network element, fifth authentication information based on the second integrity key; and
verifying, by the first network element, the third authentication information based on the fifth authentication information.

36. The method of claim 35, wherein the second message further includes ciphertext data, and the method further comprises:
calculating, by the first network element, a second encryption key based on the third key; and
calculating, by the first network element, service data based on the second encryption key and the ciphertext data.

37. The method of claim 35 or 36, wherein the second message further includes fourth authentication information, and the method further comprises:
sending, by the first network element, a fourth message to a second network element, wherein the fourth message carries the fourth authentication information; and
receiving, by the first network element, a fifth message from the second network element, wherein the fifth message carries a second authentication result.

38. The method of any of claims 28 to 37, wherein the third key is a fourth key, and the fourth key is calculated based on the sequence number and the shared key.

39. The method of claim 27, further comprising:
sending, by the first network element, a sixth message to a second network element, wherein the sixth message carries the third authentication information; and
receiving, by the first network element, a seventh message from the second network element, wherein the seventh message carries a first authentication result.

40. The method of claim 39, wherein the second message further includes ciphertext data, the sixth message further carries the ciphertext data, and the seventh message further carries message data, wherein the message data is obtained by decrypting the ciphertext data.

41. The method of claim 39 or 40, wherein the second message further includes the second random number, and the sixth message further carries the second random number.

42. The method of any of claims 27 to 40, further comprising:
receiving, by the first network element, an eighth message from the second network element, wherein the eighth message carries the encrypted sequence number, the first random number, and the fourth key.

43. The method of claim 42, wherein the eighth message further carries the first authentication information.

44. The method of claim 42, further comprising:
calculating, by the first network element, the first authentication information based on the fourth key and the first random number.

45. The method of any of claims 27 to 44, further comprising:
sending, by the first network element, a key request message to the second network element, wherein the key request message carries the identifier of the first device.

46. The method of any of claims 27 to 45, wherein the shared key is shared between the first device and the second network element.

47. The method of claim 45 or 46, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

48. The method of claim 35 or 36, wherein the second message further includes fourth authentication information, and the method further comprises:
calculating, by the first network element, sixth authentication information based on the shared key, a second intermediate response, and the first random number, wherein the second intermediate response is calculated based on the shared key and the first random number; and
verifying, by the first network element, the fourth authentication information based on the sixth authentication information.

49. The method of any of claims 28 to 36 and 48, wherein the third key is one of:
the shared key, an anonymity key, or a fourth key, and the anonymity key is calculated based on the shared key, and the fourth key is calculated based on the sequence number and the shared key.

50. The method of any of claims 27 to 36, 48, and 49, further comprising:
calculating, by the first network element, an anonymity key based on the shared key;
encrypting, by the first network element, the sequence number based on the anonymity key, to obtain the encrypted sequence number.

51. The method of any of claims 27 to 36 and 48 to 50, further comprising:
calculating, by the first network element, the first authentication information based on the sequence number, the shared key, and the first random number.

52. The method of claim 51, wherein calculating, by the first network element, the first authentication information based on the sequence number, the shared key, and the first random number comprises:
calculating, by the first network element, a fourth key based on the sequence number, the shared key, and a third parameter; and
calculating, by the first network element, the first authentication information based on the fourth key and the first random number.

53. The method of any of claims 27 to 36 and 48 to 52, wherein the shared key is shared between the first device and the first network element.

54. The method of any of claims 27 to 36 and 48 to 53, wherein the first network element is a gateway.

55. The method of claim 44 or 52, wherein calculating, by the first network element, the first authentication information based on the fourth key and the first random number comprises:
calculating, by the first network element, the first authentication information based on the fourth key, the first random number, and a fourth parameter, wherein the fourth parameter comprises at least one of: a length of the first random number or a first specified value.

56. The method of any of claims 38, 49, and 52, wherein the third parameter comprises at least one of: the first random number, the identifier of the first device, a length of the identifier of the first device, a length of the sequence number, a length of the first random number, a second specified value, or the anonymity key.

57. The method of any of claims 27 to 55, wherein
sending, by the first network element, the first message comprises:
sending, by the first network element, the first message to the first device; and receiving, by the first network element, the second message comprises:
receiving, by the first network element, the second message from the first device.

58. The method of any of claims 27 to 56, further comprising:
receiving, by the first network element, a third message, wherein the third message is used for requesting authentication and carries the identifier of the first device.

59. The method of any of claims 26 to 57, wherein the first device is a zero-power device.

60. An authentication method, comprising:
sending, by a second device, a first message to a first device, wherein the first message carries an encrypted sequence number, a first random number, and first authentication information, and the first random number and the encrypted sequence number are used for the first device to calculate second authentication information based on a shared key; and
sending to a first network element, by the second device, a second message from the first device, wherein the second message carries third authentication information, the third authentication information is calculated by the first device based on a first key when the second authentication information is identical to the first authentication information, and the first key is associated with the shared key.

61. The method of claim 60, wherein sending, by the second device, the first message to the first device comprises:
sending to the first device, by the second device, a first message from the first network element.

62. The method of claim 60, further comprising:
receiving, by the second device, a ninth message from the first network element, wherein the ninth message carries an encrypted sequence number, the first random number, the first authentication information, and an identifier of the first device.

63. The method of claim 62, wherein sending, by the second device, the first message to the first device comprises:
sending, by the second device, the first message to the first device when there is a mapping between identifier information of the first device and first identifier information of the second device.

64. The method of any of claims 60 to 62, further comprising:
receiving, by the second device, a third message from the first device, wherein the third message is used for requesting authentication and carries the identifier of the first device.

65. The method of claim 64, further comprising one of:
forwarding, by the second device, the third message to the first network element;
forwarding, by the second device, the third message to a second network element;
sending, by the second device, a first request message to the first network element when there is a mapping between the identifier information of the first device and the first identifier information of the second device, wherein the first request message carries second identifier information of the second device and the identifier of the first device; or
sending, by the second device, a second request message to the second network element when there is a mapping between the identifier information of the first device and the first identifier information of the second device, wherein the second request message carries the second identifier information of the second device and the identifier of the first device.

66. The method of claim 63 or 65, wherein the first identifier information comprises a subscription permanent identifier (SUPI) or a subscription concealed identifier (SUCI).

67. The method of claim 65, wherein the second identifier information comprises an SUCI.

68. The method of any of claims 60 to 67, wherein the first device is a zero-power device, and the second device is one of a terminal or an access-network device.

69. The method of claim 65, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

70. An authentication method, comprising:
sending, by a second network element, an eighth message, wherein the eighth message carries an encrypted sequence number, a first random number, and a fourth key.

71. The method of claim 70, further comprising:
calculating, by the second network element, an anonymity key based on a shared key; and
encrypting, by the second network element, a sequence number based on the anonymity key, to obtain the encrypted sequence number.

72. The method of claim 70 or 71, further comprising:
calculating, by the second network element, the fourth key based on the sequence number and the shared key.

73. The method of any of claims 70 to 72, wherein the eighth message further carries first authentication information, and the method further comprises:
calculating, by the second network element, the first authentication information based on the sequence number, the shared key, and the first random number.

74. The method of any of claims 70 to 73, further comprising:
receiving, by the second network element, a sixth message from a first network element, wherein the sixth message carries third authentication information; and
sending, by the second network element, a seventh message to the first network element, wherein the seventh message carries a first authentication result.

75. The method of claim 74, further comprising:
calculating, by the second network element, fifth authentication information based on a third key and a first parameter, wherein the third key is associated with the shared key; and
verifying, by the second network element, the third authentication information based on the fifth authentication information, to obtain the first authentication result.

76. The method of claim 75, wherein calculating, by the second network element, the fifth authentication information based on the third key and the first parameter comprises:
calculating, by the second network element, the fifth authentication information based on the third key, the first parameter, and a second parameter.

77. The method of claim 74, wherein the sixth message further carries ciphertext data, the seventh message further carries message data, and the method further comprises:
calculating, by the second network element, the message data and fifth authentication information based on a third key and the ciphertext data, wherein the message data comprises service data or an entire message, and the entire message contains the service data and a first parameter; and
when the fifth authentication information is identical to the third authentication information, storing, by the second network element, the message data, wherein the first authentication result obtained by the second network element indicates successful authentication.

78. The method of claim 77, wherein calculating, by the second network element, the message data and the fifth authentication information based on the third key and the ciphertext data comprises:
calculating, by the second network element, the message data and the fifth authentication information based on the third key, the ciphertext data, and a second parameter.

79. The method of any of claims 75 to 78, wherein the first parameter comprises at least one of: an identifier of a first device, a service type indicator, an identifier of the first network element, an identifier of the second network element, or an identifier of a second device.

80. The method of claim 76 or 78, wherein the second parameter comprises at least one of: a sequence number, a second random number, or an anonymity key.

81. The method of claim 80, wherein the sixth message further carries the second random number.

82. The method of any of claims 75 to 80, wherein the third key is one of: the shared key or an anonymity key.

83. The method of any of claims 70 to 73, further comprising:
receiving, by the second network element, a fourth message from a first network element, wherein the fourth message carries fourth authentication information; and
sending, by the second network element, a fifth message to the first network element, wherein the fifth message carries a second authentication result.

84. The method of claim 83, further comprising:
calculating, by the second network element, sixth authentication information based on the shared key, a second intermediate response, and the first random number, wherein the second intermediate response is calculated based on the shared key and the first random number; and
verifying, by the second network element, the fourth authentication information based on the sixth authentication information, to obtain the second authentication result.

85. The method of any of claims 70 to 84, further comprising one of:
receiving, by the second network element, a third message from the first device, wherein the third message is used for requesting authentication and carries the identifier of the first device;
receiving, by the second network element, a key request message from the first network element, wherein the key request message carries the identifier of the first device; or
receiving, by the second network element, a second request message from the second device, wherein the second request message carries second identifier information of the second device and the identifier of the first device.

86. The method of any of claims 70 to 85, wherein the shared key is shared between the first device and the second network element.

87. The method of any of claims 74 to 84, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

88. An authentication method, comprising:
calculating, by a first device, third authentication information based on a first key, wherein the first key is related to a shared key; and
sending, by the first device, a second message, wherein the second message carries the third authentication information.

89. The method of claim 88, wherein calculating, by the first device, the third authentication information based on the first key comprises:
calculating, by the first device, the third authentication information based on the first key and a first parameter.

90. The method of claim 89, wherein calculating, by the first device, the third authentication information based on the first key and the first parameter comprises:
calculating, by the first device, the third authentication information based on the first key, the first parameter, and a second parameter.

91. The method of claim 88, wherein the second message further includes ciphertext data, and calculating, by the first device, the third authentication information based on the first key comprises:
calculating, by the first device, the ciphertext data and the third authentication information based on the first key and message data, wherein the message data comprises service data or an entire message, and the entire message contains the service data and the first parameter.

92. The method of claim 91, wherein calculating, by the first device, the ciphertext data and the third authentication information based on the first key and the message data comprises:
calculating, by the first device, the ciphertext data and the third authentication information based on the first key, the message data, and a second parameter.

93. The method of any of claims 89 to 92, wherein the first parameter comprises at least one of: an identifier of the first device, a service type indicator, an identifier of a first network element, an identifier of a second network element, or an identifier of a second device.

94. The method of claim 90 or 92, wherein the second parameter comprises at least one of: a sequence number, a second random number, or an anonymity key.

95. The method of claim 94, wherein the second message further includes the second random number.

96. The method of claim 88, wherein calculating, by the first device, the third authentication information based on the first key comprises:
calculating, by the first device, a first integrity key based on the first key; and
calculating, by the first device, the third authentication information based on the first integrity key.

97. The method of claim 96, wherein the second message further includes ciphertext data, and calculating, by the first device, the third authentication information based on the first integrity key comprises:
calculating, by the first device, a first encryption key based on the first key;
calculating, by the first device, the ciphertext data based on the first encryption key and service data; and
calculating, by the first device, the third authentication information based on the first integrity key and the ciphertext data.

98. The method of claim 96 or 97, wherein the second message further contains fourth authentication information, and the method further comprises:
calculating, by the first device, the fourth authentication information based on the shared key, a first intermediate response, and the first random number, wherein the first intermediate response is calculated based on the shared key and the first random number.

99. The method of any one of claims 88 to 98, wherein the first key is one of: the shared key, an anonymity key, or a second key, wherein the anonymity key is calculated based on the shared key, and the second key is calculated based on a sequence number and the shared key.

100. The method of any one of claims 88 to 99, further comprising:
receiving, by the first device, a first message, where the first message carries an encrypted sequence number and a first random number;
calculating, by the first device, an anonymity key based on the shared key; and
decrypting, by the first device, the encrypted sequence number based on the anonymity key to obtain a sequence number.

101. The method of claim 100, wherein
receiving, by the first device, the first message comprises:
receiving, by the first device, the first message from a first network element; and
sending, by the first device, the second message comprises:
sending, by the first device, the second message to the first network element.

102. The method of claim 100, wherein
receiving, by the first device, the first message comprises:
receiving, by the first device, the first message from a second device; and
sending, by the first device, the second message comprises:
sending, by the first device, the second message to the second device.

103. The method of claim 102, wherein the second device comprises one of: a terminal or an access network device.

104. The method of any of claims 101 to 103, wherein the shared key is shared between the first device and the second network element.

105. The method of claim 104, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

106. The method of claim 101, wherein the shared key is shared between the first device and the first network element.

107. The method of claim 101 or 106, wherein the first network element comprises a gateway.

108. The method of any of claims 88 to 107, wherein the first device comprises a zero-power device.

109. An authentication method, comprising:
receiving, by a first network element, a second message, wherein the second message carries third authentication information, the third authentication information is calculated by a first device based on a first key, the first key is related to a shared key.

110. The method of claim 109, further comprising:
calculating, by the first network element, fifth authentication information based on a third key and a first parameter, wherein the third key is related to the shared key; and
verifying, by the first network element, the third authentication information based on the fifth authentication information.

111. The method of claim 110, wherein calculating, by the first network element, the fifth authentication information based on the third key and the first parameter comprises:
calculating, by the first network element, the fifth authentication information based on the third key, the first parameter, and a second parameter.

112. The method of claim 109, wherein the second message further includes ciphertext data, and the method further comprises:
calculating, by the first network element, message data and the fifth authentication information based on the third key and the ciphertext data, wherein the message data comprises service data or an entire message, and the entire message contains the service data and the first parameter; and
storing, by the first network element, the message data when the fifth authentication information is identical to the third authentication information.

113. The method of claim 112, wherein calculating, by the first network element, the message data and the fifth authentication information based on the third key and the ciphertext data comprises:
calculating, by the first network element, the message data and the fifth authentication information based on the third key, the ciphertext data, and a second parameter.

114. The method of any of claims 110 to 113, wherein the first parameter comprises at least one of: an identifier of the first device, a service type indicator, an identifier of the first network element, an identifier of a second network element, or an identifier of a second device.

115. The method of claim 111 or 113, wherein the second parameter comprises at least one of: a sequence number, a second random number, or an anonymity key.

116. The method of claim 115, wherein the second message further includes the second random number.

117. The method of claim 109, further comprising:
calculating, by the first network element, a second integrity key based on a third key;
calculating, by the first network element, fifth authentication information based on the second integrity key; and
verifying, by the first network element, the third authentication information based on the fifth authentication information.

118. The method of claim 117, wherein the second message further includes ciphertext data, and the method further comprises:
calculating, by the first network element, a second encryption key based on the third key; and
calculating, by the first network element, service data based on the second encryption key and the ciphertext data.

119. The method of claim 117 or 118, wherein the second message further includes fourth authentication information, and the method further comprises:
sending, by the first network element, a fourth message to a second network element, wherein the fourth message carries the fourth authentication information; and
receiving, by the first network element, a fifth message from the second network element, wherein the fifth message carries a second authentication result.

120. The method of any of claims 110 to 119, wherein the third key is a fourth key, the fourth key is calculated based on a sequence number and the shared key.

121. The method of claim 109, further comprising:
sending, by the first network element, a sixth message to a second network element, wherein the sixth message carries the third authentication information; and
receiving, by the first network element, a seventh message from the second network element, wherein the seventh message carries a first authentication result.

122. The method of claim 121, wherein the second message further includes ciphertext data, the sixth message further carries the ciphertext data, and the seventh message further carries message data, wherein the message data is obtained by decrypting the ciphertext data.

123. The method of claim 121 or 122, wherein the second message further includes the second random number.

124. The method of any of claims 109 to 123, further comprising:
receiving, by the first network element, an eighth message from the second network element, wherein the eighth message carries an encrypted sequence number, a first random number, and a fourth key.

125. The method of any of claims 109 to 124, further comprising:
sending, by the first network element, a key request message to the second network element, wherein the key request message carries the identifier of the first device.

126. The method of any of claims 109 to 125, wherein the shared key is shared between the first device and the second network element.

127. The method of claim 125 or 126, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

128. The method of claim 117 or 118, wherein the second message further includes fourth authentication information, and the method further comprises:
calculating, by the first network element, sixth authentication information based on the shared key, a second intermediate response, and a first random number, wherein the second intermediate response is calculated based on the shared key and the first random number; and
verifying, by the first network element, the fourth authentication information based on the sixth authentication information.

129. The method of any of claims 109 to 118 and 128, wherein the third key is one of: the shared key, an anonymity key, or a fourth key, wherein the anonymity key is calculated based on the shared key, and the fourth key is calculated based on a sequence number and the shared key.

130. The method of any of claims 109 to 118, 128, and 129, further comprising:
calculating, by the first network element, an anonymity key based on the shared key; and
encrypting, by the first network element, a sequence number based on the anonymity key to obtain an encrypted sequence number.

131. The method of any of claims 109 to 118 and 128 to 130, wherein the shared key is shared between the first device and the first network element.

132. The method of any of claims 109 to 118 and 128 to 131, wherein the first network element is a gateway.

133. The method of claim 124 or 130, further comprising:
sending, by the first network element, a first message, wherein the first message carries the encrypted sequence number and a first random number.

134. The method of any of claims 109 to 133, further comprising:
receiving, by the first network element, a third message, wherein the third message is used for requesting authentication, and the third message carries the identifier of the first device.

135. The method of any of claims 109 to 134, wherein the first device is a zero-power device.

136. An authentication method, comprising:
sending to a first network element, by a second device, a second message from a first device, wherein the second message carries third authentication information, the third authentication information is calculated by the first device based on a first key, and the first key is related to a shared key.

137. The method of claim 136, further comprising:
sending to the first device, by the second device, a first message from the first network element, wherein the first message carries an encrypted sequence number and a first random number.

138. The method of claim 136, further comprising:
receiving, by the second device, a ninth message from the first network element, wherein the ninth message carries an encrypted sequence number, a first random number, and an identifier of the first device.

139. The method of claim 138, wherein sending, by the second device, the first message to the first device comprises:
sending, by the second device, the first message to the first device when there is a mapping between identifier information of the first device and first identifier information of the second device.

140. The method of any of claims 136 to 139, further comprising:
receiving, by the second device, a third message from the first device, wherein the third message is used for requesting authentication, and the third message carries an identifier of the first device.

141. The method of claim 140, further comprising one of:
forwarding, by the second device, the third message to the first network element;
forwarding, by the second device, the third message to the second network element;
sending, by the second device, a first request message to the first network element when there is a mapping between the identifier information of the first device and the first identifier information of the second device, wherein the first request message carries second identifier information of the second device and the identifier of the first device; or
sending, by the second device, a second request message to the second network element when there is a mapping between the identifier information of the first device and the first identifier information of the second device, wherein the second request message carries the second identifier information of the second device and the identifier of the first device.

142. The method of any of claims 136 to 141, wherein the first device is a zero-power device, and the second device is one of a terminal or an access-network device.

143. An authentication method, comprising:
receiving, by a second network element, a sixth message from a first network element, wherein the sixth message carries third authentication information, the third authentication information is calculated by a first device based on a first key, and the first key is related to a shared key;
calculating, by the second network element, fifth authentication information based on a third key, wherein the third key is related to the shared key;
verifying, by the second network element, the third authentication information based on the fifth authentication information to obtain a first authentication result; and
sending, by the second network element, a seventh message to the first network element, wherein the seventh message carries the first authentication result.

144. The method of claim 143, further comprising:
sending, by the second network element, an eighth message, wherein the eighth message carries an encrypted sequence number, a first random number, and a fourth key.

145. The method of claim 144, further comprising:
calculating, by the second network element, an anonymity key based on the shared key; and
encrypting, by the second network element, a sequence number based on the anonymity key to obtain the encrypted sequence number.

146. The method of claim 144 or 145, further comprising:
calculating, by the second network element, the fourth key based on a sequence number and the shared key, wherein a third parameter comprises at least one of: the first random number, an identifier of the first device, a length of the identifier of the first device, a length of the sequence number, a length of the first random number, a second specified value, or the anonymity key.

147. The method of any of claims 144 to 146, wherein calculating, by the second network element, the fifth authentication information based on the third key comprises:
calculating, by the second network element, the fifth authentication information based on the third key and a first parameter.

148. The method of claim 147, wherein calculating, by the second network element, the fifth authentication information based on the third key and the first parameter comprises:
calculating, by the second network element, the fifth authentication information based on the third key, the first parameter, and a second parameter.

149. The method of claim 147, wherein
the sixth message further carries ciphertext data, the seventh message further carries message data, and calculating, by the second network element, the fifth authentication information based on the third key comprises:
calculating, by the second network element, message data and the fifth authentication information based on the third key and the ciphertext data, wherein the message data comprises service data or an entire message, and the entire message contains the service data and the first parameter; and
verifying, by the second network element, the third authentication information based on the fifth authentication information to obtain the first authentication result comprises:
when the fifth authentication information is identical to the third authentication information, storing, by the second network element, the message data, wherein the first authentication result obtained by the second network element indicates successful authentication.

150. The method of claim 149, wherein calculating, by the second network element, the message data and the fifth authentication information based on the third key and the ciphertext data comprises:
calculating, by the second network element, the message data and the fifth authentication information based on the third key, the ciphertext data, and a second parameter.

151. The method of any of claims 147 to 150, wherein the first parameter comprises at least one of: an identifier of the first device, a service type indicator, an identifier of the first network element, an identifier of the second network element, or an identifier of a second device.

152. The method of claim 148 or 150, wherein the second parameter comprises at least one of: a sequence number, a second random number, or an anonymity key.

153. The method of claim 152, wherein the sixth message further carries the second random number.

154. The method of any of claims 147 to 153, wherein the third key is one of: the shared key or an anonymity key.

155. The method of any of claims 144 to 146, further comprising:
receiving, by the second network element, a fourth message from the first network element, wherein the fourth message carries fourth authentication information; and
sending, by the second network element, a fifth message to the first network element, wherein the fifth message carries a second authentication result.

156. The method of claim 155, further comprising:
calculating, by the second network element, sixth authentication information based on the shared key, a second intermediate response, and the first random number, wherien the second intermediate response is calculated based on the shared key and the first random number; and
verifying, by the second network element, the fourth authentication information based on the sixth authentication information to obtain the second authentication result.

157. The method of any of claims 143 to 156, further comprising one of:
receiving, by the second network element, a third message from the first device, wherein the third message is used for requesting authentication, and the third message carries the identifier of the first device;
receiving, by the second network element, a key request message from the first network element, wherein the key request message carries the identifier of the first device; or
receiving, by the second network element, a second request message from the second device, wherein the second request message carries second identifier information of the second device and the identifier of the first device.

158. The method of any of claims 143 to 157, wherein the shared key is shared between the first device and the second network element.

159. A first device, comprising:
a first communication unit configured to:
receive a first message, wherein the first message contains an encrypted sequence number, a first random number, and first authentication information; and
send a second message, wherein the second message carries third authentication information; and
a first processing unit configured to:
calculate second authentication information based on a shared key, the encrypted sequence number, and the first random number; and
calculate, by the first device, the third authentication information based on a first key when the first authentication information is identical to the second authentication information, wherein the first key is related to the shared key.

160. The first device of claim 159, wherein the first processing unit is configured to:
calculate the third authentication information based on the first key and a first parameter.

161. The first device of claim 160, wherein the first processing unit is configured to:
calculate the third authentication information based on the first key, the first parameter, and a second parameter.

162. The first device of claim 159, wherein the second message further includes ciphertext data, and the first processing unit is configured to:
calculate the ciphertext data and the third authentication information based on the first key and message data, wherein the message data comprises service data or an entire message, and the entire message contains the service data and a first parameter.

163. The first device of claim 162, wherein the first processing unit is configured to:
calculate the ciphertext data and the third authentication information based on the first key, the message data, and a second parameter.

164. The first device of any of claims 160 to 163, wherein the first parameter comprises at least one of: an identifier of the first device, a service type indicator, an identifier of a first network element, or an identifier of a second network element.

165. The first device of claim 161 or 163, wherein the second parameter comprises at least one of: a sequence number, the first random number, or an anonymity key.

166. The first device of claim 165, wherein the second message further includes the second random number.

167. The first device of claim 159, wherein the first processing unit is configured to:
calculate a first integrity key based on the first key; and
calculate the third authentication information based on the first integrity key.

168. The first device of claim 167, wherein the second message further includes ciphertext data, and the first processing unit is configured to:
calculate a first encryption key based on the first key;
calculate the ciphertext data based on the first encryption key and service data; and
calculate the third authentication information based on the first integrity key and the ciphertext data.

169. The first device of claim 167 or 168, wherein the second message further includes fourth authentication information, and the first processing unit is configured to:
calculate the fourth authentication information based on the shared key, a first intermediate response, and the first random number, wherein the first intermediate response is calculated based on the shared key and the first random number.

170. The first device of any of claims 159 to 169, wherein the first key is one of: the shared key, an anonymity key, or a second key, wherein the anonymity key is calculated based on the shared key, and the second key is calculated based on a sequence number and the shared key.

171. The first device of any of claims 159 to 170, wherein the first processing unit is configured to:
calculate an anonymity key based on the shared key;
decrypt the encrypted sequence number based on the anonymity key, to obtain a sequence number; and
calculate the second authentication information based on the sequence number, the shared key, and the first random number.

172. The first device of claim 171, wherein the first processing unit is configured to:
calculate a second key based on the sequence number, the shared key, and a third parameter; and
calculate the second authentication information based on the second key and the first random number.

173. The first device of claim 172, wherein the first processing unit is configured to:
calculate the second authentication information based on the second key, the first random number, and a fourth parameter, wherein the fourth parameter comprises at least one of: a length of the first random number or a first specified value.

174. The first device of any of claims 171 to 173, wherein the first processing unit is configured to:
verify a value range of the sequence number.

175. The first device of any of claims 170, 172, and 173, wherein the third parameter comprises at least one of: the first random number, an identifier of the first device, a length of the identifier of the first device, a length of the sequence number, a length of the first random number, a second specified value, or the anonymity key.

176. The first device of any of claims 159 to 175, wherein the first communication unit is configured to:
receive the first message from a first network element; and
send the second message to the first network element.

177. The first device of any of claims 159 to 175, wherein the first communication unit is configured to:
receive the first message from a second device; and
send the second message to the second device.

178. The first device of claim 177, wherein the second device comprises one of: a terminal or an access-network device.

179. The first device of any of claims 176 to 178, wherein the shared key is shared between the first device and the second network element.

180. The first device of claim 179, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

181. The first device of claim 176, wherein the shared key is shared between the first device and the first network element.

182. The first device of claim 176 or 181, wherein the first network element comprises a gateway.

183. The first device of any of claims 159 to 182, wherein the first communication unit is configured to:
send a third message, wherein the third message is used for requesting authentication, and the third message carries the identifier of the first device.

184. The first device of any of claims 159 to 183, wherein the first device comprises a zero-power device.

185. A first network element, comprising:
a second communication unit, configured to:
send a first message, wherein the first message carries an encrypted sequence number, a first random number, and first authentication information, and the first random number and the encrypted sequence number are used for a first device to calculate second authentication information based on a shared key; and
receive a second message, wherein the second message carries third authentication information, the third authentication information is calculated by the first device based on a first key when the second authentication information is identical to the first authentication information, and the first key is associated with the shared key.

186. The first network element of claim 185, further comprising:
a second processing unit, configured to:
calculate fifth authentication information based on a third key and a first parameter, wherein the third key is associated with the shared key; and
verify the third authentication information based on the fifth authentication information.

187. The first network element of claim 186, wherein the second processing unit is configured to:
calculate the fifth authentication information based on the third key, the first parameter, and a second parameter.

188. The first network element of claim 187, wherein the second message further includes ciphertext data, and the second processing unit is configured to:
calculate message data and the fifth authentication information based on the third key and the ciphertext data, wherein the message data comprises service data or an entire message, and the entire message contains the service data and a first parameter; and
store, by the first network element, the message data when the fifth authentication information is identical to the third authentication information.

189. The first network element of claim 188, wherein the second processing unit is configured to:
calculate the message data and the fifth authentication information based on the third key, the ciphertext data, and a second parameter.

190. The first network element of any of claims 186 to 189, wherein the first parameter comprises at least one of: an identifier of the first device, a service type indicator, an identifier of the first network element, or an identifier of the second network element.

191. The first network element of claim 187 or 189, wherein the second parameter comprises at least one of: a sequence number, the first random number, or an anonymity key.

192. The first network element of claim 191, wherein the second message further includes the second random number.

193. The first network element of claim 185, wherein the second processing unit is configured to:
calculate a second integrity key based on a third key;
calculate fifth authentication information based on the second integrity key; and
verify the third authentication information based on the fifth authentication information.

194. The first network element of claim 193, wherein the second message further includes ciphertext data, and the second processing unit is configured to:
calculate a second encryption key based on the third key; and
calculate service data based on the second encryption key and the ciphertext data.

195. The first network element of claim 193 or 194, wherein the second message further includes fourth authentication information, and the second communication unit is configured to:
send a fourth message to a second network element, wherein the fourth message carries the fourth authentication information; and
receive a fifth message from the second network element, wherein the fifth message carries a second authentication result.

196. The first network element of any of claims 186 to 195, wherein the third key is a fourth key, and the fourth key is calculated based on the sequence number and the shared key.

197. The first network element of claim 185, wherein the second communication unit is configured to:
send a sixth message to a second network element, wherein the sixth message carries the third authentication information; and
receive a seventh message from the second network element, wherein the seventh message carries a first authentication result.

198. The first network element of claim 197, wherein the second message further includes ciphertext data, the sixth message further carries the ciphertext data, and the seventh message further carries message data, wherein the message data is obtained by decrypting the ciphertext data.

199. The first network element of claim 197 or 198, wherein the second message further includes the second random number, and the sixth message further carries the second random number.

200. The first network element of any of claims 185 to 198, wherein the second communication unit is configured to:
receive an eighth message from the second network element, wherein the eighth message carries the encrypted sequence number, the first random number, and the fourth key.

201. The first network element of claim 200, wherein the eighth message further carries the first authentication information.

202. The first network element of claim 200, wherein the second processing unit is configured to:
calculate the first authentication information based on the fourth key and the first random number.

203. The first network element of any of claims 185 to 202, wherein the second communication unit is configured to:
send a key request message to the second network element, wherein the key request message carries the identifier of the first device.

204. The first network element of any of claims 185 to 203, wherein the shared key is shared between the first device and the second network element.

205. The first network element of claim 203 or 204, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

206. The first network element of claim 193 or 194, wherein the second message further includes fourth authentication information, and the second processing unit is configured to:
calculate sixth authentication information based on the shared key, a second intermediate response, and the first random number, wherein the second intermediate response is calculated based on the shared key and the first random number; and
verify the fourth authentication information based on the sixth authentication information.

207. The first network element of any of claims 186 to 194, and 206, wherein the third key is one of: the shared key, an anonymity key, or a fourth key, and the anonymity key is calculated based on the shared key, and the fourth key is calculated based on the sequence number and the shared key.

208. The first network element of any of claims 185 to 194, 206, and 207, wherein the second processing unit is configured to:
calculate an anonymity key based on the shared key; and
encrypt the sequence number based on the anonymity key, to obtain the encrypted sequence number.

209. The first network element of any of claims 185 to 194 and 206 to 208, wherein the second processing unit is configured to:
calculate the first authentication information based on the sequence number, the shared key, and the first random number.

210. The first network element of claim 209, wherein the second processing unit is configured to:
calculate a fourth key based on the sequence number, the shared key, and a third parameter; and
calculate the first authentication information based on the fourth key and the first random number.

211. The first network element of any of claims 185 to 194 and 206 to 210, wherein the shared key is shared between the first device and the first network element.

212. The first network element of any of claims 185 to 194 and 206 to 211, wherein the first network element is a gateway.

213. The first network element of claim 202 or 210, wherein the second processing unit is configured to:
calculate the first authentication information based on the fourth key, the first random number, and a fourth parameter, wherein the fourth parameter comprises at least one of: a length of the first random number or a first specified value.

214. The first network element of any of claims 196, 207, and 211, wherein the third parameter comprises at least one of: the first random number, the identifier of the first device, a length of the identifier of the first device, a length of the sequence number, a length of the first random number, a second specified value, or the anonymity key.

215. The first network element of any of claims 185 to 213, wherein the second communication unit is configured to:
send the first message to the first device; and
receive the second message from the first device.

216. The first network element of any of claims 185 to 214, wherein the second communication unit is configured to:
receive a third message, a third message, wherein the third message is used for requesting authentication and carries the identifier of the first device.

217. The first network element of any of claims 185 to 215, wherein the first device is a zero-power device.

218. A second device, comprising:
a third communication unit configured to:
send a first message to a first device, wherein the first message carries an encrypted sequence number, a first random number, and first authentication information, and the first random number and the encrypted sequence number are used for the first device to calculate second authentication information based on a shared key; and
send to a first network element a second message from the first device, wherein the second message carries third authentication information, the third authentication information is calculated by the first device based on a first key when the second authentication information is identical to the first authentication information, and the first key is associated with the shared key.

219. The second device of claim 218, wherein the third communication unit is configured to:
send to the first device a first message from the first network element.

220. The second device of claim 218, wherein the third communication unit is configured to:
receive a ninth message from the first network element, wherein the ninth message carries an encrypted sequence number, the first random number, the first authentication information, and an identifier of the first device.

221. The second device of claim 220, wherein the third communication unit is configured to:
send the first message to the first device when there is a mapping between identifier information of the first device and first identifier information of the second device.

222. The second device of any of claims 218 to 220, wherein the third communication unit is configured to:
receive a third message from the first device, wherein the third message is used for requesting authentication and carries the identifier of the first device.

223. The second device of claim 222, wherein the third communication unit is configured to perform one of:
forwarding the third message to the first network element;
forwarding the third message to the second network element;
sending a first request message to the first network element when there is a mapping between the identifier information of the first device and the first identifier information of the second device, wherein the first request message carries second identifier information of the second device and the identifier of the first device; or
sending a second request message to the second network element when there is a mapping between the identifier information of the first device and the first identifier information of the second device, wherein the second request message carries the second identifier information of the second device and the identifier of the first device.

224. The second device of claim 221 or 223, wherein the first identifier information comprises a subscription permanent identifier (SUPI) or a subscription concealed identifier (SUCI).

225. The second device of claim 223, wherein the second identifier information comprises an SUCI.

226. The second device of any of claims 218 to 225, wherein the first device is a zero-power device, and the second device is one of a terminal or an access-network device.

227. The second device of claim 223, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

228. A second network element, comprising:
a fourth communication unit configured to send an eighth message, wherein the eighth message carries an encrypted sequence number, a first random number, and a fourth key.

229. The second network element of claim 228, further comprising:
a fourth processing unit, configured to:
calculate an anonymity key based on a shared key; and
encrypt a sequence number based on the anonymity key, to obtain the encrypted sequence number.

230. The second network element of claim 228 or 229, wherein the fourth processing unit is configured to:
calculate the fourth key based on the sequence number and the shared key.

231. The second network element of any of claims 228 to 230, wherein the eighth message further carries first authentication information; and the fourth processing unit is configured to:
calculate the first authentication information based on the sequence number, the shared key, and the first random number.

232. The second network element of any of claims 228 to 231, wherein the fourth communication unit is configured to:
receive a sixth message from a first network element, wherein the sixth message carries third authentication information; and
send a seventh message to the first network element, wherein the seventh message carries a first authentication result.

233. The second network element of claim 232, wherein the fourth processing unit is configured to:
calculate fifth authentication information based on a third key and a first parameter, wherein the third key is associated with the shared key; and
verify the third authentication information based on the fifth authentication information, to obtain the first authentication result.

234. The second network element of claim 233, wherein the fourth processing unit is configured to:
calculate the fifth authentication information based on the third key, the first parameter, and a second parameter.

235. The second network element of claim 233, wherein the sixth message further carries ciphertext data, the seventh message further carries message data, and the fourth processing unit is configured to:
calculate the message data and fifth authentication information based on a third key and the ciphertext data, wherein the message data comprises service data or an entire message, and the entire message contains the service data and a first parameter; and
when the fifth authentication information is identical to the third authentication information, store the message data, wherein the first authentication result obtained by the second network element indicates successful authentication.

236. The second network element of claim 235, wherein the fourth processing unit is configured to:
calculate the message data and the fifth authentication information based on the third key, the ciphertext data, and a second parameter.

237. The second network element of any of claims 233 to 236, wherein the first parameter comprises at least one of: an identifier of a first device, a service type indicator, an identifier of the first network element, or an identifier of the second network element.

238. The second network element of claim 234 or 236, wherein the second parameter comprises at least one of: a sequence number, a second random number, or an anonymity key.

239. The second network element of claim 238, wherein the sixth message further carries the second random number.

240. The second network element of any of claims 233 to 238, wherein the third key is one of: the shared key or an anonymity key.

241. The second network element of any of claims 228 to 231, wherein the fourth communication unit is configured to:
receive a fourth message from a first network element, wherein the fourth message carries fourth authentication information; and
send a fifth message to the first network element, wherein the fifth message carries a second authentication result.

242. The second network element of claim 241, wherein the fourth processing unit is configured to:
calculate sixth authentication information based on the shared key, a second intermediate response, and the first random number, wherein the second intermediate response is calculated based on the shared key and the first random number; and
verify the fourth authentication information based on the sixth authentication information, to obtain the second authentication result.

243. The second network element of any of claims 228 to 242, wherein the fourth communication unit is configured to perform one of:
receiving a third message from the first device, wherein the third message is used for requesting authentication and carries the identifier of the first device;
receiving a key request message from the first network element, wherein the key request message carries the identifier of the first device; or
receiving a second request message from the second device, wherein the second request message carries second identifier information of the second device and the identifier of the first device.

244. The second network element of any of claims 228 to 243, wherein the shared key is shared between the first device and the second network element.

245. The second network element of any of claims 232 to 244, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

246. A first device, comprising:
a first processing unit, configured to calculate third authentication information based on a first key, wherein the first key is related to a shared key; and
a first communication unit, configured to send a second message, wherein the second message carries the third authentication information.

247. The first device of claim 246, wherein the first processing unit is configured to:
calculate the third authentication information based on the first key and a first parameter.

248. The first device of claim 247, wherein the first processing unit is configured to:
calculate the third authentication information based on the first key, the first parameter, and a second parameter.

249. The first device of claim 246, wherein the second message further includes ciphertext data, and the first processing unit is configured to:
calculate the ciphertext data and the third authentication information based on the first key and message data, wherein the message data comprises service data or an entire message, and the entire message contains the service data and the first parameter.

250. The first device of claim 249, wherein the first processing unit is configured to:
calculate the ciphertext data and the third authentication information based on the first key, the message data, and a second parameter.

251. The first device of any of claims 247 to 250, wherein the first parameter comprises at least one of: an identifier of the first device, a service type indicator, an identifier of a first network element, an identifier of a second network element, or an identifier of a second device.

252. The first device of claim 248 or 250, wherein the second parameter comprises at least one of: a sequence number, a second random number, or an anonymity key.

253. The first device of claim 252, wherein the second message further includes the second random number.

254. The first device of claim 246, wherein the first processing unit is configured to:
calculate a first integrity key based on the first key; and
calculate the third authentication information based on the first integrity key.

255. The first device of claim 254, wherein the second message further includes ciphertext data, and the first processing unit is configured to:
calculate a first encryption key based on the first key;
calculate the ciphertext data based on the first encryption key and service data; and
calculate the third authentication information based on the first integrity key and the ciphertext data.

256. The first device of claim 254 or 255, wherein the second message further includes fourth authentication information, and the first processing unit is configured to:
calculate the fourth authentication information based on the shared key, a first intermediate response, and the first random number, wherein the first intermediate response is calculated based on the shared key and the first random number.

257. The first device of any of claims 246 to 256, wherein the first key is one of: the shared key, an anonymity key, or a second key, wherein the anonymity key is calculated based on the shared key, and the second key is calculated based on a sequence number and the shared key.

258. The first device of any of claims 246 to 257, wherein
the first communication unit is configured to:
receive a first message, a first message, where the first message carries an encrypted sequence number and a first random number; and
the first processing unit is configured to:
calculate an anonymity key based on the shared key; and
decrypt the encrypted sequence number based on the anonymity key to obtain a sequence number.

259. The first device of claim 258, wherein the first communication unit is configured to:
receive the first message from a first network element; and
send the second message to the first network element.

260. The first device of claim 258, wherein the first communication unit is configured to:
receive the first message from a second device; and
send the second message to the second device.

261. The first device of claim 260, wherein the second device comprises one of: a terminal or an access-network device.

262. The first device of any of claims 259 to 261, wherein the shared key is shared between the first device and the second network element.

263. The first device of claim 262, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

264. The first device of claim 259, wherein the shared key is shared between the first device and the first network element.

265. The first device of claim 259 or 264, wherein the first network element comprises a gateway.

266. The first device of any of claims 246 to 265, wherein the first device comprises a zero-power device.

267. A first network element, comprising:
a second communication unit, configured to receive a second message, wherein the second message carries third authentication information, the third authentication information is calculated by a first device based on a first key, the first key is related to a shared key.

268. The first network element of claim 267, further comprising:
a second processing unit, configured to:
calculate fifth authentication information based on a third key and a first parameter, wherein the third key is related to the shared key; and
verify the third authentication information based on the fifth authentication information.

269. The first network element of claim 268, wherein the second processing unit is configured to:
calculate the fifth authentication information based on the third key, the first parameter, and a second parameter.

270. The first network element of claim 267, wherein the second message further includes ciphertext data, and the second processing unit is configured to:
calculate message data and the fifth authentication information based on the third key and the ciphertext data, wherein the message data comprises service data or an entire message, and the entire message contains the service data and the first parameter; and
store, by the first network element, the message data when the fifth authentication information is identical to the third authentication information.

271. The first network element of claim 270, wherein the second processing unit is configured to:
calculate the message data and the fifth authentication information based on the third key, the ciphertext data, and a second parameter.

272. The first network element of any of claims 268 to 271, wherein the first parameter comprises at least one of: an identifier of the first device, a service type indicator, an identifier of the first network element, an identifier of a second network element, or an identifier of a second device.

273. The first network element of claim 269 or 271, wherein the second parameter comprises at least one of: a sequence number, a second random number, or an anonymity key.

274. The first network element of claim 273, wherein the second message further includes the second random number.

275. The first network element of claim 267, wherein the second processing unit is configured to:
calculate a second integrity key based on a third key;
calculate fifth authentication information based on the second integrity key; and
verify the third authentication information based on the fifth authentication information.

276. The first network element of claim 275, wherein the second message further includes ciphertext data, and the second processing unit is configured to:
calculate a second encryption key based on the third key; and
calculate service data based on the second encryption key and the ciphertext data.

277. The first network element of claim 275 or 276, wherein the second message further includes fourth authentication information, and the second communication unit is configured to:
send a fourth message to a second network element, wherein the fourth message carries the fourth authentication information; and
receive a fifth message from the second network element, wherein the fifth message carries a second authentication result.

278. The first network element of any of claims 268 to 277, wherein the third key is a fourth key, the fourth key is calculated based on a sequence number and the shared key.

279. The first network element of claim 267, wherein the second communication unit is configured to:
send a sixth message to a second network element, wherein the sixth message carries the third authentication information; and
receive a seventh message from the second network element, wherein the seventh message carries a first authentication result.

280. The first network element of claim 279, wherein the second message further includes ciphertext data, the sixth message further carries the ciphertext data, and the seventh message further carries message data, wherein the message data is obtained by decrypting the ciphertext data.

281. The first network element of claim 279 or 280, wherein the second message further includes the second random number.

282. The first network element of any of claims 267 to 281, wherein the second communication unit is configured to:
receive an eighth message from the second network element, wherein the eighth message carries an encrypted sequence number, a first random number, and a fourth key.

283. The first network element of any of claims 267 to 282, wherein the second communication unit is configured to:
send a key request message to the second network element, wherein the key request message carries the identifier of the first device.

284. The first network element of any of claims 267 to 283, wherein the shared key is shared between the first device and the second network element.

285. The first network element of claim 283 or 284, wherein
the first network element comprises at least one of: an application function (AF), an access and mobility management function (AMF), an authentication server function (AUSF), a home security endpoint (HSE), a unified data repository (UDR), a session management function (SMF), a network exposure function (NEF), a key management network element, a bootstrapping service function (BSF), an akma anchor function (AAnF), a security anchor function (SEAF), or a core-network dedicated network element; and the second network element comprises a unified data management (UDM); or
the first network element comprises at least one of: an AMF, an AUSF, an HSE, a UDR, an SMF, an NEF, a key management network element, a BSF, an AAnF, a SEAF, or a core-network dedicated network element; and the second network element comprises an AF.

286. The first network element of claim 275 or 276, wherein the second message further includes fourth authentication information, and the second processing unit is configured to:
calculate sixth authentication information based on the shared key, a second intermediate response, and a first random number, wherein the second intermediate response is calculated based on the shared key and the first random number; and
verify the fourth authentication information based on the sixth authentication information.

287. The first network element of any of claims 267 to 276, and 286, wherein the third key is one of: the shared key, an anonymity key, or a fourth key, wherein the anonymity key is calculated based on the shared key, and the fourth key is calculated based on a sequence number and the shared key.

288. The first network element of any of claims 267 to 276, 286, and 287, wherein the second processing unit is configured to:
calculate an anonymity key based on the shared key; and
encrypt a sequence number based on the anonymity key to obtain an encrypted sequence number.

289. The first network element of any of claims 267 to 276 and 286 to 288, wherein the shared key is shared between the first device and the first network element.

290. The first network element of any of claims 267 to 276, 286 to 289, wherein the first network element is a gateway.

291. The first network element of claim 282 or 288, wherein the second communication unit is configured to:
send a first message, wherein the first message carries the encrypted sequence number and a first random number.

292. The first network element of any of claims 267 to 291, wherein the second communication unit is configured to:
receive a third message, wherein the third message is used for requesting authentication, and the third message carries the identifier of the first device.

293. The first network element of any of claims 267 to 292, wherein the first device is a zero-power device.

294. A second device for authentication, comprising:
a third communication unit configured to send to a first network element a second message from a first device, wherein the second message carries third authentication information, the third authentication information is calculated by the first device based on a first key, and the first key is related to a shared key.

295. The second device of claim 294, wherein the third communication unit is configured to:
send to the first device a first message from the first network element, wherein the first message carries an encrypted sequence number and a first random number.

296. The second device of claim 294, wherein the third communication unit is configured to:
receive a ninth message from the first network element, wherein the ninth message carries an encrypted sequence number, a first random number, and an identifier of the first device.

297. The second device of claim 296, wherein the third communication unit is configured to:
send the first message to the first device when there is a mapping between identifier information of the first device and first identifier information of the second device.

298. The second device of any of claims 294 to 297, wherein the third communication unit is configured to:
receive a third message from the first device, wherein the third message is used for requesting authentication, and the third message carries an identifier of the first device.

299. The second device of claim 298, wherein the third communication unit is configured to perform one of:
forwarding the third message to the first network element;
forwarding the third message to the second network element;
sending a first request message to the first network element when there is a mapping between the identifier information of the first device and the first identifier information of the second device, wherein the first request message carries second identifier information of the second device and the identifier of the first device; or
sending a second request message to the second network element when there is a mapping between the identifier information of the first device and the first identifier information of the second device, wherein the second request message carries the second identifier information of the second device and the identifier of the first device.

300. The second device of any of claims 294 to 299, wherein the first device is a zero-power device, and the second device is one of a terminal or an access-network device.

301. A second network element, comprising:
a fourth communication unit configured to:
receive a sixth message from a first network element, wherein the sixth message carries third authentication information, the third authentication information is calculated by a first device based on a first key, and the first key is related to a shared key; and
send a seventh message to the first network element, wherein the seventh message carries a first authentication result; and
a fourth processing unit configured to:
calculate fifth authentication information based on a third key, wherein the third key is related to the shared key; and
verify the third authentication information based on the fifth authentication information to obtain the first authentication result.

302. The second network element of claim 301, wherein the fourth communication unit is configured to:
send an eighth message, wherein the eighth message carries an encrypted sequence number, a first random number, and a fourth key.

303. The second network element of claim 302, wherein the fourth processing unit is configured to:
calculate an anonymity key based on the shared key; and
encrypt a sequence number based on the anonymity key to obtain the encrypted sequence number.

304. The second network element of claim 302 or 303, wherein the fourth processing unit is configured to:
calculate the fourth key based on a sequence number and the shared key.

305. The second network element of any of claims 302 to 304, wherein the fourth processing unit is configured to:
calculate the fifth authentication information based on the third key and a first parameter.

306. The second network element of claim 305, wherein the fourth processing unit is configured to:
calculate the fifth authentication information based on the third key, the first parameter, and a second parameter.

307. The second network element of claim 305, wherein the sixth message further carries ciphertext data, the seventh message further carries message data, and the fourth processing unit is configured to:
calculate message data and the fifth authentication information based on the third key and the ciphertext data, wherein the message data comprises service data or an entire message, and the entire message contains the service data and the first parameter; and
when the fifth authentication information is identical to the third authentication information, store, by the second network element, the message data, wherein the first authentication result obtained by the second network element indicates successful authentication.

308. The second network element of claim 307, wherein the fourth processing unit is configured to:
calculate the message data and the fifth authentication information based on the third key, the ciphertext data, and a second parameter.

309. The second network element of any of claims 305 to 308, wherein the first parameter comprises at least one of: an identifier of the first device, a service type indicator, an identifier of the first network element, an identifier of the second network element, or an identifier of a second device.

310. The second network element of claim 306 or 308, wherein the second parameter comprises at least one of: a sequence number, a second random number, or an anonymity key.

311. The second network element of claim 310, wherein the sixth message further carries the second random number.

312. The second network element of any of claims 305 to 311, wherein the third key is one of: the shared key or an anonymity key.

313. The second network element of any of claims 302 to 304, wherein the fourth communication unit is configured to:
receive a fourth message from the first network element, wherein the fourth message carries fourth authentication information; and
send a fifth message to the first network element, wherein the fifth message carries a second authentication result.

314. The second network element of claim 313, wherein the fourth processing unit is configured to:
calculate sixth authentication information based on the shared key, a second intermediate response, and the first random number, wherien the second intermediate response is calculated based on the shared key and the first random number; and
verify the fourth authentication information based on the sixth authentication information to obtain the second authentication result.

315. The second network element of any of claims 301 to 314, wherein the fourth communication unit is configured to perform one of:
receiving a third message from the first device, wherein the third message is used for requesting authentication, and the third message carries the identifier of the first device;
receiving a key request message from the first network element, wherein the key request message carries the identifier of the first device; or
receiving a second request message from the second device, wherein the second request message carries second identifier information of the second device and the identifier of the first device.

316. The second network element of any of claims 301 to 315, wherein the shared key is shared between the first device and the second network element.

317. A first device, comprising:
a processor; and
a memory in communication with the processor, wherein the memory is configured to store instructions which, when executed by the processor, cause the first device to perform the method of any of claims 1 to 26 or 88 to 108.

318. A first network element, comprising:
a processor; and
a memory in communication with the processor, wherein the memory is configured to store instructions which, when executed by the processor, cause the first network element to perform the method of any of claims 27 to 59 or 109 to 135.

319. A second device, comprising:
a processor; and
a memory in communication with the processor, wherein the memory is configured to store instructions which, when executed by the processor, cause the second device to perform the method of any of claims 60 to 69 or 136 to 142.

320. A second network element, comprising:
a processor; and
a memory in communication with the processor, wherein the memory is configured to store instructions which, when executed by the processor, cause the second network element to perform the method of any of claims 70 to 87 or 143 to 158.

321. A chip, comprising:
a processor configured to invoke and execute computer programs from a memory, to cause a device equipped with the chip to perform the method of any of claims 1 to 26, 27 to 59, 60 to 69, 70 to 87, 88 to 108, 109 to 135, 136 to 142, or 143 to 158.

322. A computer-readable storage medium, configured to store computer programs which are operable with a computer to perform the method of any of claims 1 to 26, 27 to 59, 60 to 69, 70 to 87, 88 to 108, 109 to 135, 136 to 142, or 143 to 158.

323. A computer program product, comprising computer program instructions which are operable with a computer to perform the method of any of claims 1 to 26, 27 to 59, 60 to 69, 70 to 87, 88 to 108, 109 to 135, 136 to 142, or 143 to 158.

324. A computer program that, operable with a computer to perform the method of any of claims 1 to 26, 27 to 59, 60 to 69, 70 to 87, 88 to 108, 109 to 135, 136 to 142, or 143 to 158.
